# EUROPEAN PATENT SPECIFICATION

(11) **EP 1 617 424 B1**
(45) Date of publication and mention of the grant of the patent: **15.08.2012**
(21) Application number: 04729236.2
(22) Date of filing: 23.04.2004
(51) Int. Cl.: G11B 7/135, G11B 7/125, G02B 5/18, G02B 27/44, G02B 27/42

(54) **DIFFRACTION OPTICAL DEVICE AND OPTICAL PICKUP DEVICE USING THE SAME**
OPTISCHE BEUGUNGSEINRICHTUNG UND OPTISCHE ERFASSUNGSEINRICHTUNG DAMIT
DISPOSITIF OPTIQUE DE DIFFRACTION ET DISPOSITIF DE LECTURE OPTIQUE COMPRENANT CE DERNIER

(30) Priority: 24.04.2003 JP 2003120286; 29.10.2003 JP 2003368457
(43) Date of publication of application: 18.01.2006
(60) Divisional application: 10157733.6
(73) Proprietor: Konica Minolta Opto, Inc., Hachioji-shi, Tokyo 192-8505 (JP)
(72) Inventor: TAKADA, Kyu, c/o Konica Minolta Opto, Inc., Hachioji-Shi, Tokyo 192-8505 (JP); HASHIMURA, Junji, c/o Konica Minolta Opto, Inc., Hachioji-Shi, Tokyo 192-8505 (JP); ORI, Yuichiro, c/o Konica Minolta Opto, Inc., Hachioji-Shi, Tokyo 192-8505 (JP); KIMURA, Toru, c/o Konica Minolta Opto, Inc., Hachioji-Shi, Tokyo 192-8505 (JP)
(74) Representative: HOFFMANN EITLE
(86) International application number: PCT/JP2004/005866
(87) International publication number: WO 2004/095444

(56) References cited:
- EP-A- 1 304 689
- JP-A- 9 311 271
- JP-A- 2001 209 966
- JP-A- 2001 209 966
- JP-A- 2003 207 714
- US-B1- 6 449 095

## Description

### Technical field

The present invention relates to an optical pickup apparatus for use in an optical disk apparatus such as an optical information recording and/or reproducing apparatus or magnetooptical recording and/or reproducing apparatus.

### Background art

Some conventionally known optical pickup apparatuses can record information on and reproduce information from different types of recording medium. For example, a single optical pickup apparatus permits recording and reproduction of information on and from both a DVD and a CD. One way to make an optical pickup apparatus compatible with different types of recording medium is to use light of different wavelengths so that recording and reproduction of information is performed by the use of light of a wavelength suitable to each type of recording medium.

On the other hand, with the development of a DVD using a blue semiconductor laser as a new type of recording medium; in recent years, optical pickup apparatuses have increasingly been required to be compatible with this next-generation DVD as well as the conventional DVD and the CD. A conventionally proposed technique of recording and reproducing information on and from such three different types of recording medium with a single optical pickup apparatus uses a single diffractive surface to achieve compatibility with light of a wavelength λ1 for the next-generation DVD, light of a wavelength λ2 for the conventional DVD, and light of a wavelength λ3 for the CD (refer to Japanese Patent Application Laid-Open No. 2003-67972, for example).

Specifically, the diffractive surface is so designed that it does not diffract light of a wavelength λ1 but diffracts light of wavelengths λ2 and λ3. Moreover, the diffractive surface has a step-shaped section, with each step thereof corresponding to a phase difference of 1λ for the next-generation DVD, 0.625λ for the conventional DVD, and 0.52λ for the CD. Here, the symbol λ collectively represents the wavelengths of the light used for those different types of recording medium. The diffraction efficiency achieved for those different types of recording medium is 100 %, 61 %, and 44 %, respectively.

However, a conventional construction like the one disclosed in Japanese Patent Application Laid-Open No. 2003-67972 mentioned above has the following disadvantages. First, it offers diffraction efficiency as low as 61 % for the conventional DVD. Increasingly high recording and reproduction rates are sought in particular for the next-generation and conventional DVDs, and such low diffraction efficiency becomes a bottleneck in achieving higher rates.

Second, light of both wavelengths λ2 and λ3 is diffracted by a single diffractive surface. This makes it impossible to correct aberrations individually for those two kinds of light. Thus, the wavefront aberration as designed is as large as 0.047 λ rms for light of a wavelength λ2 and 0.021 λ rms for light of a wavelength λ3. In general, to obtain satisfactory optical focusing performance in an optical pickup apparatus, a wavefront accuracy equal to or lower than the Marechal limit, namely 0.07 λ rms, is required. This needs to be achieved with allowances made for view-angle and fabrication-related errors, and therefore, in reality, the wavefront accuracy as designed needs to be equal to or lower than 0.02 λ rms.

JP-A-20012 09966 discloses an optical pickup provided with a first light source of a semiconductor laser emitting a first light beam having a first wavelength, a second light source of a semiconductor laser emitting a second light beam having a second wavelength longer than the first wavelength, a third light source of a semiconductor emitting a third light beam having a third wavelength longer than the second wavelength. The optical pickup further includes an optical axis coupling element making the optical paths of the first, second and third light beams in common and a condenser lens for condensing the first, second and third light beams on the information recording surface of a recording medium. The optical head is provided with a diffraction optical device which is arranged in the optical paths from the first, second and third optical sources to the condenser lens and moreover includes a diffraction grating having a rotation symmetric central axis arranged at the center of the optical path.

### Disclosure of the invention

An object of the present invention is to provide an optical pickup apparatus that has a simple construction, that achieves compatibility with three different types of recording medium including a next-generation format, and that employs a diffractive optical element offering high diffraction efficiency and easy to fabricate.

In order to attain the above-mentioned objects there is provided a diffraction optical element according to claim 1 and an objective lens unit according to claim 26. Embodiments of the invention are specified in the sub-claims.

### Brief description of drawings

Fig. 1 is a construction diagram schematically showing an optical pickup apparatus embodying the invention;
Fig. 2 is a sectional view schematically showing the construction of the diffractive optical element and the objective lens;
Figs. 3A and 3B are diagrams showing sectional shapes of the diffractive optical element;
Figs. 4A to 4C are diagrams illustrating the construction of the diffractive optical element;
Fig. 5 is a construction diagram of the embodiment;
Figs. 6A to 6C are wavefront aberration diagrams of the embodiment;
Fig. 7 is a construction diagram schematically showing an optical pickup apparatus of another embodiment of the present invention;
Fig. 8 is a sectional view schematically showing the construction of a diffractive optical element and an objective lens;
Fig. 9 is a construction diagram of Example 7;
Fig. 10 is a construction diagram of Example 8;
Fig. 11 is a construction diagram schematically showing an optical pickup apparatus of still another embodiment of the present invention; and
Fig. 12 is a sectional view schematically showing the construction of a diffractive optical element and an objective lens.

### Best mode for carrying out the invention

Hereinafter, embodiments of the invention will be described with reference to the drawings. In the present specification, the generic name "next-generation DVD" is given to any optical disk, which may be referred to as recording media, using a blue laser light source, such as a blue semiconductor laser or a blue SHG laser, as a light source for recording and/or reproducing information.

Examples of the next-generation DVD include not only optical disks having a standard specification that information is recorded and reproduced through an objective lens having a numerical aperture NA of 0.85 and a protective layer having a thickness of about 0.1 mm is formed, (specifically, for example, a blue ray disk (BD)) but also optical disks having a standard specification that information is recorded and reproduced through an objective lens having a numerical aperture NA of 0.65 to 0.67 and a protective layer having a thickness of about 0.6 mm is formed, (specifically, for example, an HD and a DVD).

Moreover, examples of the next-generation DVD include not only optical disks each having such a protective layer on the information recording surface thereof but also optical disks each having, on the information recording surface thereof, a protective layer having a thickness of several nanometers to several tens of nanometers, optical disks having no protective layer, and magnetooptical disks using a blue laser light source as a light source for recording and reproducing information.

In the specification, the abbreviation "DVD" is used as a generic name of DVD series optical disks such as a DVD-ROM, a DVD-video, a DVD-audio, a DVD-RAM, a DVD-R, a DVD-RW, a DVD+R and a DVD+RW, and the abbreviation "CD" is used as a generic name of CD series optical disks such as a CD-ROM, a CD-audio, a CD-video, a CD-R and a CD-RW. About the recording density of optical disks, the next-generation DVD is highest, and further in the order of the DVD and the CD the density becomes lower.

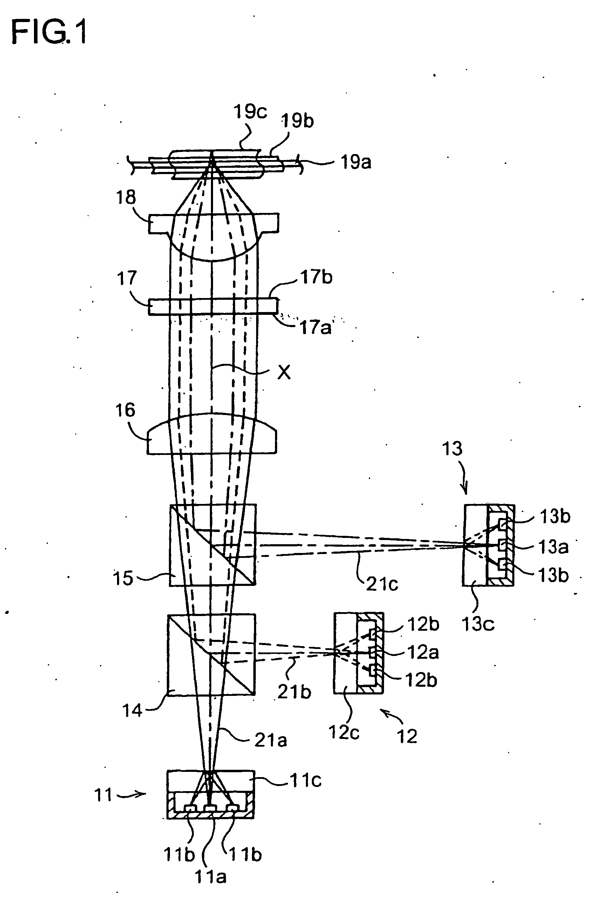

Fig. 1 is a construction diagram schematically showing an optical pickup apparatus embodying the invention. In this figure, at the bottom thereof, there is shown a first semiconductor laser module 11, which has a casing in the shape of a bottomed box, at the center of the bottom thereof is disposed a first semiconductor laser 11a, with first photodetectors 11b disposed on both sides thereof. On the top face of the module 11, a first hologram 11c is disposed as if a lid thereof. The first semiconductor laser 11a emits upward as seen in the figure a light beam 21 a (indicated by solid lines) of a wavelength λ1 = 405 nm.

Moreover, to the upper right side of the first semiconductor laser module 11, there is disposed a second semiconductor laser module 12, which has a casing in the shape of a bottomed box, at the center of the bottom thereof is disposed a second semiconductor laser 12a, with second photodetectors 12b disposed on both sides thereof. On the top face of the module 12, a second hologram 12c is disposed as if a lid thereof. The second semiconductor laser 12a emits leftward as seen in the figure a light beam 21b (indicated by broken lines) of a wavelength λ2 = 650 nm.

Furthermore, to the upper right side of the second semiconductor laser module 12, there is disposed a third semiconductor laser module 13, which has a casing in the shape of a bottomed box, at the center of the bottom thereof is disposed a third semiconductor laser 13a, with third photodetectors 13b disposed on both sides thereof. On the top face of the module 13, a third hologram 13c is disposed as if a lid thereof. The third semiconductor laser 13a emits leftward as seen in the figure a light beam 21c (indicated by dash-and-dot lines) of a wavelength λ3 = 780 nm. In this embodiment, a laser, a detector, and a hologram are built into a module. It is to be understood, however, that this is not meant to limit in any way how to carry out the invention; that is, the laser, detector, and hologram may be disposed separately.

The light beam 21 a emitted from the first semiconductor laser 11a and the light beam 21b emitted from the second semiconductor laser 12a are integrated together by a substantially cube-shaped beam splitter 14 disposed at a position where the optical paths of the two beams cross each other. Thus, these two light beams proceed to travel along a common optical path, and come to have a common optical axis X that extend toward a recording medium. Furthermore, with these two light beams, the light beam 21c emitted from the third semiconductor laser 13a is also integrated by a substantially cube-shaped beam splitter 15 disposed at a position where its optical path crosses that of the light beams 21 a and 21b. Thus, the three light beams proceed to travel along a common optical path, and come to have the common optical axis X.

Subsequently, the three light beams are converted into a parallel beam by a collimator lens 16 disposed above, and are then made to converge by a disk-shaped diffractive optical element 17 and an objective lens 18 disposed further above. The objective lens 18 is convex mainly downward as seen in the figure (in the direction opposite to the recording medium). The beam splitters 14 and 15 are optical elements that separate or integrate light beams of different wavelengths by exploiting the wavelength selectivity of an interference film.

The light beam 21a of a wavelength λ1 emitted from the first semiconductor laser 11a is focused on the surface of a first type of recording medium 19a opposite to the entrance surface thereof. The light beam 21b of a wavelength λ2 emitted from the second semiconductor laser 12a is focused on the surface of a second type of recording medium 19b opposite to the entrance surface thereof. The light beam 21c of a wavelength λ3 emitted from the third semiconductor laser 13a is focused on the surface of a third type of recording medium 19c opposite to the entrance surface thereof.

Here, the first type of recording medium 19a is the next-generation DVD, of which the thickness from the external surface to the recording surface (i.e., the thickness of the cover layer) is 0.1 mm. The second type of recording medium 19b is the conventional DVD, of which the thickness from the external surface to the recording surface is 0.6 mm. The third type of recording medium 19c is the CD, of which the thickness from the external surface to the recording surface is 1.2 mm. In Fig. 1, for each of these types of recording medium, only the aforementioned thickness is shown. Needless to say, it is for convenience' sake that the three types of recording medium 19a, 19b, and 19c are illustrated together in Fig. 1; in reality, one of those types of recording medium is used at a time.

The light beam 21a of a wavelength λ1 reflected from the first type of recording medium 19a travels its optical path backward to return to the first semiconductor laser module 11, where the light beam 21a has its optical path bent by the first hologram 11c so as to be incident on the first photodetectors 11b, which thus detect the light beam 21 a as an optical signal. The light beam 21 b of a wavelength λ2 reflected from the second type of recording medium 19b travels its optical path backward to return to the second semiconductor laser module 12, where the light beam 21b has its optical path bent by the second hologram 12c so as to be incident on the second photodetectors 12b, which thus detect the light beam 21b as an optical signal. The light beam 21c of a wavelength λ3 reflected from the third type of recording medium 19c travels its optical path backward to return to the third semiconductor laser module 13, where the light beam 21c has its optical path bent by the third hologram 13c so as to be incident on the third photodetectors 13b, which thus detect the light beam 21c as an optical signal.

The diffractive optical element 17 is a single element, and has a first diffractive surface 17a on the entrance (or incident) side thereof, and a second diffractive surface 17b on the exit (or light-emitting) side thereof. The first diffractive surface 17a permits the light beam 21a of the wavelength λ1 and the light beam 21c of the wavelength λ3 to pass therethrough straight without being diffracted, but diffracts the light beam 21b of the wavelength λ2. The second diffractive surface 17b permits the light beam 21 a of the wavelength λ1 and the light beam 21b of the wavelength λ2 to pass therethrough straight without being diffracted, but diffracts the light beam 21c of the wavelength λ3.

The objective lens 18 is so designed that, when the light beam 21a of a wavelength λ1 is shone into it in the form of a parallel beam, it is focused on the first type of recording medium 19a having a cover layer thickness of 0.1 mm. The light beam 21a of a wavelength λ1 is not diffracted by the diffractive optical element 17 but travels straight therethrough. Thus, this light beam, of which the wavefront remains unaffected, is focused satisfactorily on the first type of recording medium 19a by the objective lens 18. However, the light beam 21b of a wavelength λ2, which is focused on the second type of recording medium 19b having a cover layer thickness of 0.6 mm, suffers from spherical aberration resulting from differences in recording medium thickness and in wavelength.

To overcome this, the light beam 21b is diffracted by the first diffractive surface 17a of the diffractive optical element 17. This produces spherical aberration, and causes the diffracted light to form a divergent beam. Furthermore, this divergent beam is shone into the objective lens 18. This produces further spherical aberration. The spherical aberration so produced cancels out the spherical aberration resulting from differences in recording medium thickness and in wavelength.

Likewise, the light beam 21 c of a wavelength λ3, which is focused on the third type of recording medium 19c having a cover layer thickness of 1.2 mm, suffers from spherical aberration resulting from differences in recording medium thickness and in wavelength. To overcome this, the light beam 21c is diffracted by the second diffractive surface 17b of the diffractive optical element 17. This produces spherical aberration, and causes the diffracted light to form a divergent beam. Furthermore, this divergent beam is shone into the objective lens 18. This produces further spherical aberration. The spherical aberration so produced cancels out the spherical aberration resulting from differences in recording medium thickness and in wavelength.

As described above, the objective lens 18 is so designed that, when the light beam 21a of a wavelength λ1 is shone into it in the form of a parallel beam, it is focused on the first type of recording medium 19a having a cover layer thickness of 0.1 mm. Here, however, the distance between the objective lens 18 and the first type of recording medium 19a, i.e., the working distance of the objective lens 18, is short. Accordingly, if the light beams of wavelengths λ2 and λ3 are shone into the objective lens 18 intact, i.e., in the form of a parallel beam, it is impossible to secure a sufficient working distance because of the thicker cover layer thicknesses, namely 0.6 mm and 1.2 mm, of the second and third types of recording medium 19b and 19c. To overcome this, in this embodiment, the light beams of wavelengths λ2 and λ3 are converted into a divergent beam with a diffractive surface so as to make the back-focal length of the objective lens 18 longer and thereby secure a sufficient working distance.

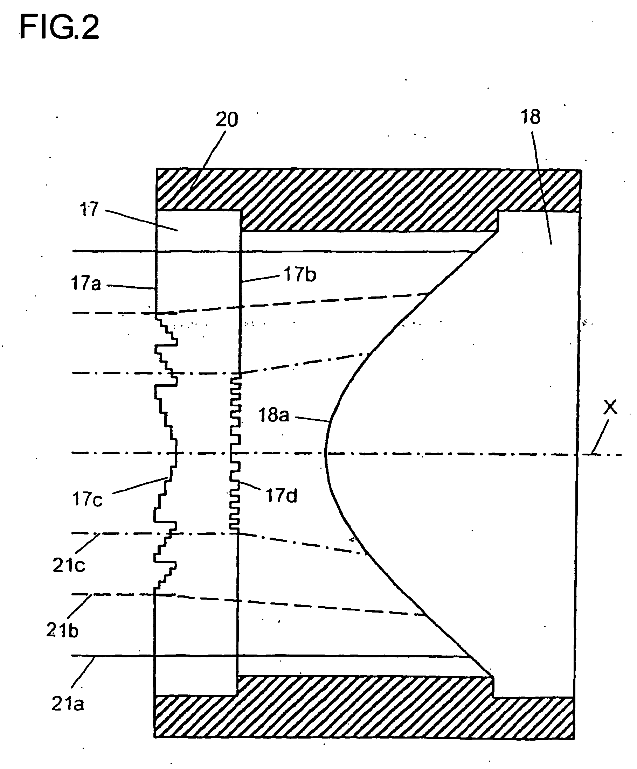

Fig. 2 is a sectional view schematically showing the construction of the diffractive optical element and the objective lens used in this embodiment. As shown in this figure, the diffractive optical element 17 and the objective lens 18 are coaxially held together by a lens barrel 20 so as to form a single unit. Specifically, the diffractive optical element 17 and the objective lens 18 are firmly fitted into one and the other end, respectively, of the cylindrical lens barrel 20 so as to be held together coaxially along the optical axis X and thereby form a single unit. The objective lens 18 has a lens surface 18a that is convex mainly toward the inside of the lens barrel 20.

When information is recorded on or reproduced from an optical disk, the objective lens 18 is controlled, through tracking control, so as to move within a range of about ± 0.5 mm perpendicularly to the optical axis. When the light beam 21b or 21c of a wavelength λ2 or λ3 is used, however, since the light beam is diffracted by the diffractive optical element 17, if the objective lens 18 alone moves while the diffractive optical element 17 remains stationary, spherical aberration occurs, enlarging the focused spot.

To overcome this, as shown in Fig. 2, the diffractive optical element 17 and the objective lens 18 are built into a single unit, and are moved together for tracking control. This makes it possible to obtain a satisfactorily focused spot. The lens barrel 20 may be omitted. In that case, for example, a flange is provided on at least one of the diffractive optical element 17 and the objective lens 18, and these are built into a single unit directly by the use of the flange. That is, what is important here is that the diffractive optical element and the objective lens are held together in such a way that their positions relative to each other do not change.

The numerical aperture of the objective lens 18 is 0.85 for the next-generation DVD, for which light of a wavelength λ1 is used, 0.6 for the conventional DVD, for which light of a wavelength λ2 is used, and 0.45 for the CD, for which light of a wavelength λ3 is used. Moreover, as shown in Fig. 2, the light beams of wavelengths λ1, λ2, and λ3, when passing through the diffractive optical element 17, have decreasingly large beam diameters in the order in which they have just been mentioned.

On the first diffractive surface 17a, within the area in which the light beam 21 b passes therethrough, there is formed, in the shape of concentric circles, a grating portion 17c having a step-shaped section. On the second diffractive surface 17b, within the area in which the light beam 21c passes therethrough, there is formed, in the shape of concentric circles, a grating portion 17d having a step-shaped section. The grating portion 17c has a repeated pattern of four steps, and the grating portion 17d has a repeated pattern of a single step. The first and second diffractive surfaces may be arranged in the opposite order.

The light beams 21a, 21 b, and 21c of wavelengths λ1, λ2, and λ3 are all incident on the diffractive optical element 17 in the form of a parallel beam, i.e., not in the form of a divergent or convergent beam. This helps prevent coma from occurring when the diffractive optical element 17 and the objective lens 18 are decentered through tracking control during recording or reproduction of information on or from an optical disk.

In this embodiment, the first diffractive surface 17a diffracts, among the light beams of three different wavelengths, only that of a wavelength λ2. This makes it possible to correct aberrations for the light beam of a wavelength λ2 independently. Moreover, the second diffractive surface 17b diffracts, among the light beams of three different wavelengths, only that of a wavelength λ3. This makes it possible to correct aberrations for the light beam of a wavelength λ3 independently. In this way, it is possible to obtain very satisfactory focusing performance with any of the three types of recording medium mentioned above.

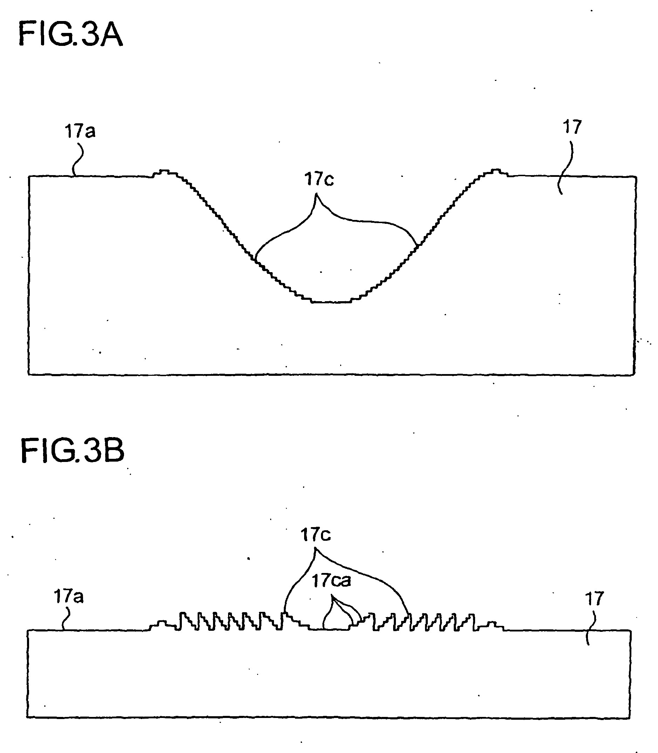

Figs. 3A and 3B are diagrams showing the sectional shapes of the diffractive optical element. As described above, in this embodiment, the diffractive optical element have a portion, having a step-shaped section, formed in the shape of concentric circles. As shown in those figures, the grating portion 17c (or 17d) having a step-shaped section that is formed on the surface of the diffractive optical element 17 is formed either as shown in Fig. 3A or as shown in Fig. 3B.

In Fig. 3A, any two adjacent level surfaces differ in height by one step. This is called a continuous type. In Fig. 3B, every predetermined number (in the figure, five) of level surfaces 17ca of which each differs in height by one step from the next, level surfaces are shifted back by the corresponding number (in the figure, four) of steps. This is called a sawtooth type, after its shape. Fig. 2 shows a case where the sawtooth type is adopted.

The continuous and sawtooth types have their respective advantages and disadvantages in terms of their characteristics in response to variations in wavelength. Variations in wavelength result from variations among individual semiconductor lasers and variations in temperature. When there is a variation in wavelength, with the continuous type, although the wavefront slightly deviates from one step to the next, the wavefront is still smoothly continuous as a whole, causing no lowering of diffraction efficiency. However, the deviations of the wavefront cause aberrations. On the other hand, with the sawtooth type, even through the wavefront deviates from one step to the next, such deviations of the wavefront are discontinuous at where level surfaces are shifted back every predetermined number of steps. Thus, provided that the number of such shifts are sufficiently great, no aberrations occur on a macroscopic scale. However, the deviations of the wavefront at where level surfaces are shifted back cause lowering of diffraction efficiency.

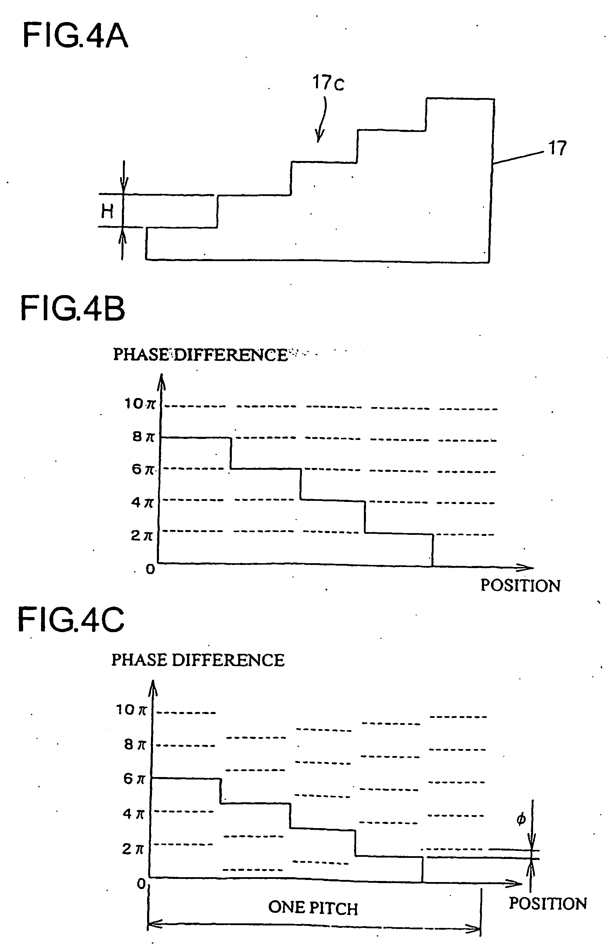

Figs. 4A to 4C are diagrams illustrating the construction of the diffractive optical element of this embodiment. Fig. 4A is an enlarged view schematically showing the section of the grating portion 17c of the diffractive optical element 17, Fig. 4B shows the phase differences produced by the diffractive optical element 17 with respect to the wavelength λ1, and Fig. 4C shows the phase differences produced by the diffractive optical element 17 with respect to the wavelength λ2. In Figs. 4B and 4C, the horizontal axis represents the same positional relationship as in the Fig. 4A.

Here, the following equations hold: $L ⁢ 1 = λ ⁢ 1 / \left(n⁢1-1\right)$ $L ⁢ 2 = λ ⁢ 2 / \left(n⁢2-1\right)$ $L ⁢ 3 = λ ⁢ 3 / \left(n⁢3-1\right)$ $H = M ⋅ L ⁢ 1$
where
- L1: represents the height that produces an optical path difference equal to one wavelength of the light beam of a wavelength λ1;
- L2: represents the height that produces an optical path difference equal to one wavelength of the light beam of a wavelength λ2;
- L3: represents the height that produces an optical path difference equal to one wavelength of the light beam of a wavelength λ3;
- n1: represents the refractive index of the diffractive optical element at the wavelength λ1;
- n2: represents the refractive index of the diffractive optical element at the wavelength λ2;
- n3: represents the refractive index of the diffractive optical element at the wavelength λ3;
- M: represents an integer equal to or greater than one; and
- H: represents the height of one step.

### [[Example 1 ]]

Here is described a numerical example of Example 1, based on the above-mentioned equations. The refractive index nd and the Abbe number vd are each a value for the d line (wavelength: 587.6 nm).

The refractive index nd = 1.53 and the Abbe number vd = 56
λ1 = 405 nm
λ2 = 650 nm
λ3 = 780 nm
n1 = 1.546061
n2 = 1.527360
n3 = 1.523617
L1 = 741.68 nm
L2 = 1232.56 nm
L3 = 1489.64 nm

- First Diffractive Surface (M = 2):: H/L1 = 2
H/L2 = 1.203 (≈ 1.2)
H/L3=0.996(≈1)
- Second Diffractive Surface (M = 5):: H/L1 = 5
H/L2=3.009(≈3)
H / L3 = 2.489 (≈2.5)

Here, with respect to the first diffractive surface, M = 2, and the height H of one step is twice the wavelength λ1. Moreover, H is 0.996 times the wavelength λ3, and is therefore very close to one time the wavelength λ3. Thus, with either of these wavelengths, the produced optical path difference is an integral multiples thereof. Accordingly, the light beams of wavelengths λ1 and λ3, of which the wavefront remains unaffected, travel straight without being diffracted, resulting in diffraction efficiency of 100 %. On the other hand, with the light beam of a wavelength λ2, the height H of one step is about 1.2 times the wavelength λ2, and thus the produced optical path difference is not an integral multiple thereof. Accordingly, this light beam is diffracted, resulting in diffraction efficiency of 87 %. Here, the height H of one step is 1.483 µm.

With respect to the second diffractive surface, M = 5, and the height H of one step is five times the wavelength λ1. Moreover, H is 3.009 times the wavelength λ2, and is therefore very close to three times the wavelength λ2. Thus, with either of these wavelengths, the produced optical path difference is an integral multiples thereof. Accordingly, the light beams of wavelengths λ1 and λ2, of which the wavefront remains unaffected, travel straight without being diffracted, resulting in diffraction efficiency of 100 %. On the other hand, with the light beam of a wavelength λ3, the height H of one step is about 2.5 times the wavelength λ3, and thus the produced optical path difference is not an integral multiple thereof. Accordingly, this light beam is diffracted, resulting in diffraction efficiency of 42 %. Here, the height H of one step is 3.708 µm.

Multiplying the diffraction efficiency of the first and second diffractive surfaces together gives diffraction efficiency of 100 % for the next-generation DVD, for which the light beam of a wavelength λ1 is used, 87 % for the conventional DVD, for which the light beam of a wavelength λ2 is used, and 42 % for the CD, for which the light beam of a wavelength λ3 is used. High diffraction efficiency is sought to achieve higher recording and reproduction rates in particular for the next-generation and conventional DVDs, and the present invention helps achieve higher diffraction efficiency.

Now, as an example, why the light beam of a wavelength λ1 travels straight without being diffracted while the light beam of a wavelength λ2 is diffracted will be described with reference to Figs. 4A to 4C. The phase differences produced by the diffractive optical element 17 shown in Fig. 4A when M = 1 are shown in Figs. 4B and 4C in the form of graphs. In Figs. 4B and 4C, the horizontal axis represents the same positional relationship as in the Fig. 4A. Fig. 4B shows the phase differences produced for the light beam of a wavelength λ1. As the light beam passes through the diffractive optical element 17, phase differences of 2π per step are produced in each of the repeatedly occurring wavefronts of the light beam, of which one is indicated by a solid line as their representative. Such phase differences of 2π per step are produced also in other wavefronts as indicated by broken lines, and accordingly the wavefront resulting from one step is contiguous with the wavefront 2π apart therefrom that results from the next step. The resulting state is therefore substantially equivalent to the state where there are no phase differences. Thus, the light beam, of which the wavefront remains unaffected, is not diffracted.

Fig. 4C shows the phase differences produced for the light beam of a wavelength λ2. As the light beam passes through the diffractive optical element 17, phase differences of 2π · H / L2 per step are produced in each of the repeatedly occurring wavefronts of the light beam, of which one is indicated by a solid line as their representative. Such phase differences occur also in other wavefronts as indicated by broken lines. As will be understood from the figure, in this case, the phase difference of 2π · H / L2 is substantially equivalent to the phase difference φ that occurs between the closest wavefronts resulting from two adjacent steps. This phase difference diffracts the wavefront. In the case shown in the figure, the wavelength φ corresponds to 0.2 times the wavelength, and therefore five steps correspond to one wavelength:

Hereinafter, a practical example of the principal portion of the optical system used in an optical pickup apparatus embodying the invention will be presented with reference to its construction data, aberration diagrams, and other data. In the construction data, surfaces are identified with their numbers as counted from the entrance side of the optical system. The diffractive optical element 17 is constituted by a first surface (r1) and a second surface (r2). The objective lens 18 is constituted by a third surface (r3) and a fourth surface (r4). The recording medium (19a, 19b, or 19c) is constituted by a fifth surface (r5) and a sixth surface (r6). All radii of curvature and axial distances are given in mm.

The symbol t1 represents the axial distance between the objective lens and the recording medium, and t2 represents the thickness from the external surface to the recording surface of the recording medium. The symbols N 1 to N3 represent the refractive indices for the wavelengths λ1, λ2, and λ3, respectively, and vd represents the Abbe number for the d-line. It is to be noted that the values of N 1 to N3 between the first and second surfaces are equal to the values of n1 to n3 noted earlier, respectively.

The third and fourth surfaces are aspherical surfaces, of which the surface shape is given by $z = \left({y}^{2}/R\right) / \left\{1+√⁢\left[1-\left(K+1\right) {\left(y/R\right)}^{2}\right]\right\} + {A}_{4} ⁢ {y}^{4} + {A}_{6} ⁢ {y}^{6} + {A}_{8} ⁢ {y}^{8} + {A}_{10} ⁢ {y}^{10} + {A}_{12} ⁢ {y}^{12} + {A}_{14} ⁢ {y}^{14} + {A}_{16} ⁢ {y}^{16}$
wherein
- z: represents the aspherical surface shape (the distance from the vertex of the aspherical surface along the optical axis);
- y: represents the distance from the optical axis;
- R: represents the radius of curvature;
- K: represents the conic coefficient; and
- A₄, A₆, A₈, A₁₀, A₁₂, A₁₄, and A₁₆: represent the aspherical coefficients.

The first and second surfaces are diffractive surfaces, of which the optical path difference function is given by $φ = {B}_{2} ⁢ {y}^{2} + {B}_{4} ⁢ {y}^{4} + {B}_{6} ⁢ {y}^{6} + {B}_{8} ⁢ {y}^{8} + {B}_{10} ⁢ {y}^{2}$
wherein
- φ: represents the optical path difference function;
- y: represents the distance from the optical axis; and
- B₂, B₄, B₆, B₈, and B₁₀: represent the diffractive coefficients.

### << Lens Data of Example 1 >>

| | | | |
|---|---|---|---|
| Wavelength (nm): | λ1 = 405 | λ2 = 650 | λ3 = 780 |
| Entrance Pupil Diameter (mm): | 3.00 | 2.17 | 1.86 |
| Numerical Aperture: | 0.85 | 0.60 | 0.45 |
| t1 (mm): | 0.5 | 0.3 | 0.3 |
| t2 (mm): | 0.1 | 0.6 | 1.2 |

| [Surface number & Radius of Curvature] | [Axial Distance] | [N1] | [N₂] | [N3] | [vd] |
|---|---|---|---|---|---|
| r1 = ∞ | 1.000000 | 1.546061 | 1.527360 | 1.523617 | 56.0 |
| r2 = ∞ | 0.100000 | | | | |
| r3 = 1.264672 | 2.199707 | 1.637678 | 1.617521 | 1.613359 | 60.3 |
| r4 = -2.954299 | t1 | | | | |
| r5 = ∞ | t2 | 1.620403 | 1.580930 | 1.574111 | 31.0 |
| r6 = ∞ | | | | | |

### [Aspherical Coefficients of Surface r3]

K = -2.453603
A4 = 1.254298 × 10⁻¹
A6 = -3.871471 × 10⁻²
A8 = 2.707512 × 10⁻²
A10 = -1.204029 × 10⁻²
A12 = 2.883890 × 10⁻³
A14 = 2.034372 × 10⁻⁴
A16 = -1.909987 × 10⁻⁴

### [Aspherical Coefficients of Surface r4]

K = -7.243150 × 10
A4 = 2.130238 × 10⁻¹
A6 = -3.754011 × 10⁻¹
A8 = 3.426509 × 10⁻¹
A10 = -1.775703 × 10⁻¹
A12= 4.018080 × 10⁻²
A14 = 0
A16= 0

### [Diffractive Coefficients of Surface r1]

B2 = 1.205317×10⁻²
B4 =-1.396464×10⁻³
B6 =-1.100806×10⁻³
B8 = 7.618051×10⁻⁴
B10 = -3.422387×10⁻⁴

### [Diffractive Coefficients of Surface r2]

B2 = 5.979853×10⁻²
B4 = -5.451861×10⁻³
B6 = 8.699237×10⁻³
B8 = -4.556232×10⁻³
B10 = 2.577298×10⁻³

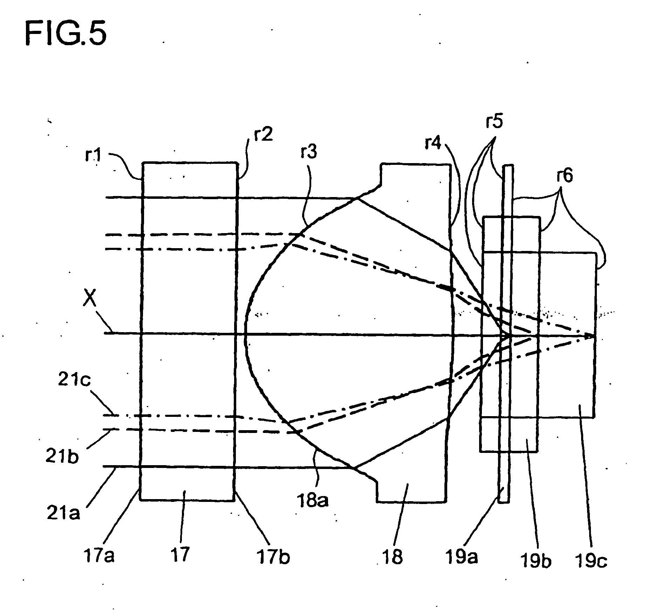

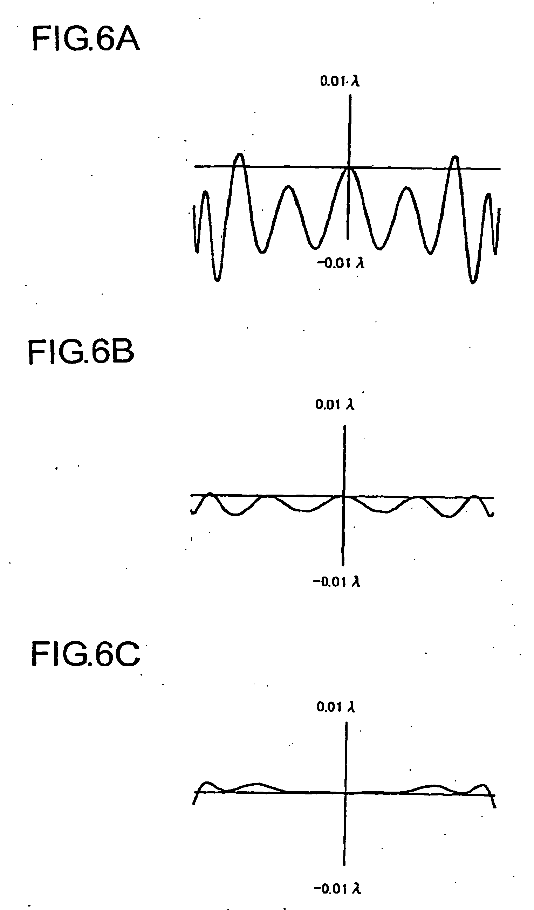

Fig. 5 is a construction diagram of the practical example, and Figs. 6A to 6C are wavefront aberration diagrams thereof. Fig. 6A shows the wavefront aberration observed with the next-generation DVD, Fig. 6B shows the wavefront aberration observed with the conventional DVD, and Fig. 6B shows the wavefront aberration observed with the CD. In each aberration diagram, the horizontal axis represents the range covering the maximum effective beam diameter, and the vertical axis represents the range covering ± 0.01 times the wavelength.

In this practical example, as described earlier, it is possible to correct aberrations independently for light of wavelengths λ2 and λ3, and thus it is possible to obtain very satisfactory focusing performance with any of the three types of recording medium mentioned above. In this practical example, the wavefront aberration observed is as small as 0.005 λ rms (λ = λ1) with the next-generation DVD, 0.001 λ rms (λ = λ2) with the conventional DVD, and 0.001 λ rms (X = λ3) with the CD.

In an optical pickup apparatus, a wavefront accuracy equal to or lower than the Marechal limit, namely 0.07 λ rms, is required, and this needs to be achieved with allowances made for view-angle and fabrication-related errors; that is, in reality, the wavefront accuracy as designed needs to be equal to or lower than 0.02 λ rms. This practical example offers satisfactory performance, with a wavefront accuracy lower than that.

In Fig. 4C, the width which generates a phase difference of one wavelength when the closest wavefronts resulting from adjacent steps are linked with each other is defined as one pitch. In this case, the minimum pitch of the first diffractive surface is 42 µm. The wavelength which is diffracted on the first diffractive surface is 650 nm. On the other hand, the minimum pitch of the second diffractive surface is 6.4 µm. The wavelength which is diffracted on the second diffractive surface is 780 nm. The minimum pitch is the width of the smallest pitch in the same diffractive surface.

When the minimum pitch and the wavelength of the light to be diffracted are represented by A and λ, respectively, in each of the diffractive surfaces, A / λ is 65 in the first diffractive surface and A / λ is 8.2 in the second diffractive surface. In the meantime, as the pitch of any one of the diffractive surfaces becomes far smaller so as to be nearer to the order of the wavelength, the diffraction efficiency becomes lower. Thus, in the present invention, the inequality A / λ ≥ 8 is satisfied, thereby obtaining a high diffraction efficiency without receiving an influence of the low in the diffraction efficiency substantially.

The following describes numerical examples of Example 2 and examples subsequent thereto based on the equations described with reference to Figs. 4A to 4C. In each of the following practical examples, the data on the lens have the same construction as in Example 1, and the description thereof is omitted. The refractive index nd and the Abbe number vd are each a value for the d line (wavelength: 587.6 nm).

### [[Example 2 ]]

The refractive index nd = 1.62 and the Abbe number vd = 23
λ1 = 405 nm
λ2 = 650 nm
λ3 = 780 nm
n1 = 1.670871
n2 = 1.612903
n3 = 1.603561
L1 = 603.6924 nm
L2 = 1060.526 nm
L3 =1292.33 nm

- First diffractive surface (M = 2, H = 1.207 µm):: H/L1 = 2
H/L2= 1.138
H/L3=0.934
- Second diffractive surface (M = 7, H = 4.226 µm):: H / L1 = 7
H / L2 = 3.985
H / L3 = 3.270

### Diffraction effciency

- First diffractive surface:: λ1 ... 100.0 %
λ2 ... 93.8 %
λ3 ... 98.6 %
- Second diffractive surface:: λ1 ... 100.0 %
λ2 ... 99.9 %
λ3 ... 78.2%
- Both of the surfaces:: λ1 ... 100.0 %
λ2 ... 93.7 %
λ3 ... 77.1 %

### [[ Example 3 ]]

The refractive index nd = 1.6 and the Abbe number vd = 28
λ1 = 405 nm
X2 = 650 nm
λ3 = 780 nm
n1 = 1.640439
n2 = 1.594359
n3 = 1.586932
L1 = 632.3784 nm
L2 = 1093.616 nm
L3 = 1328.944 nm

- First diffractive surface (M = 2, H = 1.265 µm):: H/L1 = 2
H/L2= 1.156
H/L3= 0.952
- Second diffractive surface (M = 7, H = 4.427 µm):: H / L1 = 7
H / L2 = 4.048
H/L3=3.331

### Diffraction efficiency

- First diffractive surface:: λ1 ... 100.0 %
λ2 ... 92.2 %
λ3 ... 99.2 %
- Second diffractive surface:: λ1 ... 100.0 %
λ2 ... 99.3 %
λ3 ... 68.8 %
- Both of the surfaces:: λ1 ... 100.0 %
λ2 ... 91.6 %
λ3 ... 68.2 %

### [[ Example 4 ]]

The refractive index nd = 1.6 and the Abbe number vd = 20
λ1 = 405 mn
λ2 = 650 nm
λ3 = 780 nm
n1 = 1.656615
n2 =1.592102
n3 = 1.581705
L1 = 616.7998 nm
L2 = 1097.783 nm
L3 = 1340.886 nm

- First diffractive surface (M = 2, H = 1.234 µm):: H/L1 = 2
H/L2=1.124
H / L3 = 0.920
- Second diffractive surface (M = 7, H = 4:318 µm):: H/L1 = 7
H/L2= 3.933
H / L3 = 3.220

### Diffraction efficiency

- First diffractive surface:: λ1 ... 100.0 %
λ2 ... 95.1 %
λ3 ... 97.9 %
- Second diffractive surface:: λ1 ... 100.0 %
λ2 ... 98.5 %
λ3 ... 85.1 %
- Both of the surfaces:: λ1 ... 100.0 %
λ2 ... 93.7 %
λ3 ... 83.3 %

### [[ Example 5 ]]

The refractive index nd = 1..6 and the Abbe number vd = 20
λ1 = 405 nm
λ2 = 650 nm
λ3 = 780 nm
1 = 1.656615
n2 = 1.592102
n3 = 1.581705
L1 = 616.7998 nm
L2 = 1097.783 nm
L3 = 1340.886 nm

- First diffractive surface (M = 2, H = 1.234 µm):: H/L1 = 2
H/L2= 1.124
H/L3= 0.920
- Second diffractive surface (M = 9, H = 5.551 µm):: H/L1 = 9
H / L2 = 5.057
H/L3=4.140

### Diffraction efficiency

- First diffractive surface:: λ1 ... 100.0 %
λ2 ... 95.1 %
λ3 ... 97.9 %
- Second diffractive surface:: λ1 ... 100.0 %
λ2 ... 98.9 %
λ3 ... 93.7 %
- Both of the surfaces:: λ1 ... 100.0 %
λ2 ... 94.1 %
λ3 ... 91.7 %

### [[ Example 6 ]]

The refractive index nd = 1.6 and the Abbe number vd = 28
λ1 = 405 nm
λ2 = 650 nm
λ3 = 780 nm
n1 = 1.640439
n2 = 1.594359
n3 = 1.586932
L1 = 632.3784 nm
L2 = 1093.616 nm
L3 = 1328.944 nm

- First diffractive surface (M = 2, H = 1.265 µm):: H/L1 = 2
H/L2=1.156
H / L3 = 0.952
- Second diffractive surface (M = 12, H = 7.589 µm):: H/L1 = 12
H / L2 = 6.939
H/L3=5.710

### Diffraction efficiency

- First diffractive surface:: λ1 ... 100.0 %
λ2 ... 92.2 %
λ3 ... 99.2 %
- Second diffractive surface:: λ1 ... 100.0 %
λ2 ... 98.8 %
λ3 ... 75.3 %
- Both of the surfaces:: λ1 ... 100.0 %
λ2 ... 91.1%
λ3 ... 74.7 %

In any one of Examples 2 to 6, the height H of each step of the first diffractive surface is a substantially integral multiple of λ1 and is a substantially integral multiple of λ3. For either of the wavelengths, an optical path difference of an integral multiple thereof is generated. Therefore, the wavefronts of the light beams λ1 and λ2 remain unaffected, and travel straight through the first diffractive surface without being diffracted, resulting in a high diffraction efficiency of 97 % or more. On the other hand, for the light beam of the wavelength λ3, the height H of each step of the first diffractive surface is not any integral multiple of λ3 and thus an optical path difference that is not any integral multiple of λ3 is generated. Therefore, this light beam is diffracted, resulting in a high diffraction efficiency of 91 % or more.

In any one of Examples 2 to 6, the height H of each step of the second diffractive surface is a substantially integral multiple of λ1 and is a substantially integral multiple of λ2. For either of the wavelengths, an optical path difference of an integral multiple thereof is generated. Therefore, the wavefronts of the light beams of the wavelengths λ1 and λ2 remain unaffected, and travel straight through the second diffractive surface without being diffracted, resulting in a high diffraction efficiency of 98 % or more. On the other hand, for the light beam of the wavelength λ3, the height H of each step of the second diffractive surface is not any integral multiple of λ3 and thus an optical path difference that is not any integral multiple of λ3 is generated. Therefore, this light beam is diffracted, resulting in a high diffraction efficiency of 65 % or more. As the value of H/ Li, wherein i is 1, 2 or 3, is closer to an integer, the diffraction efficiency is higher. The Abbe number is made to satisfy the inequality 20 ≤ vd ≤ 28, whereby the value of H / Li is more easily made close to an integer so that the efficiency of the diffractive optical element can be improved.

When the Abbe number is made to satisfy the inequality 20 ≤ vd ≤ 28 as performed in Examples 2 to 6, the diffraction efficiency of both the surfaces is high, that is, 100 % for λ1, 90 % or more for λ2, and 65 % or more for λ3. For DVDs using λ2, the diffraction efficiency of both the surfaces is desirably 90 % or more. For CDs using λ3, the diffraction efficiency is desirably 60 % or more. Therefore, by making the Abbe number to satisfy the inequality 20 ≤ vd ≤ 28 in this way, desired diffraction efficiency can be realized. If the Abbe number vd exceeds 28, the diffraction efficiency of the CDs unfavorably deteriorates. On the other hand, if the Abbe number vd is less than 20, the diffraction efficiency of the DVDs unfavorably deteriorates. Moreover, it is difficult to develop materials having an Abbe number vd of less than 20.

In any one of the above-mentioned practical examples, the diffraction efficiency depends on the Abbe number or the value of M but does not depend on the refractive index. It is therefore possible to apply the diffractive optical element of the present invention to material having any refractive index. For reference, an optical resin (registered trade mark: ZEONEX) made by Nippon Zeon Co., Ltd. is used as the material of the diffractive optical element of Example 1. The material of the diffractive optical element of Example 2 is an ultraviolet curable resin. It is supposed that as the materials of the diffractive optical elements of Examples 4 and 5, optical resins having an Abbe number vd of 20 are used.

As the material of the diffractive optical elements, it is possible to use not only the ultraviolet curable resin but also any other optical resin and any optical glass. In order to form a diffractive surface having a form of minute steps, it is suitable to use a material having a small viscosity when the material is in a melted state, that is, an optical resin. The optical resin is more inexpensive and lighter than optical glass. In particular, when the optical resin is used for the diffractive optical element to make the element light, the driving force for focusing an optical pickup or performing tracking-control can be made small when information is recorded on or reproduced from an optical disk. At the time of forming a lattice section on, e.g., a resin substrate or a glass substrate to produce a diffractive optical element having the so-called hybrid structure, it is suitable for the production thereof to use an ultraviolet curable resin as the material for the lattice section.

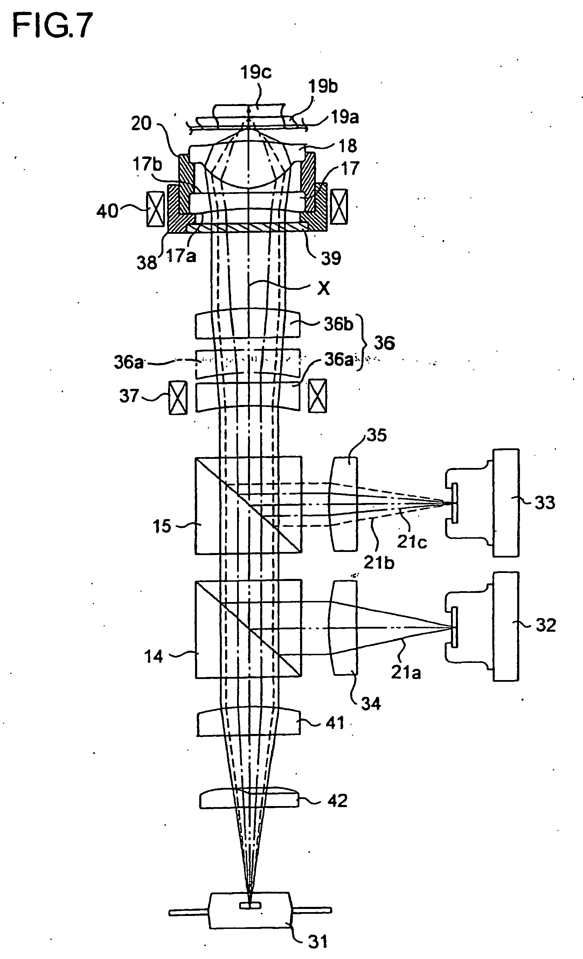

Fig. 7 is a construction diagram schematically showing an optical pickup apparatus of another embodiment of the present invention. The present embodiment is also an optical pickup apparatus compatible with next-generation DVDs and conventional DVDs and CDs in the same manner as in the above-mentioned embodiment. The same reference numbers are attached to parts which act in the same way as in the above-mentioned embodiment, and detailed description thereof will not be given. In Fig. 7, a photodetector 31 is arranged in the lower portion of this figure, and is a photodetector common to next-generation DVDs and conventional DVDs and CDs.

A first laser source 32 arranged at the upper right portion of the photodetector 31 is a light source emitting a single wavelength for next-generation DVDs. The first laser source 32 emits a light beam 21 a (shown by solid lines) of a wavelength λ1 of 408 nm toward the left side in the figure. Furthermore, a second laser source 33 arranged over the first laser source 32 is a light source emitting two wavelengths for conventional DVDs and CDs. The second laser source 33 emits a light beam 21b (shown by broken lines) of a wavelength λ2 of 658 nm (for conventional DVDs) and a light beam 21c (shown by alternate long and short dash lines) of a wavelength λ3 of 785 nm (for conventional CDs) toward the left side in the figure.

The present embodiment has a structure wherein the laser source emitting the single wavelength and the laser source emitting the two wavelengths, and the detector are separately arranged. However, the structure of the embodiment is not limited to this structure. It is allowable to use a one-can laser source, wherein three laser sources are put in one can (or case), a one-chip laser source, wherein light-emitting points of three laser sources are formed on one chip, or a laser source module wherein laser sources and photodetectors are integrated.

First, the light beam 21 a emitted from the first light source 32 is converted to parallel light through a collimator lens 34, and is then reflected on a beam splitter 14 having a substantially cubic shape so as to enter a beam splitter 15 arranged over the splitter 14 and similarly having a substantially cubic shape. On the other hand, the light beams 21b and 21c emitted from the second laser source 33 are each converted to parallel light through a collimator lens 35, and then enter the beam splitter 15. The light beams 21a, 21b and 21c are integrated through the beam splitter 15 to travel along a common optical path, and come to have a common optical axis X extending to a recording medium.

Subsequently, the diameter of each of the light beams is expanded through a beam expander 36 arranged above, and then the light beams are converged through a substantially disk-shaped diffractive optical element 17 and an objective lens 18. The objective lens 18 has a convex shape mainly downward (in the direction opposite to the recording medium) in the figure. The beam splitters 14 and 15 are optical elements for separating or integrating light beams by a wavelength selective interference film.

The beam expander 36 includes a negative lens 36a and a positive lens 36b arranged in this order from the lower side of this figure. The negative lens 36a can be driven in the direction of the optical axis X by a monoaxial actuator 37. By driving the negative lens 36a in the direction of the optical axis X, the spherical aberration of a spot formed on the information recording surface of a next DVD is corrected. Examples of the cause of generating such spherical aberration include a scattering in the wavelength of the first laser source 32, based on a production error thereof; a change in the refractive index or a refractive index distribution of the objective lens system, following temperature change; focus jump between information recording layers of a multi-layered disk such as a two-layer disk or a four-layer disk; and a scattering in the thickness or a thickness distribution of the protective layer of the next-generation DVD, based on a production error thereof.

When information is recorded on or reproduced from a CD, divergent light enters the objective lens system. In order to obtain this divergent light, the negative lens 36a is shifted to a position shown by an alternate long and short dash line by the monoaxial actuator 37 so as to make the interval between the negative lens 36a and the positive lens 36b narrower than in the case of the next-generation DVD. In this state, information is recorded on or reproduced from the CD.

In the case that divergent light enters the objective lens system in this way when information is recorded on or reproduced from the CD, the diffraction pitch of a second diffractive surface 17b of the diffractive optical element 17, which will be detailed later, becomes larger as compared with the case that parallel light enters the system. Consequently, a fall in the diffraction efficiency can be made small. When the collimator lens 34 or 35 is shifted along the optical axis thereof instead of shifting the negative lens 36a of the beam expander 36 as described above, the same advantageous effect can be obtained.

The diffractive optical element 17 and the objective lens 18 are coaxially integrated with each other by means of a lens barrel 20, and constitute the objective lens system. A substantially ring-shaped holder 38 is fitted onto the lens barrel 20 in the lower portion thereof. The holder 38 holds, at the lower end thereof, a disk-shaped aperture-restricting filter 39 for CDs. The lens barrel 20 on which the holder 38 is fitted is driven by a biaxial actuator 40, thereby performing focusing control and tracking control.

The light beam 21a of the wavelength λ1 emitted from the first laser source 32 forms an image on the surface of a first recording medium 19a opposite to the incident surface of the medium 19a. The light beam 21 b of the wavelength λ2 emitted from the second laser source 33 forms an image on the surface of a second recording medium 19b opposite to the incident surface of the medium 19b. Similarly, the light beam 21c of the wavelength λ3 emitted from the second laser source 33 forms an image on the surface of a third recording medium 19c opposite to the incident surface of the medium 19c.

The first recording medium 19a is a next-generation DVD, and thickness from the external surface to the recording surface (the thickness of a covering layer) is 0.1 mm. The second recording medium 19b is a conventional DVD, and thickness from the external surface to the recording surface is 0.6 mm. The third recording medium 19c is a CD, and thickness from the external surface to the recording surface is 1.2 mm. Fig. 7 shows each of the recording media by only the thickness thereof. For convenience of illustration, the recording media 19a, 19b and 19c are drawn together with one another. As a practical matter, however, they are separately used.

First, the light beam 21a of the wavelength λ1 reflected on the first recording medium 19a travels conversely along the optical path, and then transmits through the beam splitters 15 and 14. The light beam 21a is then converged through the collimator lens 41, is adjusted into an appropriate spot shape through a sensor lens 42, and finally enters the photodetector 31, thereby detecting an optical signal therein. The same matter is applied to the light beam 21b of the wavelength λ2 reflected on the second recording medium 19b and the light beam 21 c of the wavelength λ3 reflected on the third recording medium 19c.

In the meantime, the diffractive optical element 17 is a single element, and has a first diffractive surface 17a on the entrance side thereof and a second diffractive surface 17b on the exit side thereof. Since the paraxial power of the diffractive optical element 17 is negative, the light beam 21a of the wavelength λ1, which enters, as parallel light, the diffractive optical element 17, transmits through the element 17, thereby becoming divergent light to enter the objective lens 18. This makes it possible that the back focus of the objective lens 18 becomes long. Consequently, even if the diameter of the objective lens system is made small, an appropriate working distance can be kept. Therefore, this case is preferable for making a small-sized optical pickup apparatus of a slim type or the like.

Since the first diffractive surface 17a is formed in the numerical aperture of DVDs, spherical aberration generated by the difference in medium thickness and wavelength between high-density DVDs and the DVDs is not corrected in the area outside the effective diameter of the first diffractive surface 17a. Therefore, the light beam 21 b of the wavelength λ2 which passes through the area outside the effective diameter of the first diffractive surface 17a does not form any image on the information recording surface of DVDs, so as to become a flare component. This comes to cause the aperture restriction automatically, at the time of recording or reproducing information on or from a DVD, by the transmission of the light beam 21b of the wavelength λ2 through the diffractive optical element 17.

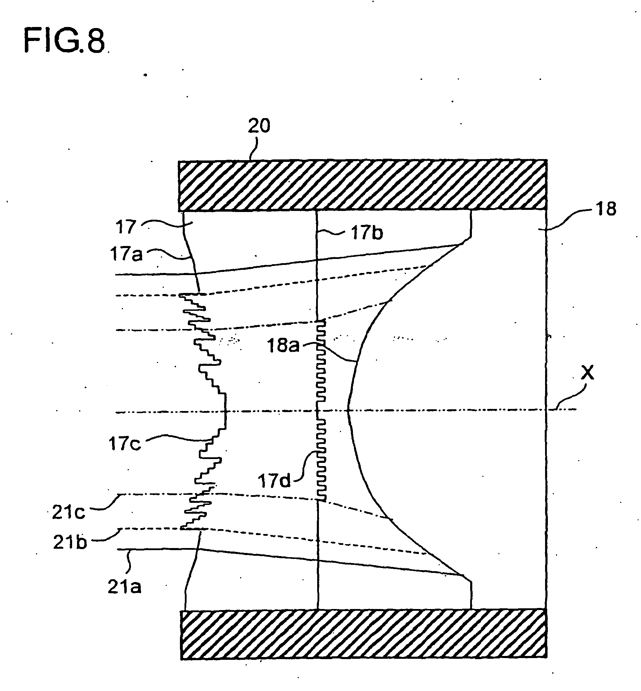

Fig. 8 is a sectional view schematically showing the construction of the diffractive optical element and the objective lens in the present embodiment. As shown in Fig. 8, the diffractive optical element 17 and the objective lens 18 are coaxially integrated with each other by means of the lens barrel 20. Specifically, the diffractive optical element 17 is fitted and fixed into one end of the cylindrical lens barrel 20 and the objective lens 18 is fitted and fixed into the other end thereof. These are integrated coaxially along the optical axis X. The objective lens 18 has a lens surface 18a mainly convex toward the inside of the lens barrel 20. As described above, the diffractive optical element 17 has a negative paraxial power. The construction except the structures described herein is basically equal to that of the above-mentioned embodiment shown in Fig. 2.

### [[ Example 7 ]]

Here is described a numerical example of Example 7, based on the above-mentioned equations for obtaining L1 to L3 and H. The present example is suitable for the objective lens system of the optical pickup apparatus of the embodiment described with reference to Fig. 1. In this example, the diffractive optical element and the objective lens are each made of plastic.

The refractive index nd = 1.51 and the Abbe number vd = 56.5
λ1 = 408 nm
λ2 = 658 nm
λ3 = 785 nm
n1 = 1.524243
n2 = 1.506415
n3 = 1.503235
L1 = 778.27 nm
L2 = 1299.33 nm
L3 = 1559.91 nm

- First diffractive surface (M = 2):: H / L1 = 2
H/L2= 1.198 (≈1.2)
H / L3 = 0.998 (≈ 1)
- Second diffractive surface (M = 5):: H / L1 = 5
H/L2=2.995 (≈ 3)
H / L3 = 2:495 (≈ 2.5)

About the first diffractive surface in this example, M is 2. The height H of each step is two times L1. H is 0.998 times L3, and is very close to L3. In either case, an optical path difference of an integral multiple of the wavelength is generated; therefore, the wavefronts of the wavelengths λ1 and λ3 remain unaffected and each go straight without being diffracted. The diffraction efficiency thereof is 100 %. On the other hand, about the light beam of the wavelength λ2, the height H of each step of the first diffractive surface is about 1.2 times L2. Thus, an optical path difference that is not any integral multiple of L2 is generated; therefore, the light beam is diffracted so as to give a diffraction efficiency of 87 %. The height H is 1.557 µm.

About the second diffractive surface, M is 5. The height H of each step of this surface is five times L1. H is 2.9995 times L2, and is very close to three times L2. In either case, an optical path difference of an integral multiple of the wavelength is generated; therefore, the wavefronts of the wavelengths λ1 and λ2 remain unaffected and each go straight without being diffracted. The diffraction efficiency thereof is 100 %. On the other hand, about the light beam of the wavelength λ3, the height H of each step of the second diffractive surface is about 2.5 times L3. Thus, an optical path difference that is not any integral multiple of L3 is generated; therefore, the light beam is diffracted so as to give a diffraction efficiency of 42 %. The height H is 3.891 µm.

When the diffraction efficiency of the first diffractive surface and that of the second diffractive surface are multiplied by each other, the resultant value is 100 % for next-generation DVDs using the light beam of the wavelength λ1, is 87 % for conventional DVDs using the light beam of the wavelength λ2, and is 42 % for CDs using the light beam of the wavelength λ3. In particular, for next-generation DVDs and conventional DVDs, a high efficiency is necessary for making the recording or reproducing speed large. According to the present invention, such a high efficiency can be attained.

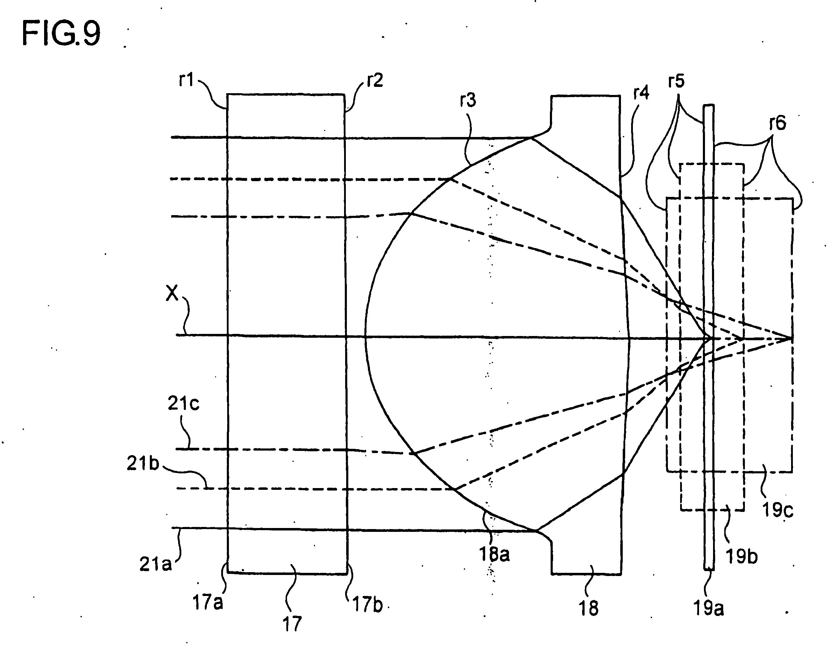

The following describes specific lens data in Example 7 as construction data. The construction of the present example is shown in Fig. 9. In the data, surface numbers are attached to optical surfaces of the optical system in order from the entrance side thereof. The diffractive optical element 17 is composed of a first surface (r1) and a second surface (r2). The objective lens 18 is composed of a third surface (r3) and a fourth surface (r4). The recording medium (19a, 19b or 19c) is composed of a fifth surface (r5) and a sixth surface (r6). All radii of curvature and axial distances between surfaces are given in mm.

The symbol t1 represents the axial distance between the object lens and the recording medium, and t2 represents the thickness from the external surface of the recording medium to the recording surface thereof. N1 to N3 represent the refractive indexes for the wavelengths λ1, λ2 and λ3, respectively. Nd represents the refractive index for the d line, and vd represents the Abbe number for the d line. It is to be noted that the values of N 1 to N3 between the first and second surfaces are equal to the values of the above-mentioned n1 to n3, respectively.

Here, the third and fourth surfaces are each an aspherical surface, the surface shape of which is given by $z = \left({y}^{2}/R\right) / \left\{1+√⁢\left[1-\left(K+1\right) {\left(y/R\right)}^{2}\right]\right\} + {A}_{4} ⁢ {y}^{4} + {A}_{6} ⁢ {y}^{6} + {A}_{8} ⁢ {y}^{8} + {A}_{10} ⁢ {y}^{10} + {A}_{12} ⁢ {y}^{12} + {A}_{14} ⁢ {y}^{14} + {A}_{16} ⁢ {y}^{16} + {A}_{18} ⁢ {y}^{18} + {A}_{20} ⁢ {y}^{20}$
wherein
- z: represents the aspherical surface shape (the distance from the vertex of the aspherical surface along the optical axis);
- y: represents the distance from the optical axis;
- R: represents the radius of curvature;
- K: represents the conic coefficient; and
- A₄, A₆, A₈, A₁₀, A₁₂, A₁₄, A₁₆, A₁₈, and A₂₀: represent the aspherical coefficients.

The first and second surfaces are each a diffractive surface, the optical path difference function of which is given by $φ = λ / {λ}_{B} \times n \times \left({B}_{2}⁢{y}^{2}+{B}_{4}⁢{y}^{4}+{B}_{6}⁢{y}^{6}+{B}_{8}⁢{y}^{8}+{B}_{10}⁢{y}^{2}\right)$
wherein
- φ: represents the optical path difference function;
- λ: represents the wavelength of the light flux that enters the diffractive surface;
- λ_{B}: represents the production wavelength;
- n: represent the order of diffraction;
- y: represents the distance from the optical axis; and
- B₂, B₄, B₆, B₈, and B₁₀: represent the diffractive surface coefficients.

In the construction data, n_{BD}, n_{DVD} and n_{CD} represent diffraction orders for next-generation DVDs, conventional DVD and CDs, respectively.

### << Lens Data of Example 7 >>

| | | | |
|---|---|---|---|
| Wavelength (nm): | λ1 = 408 | λ2 = 658 | λ3 = 785 |
| Entrance Pupil Diameter (mm): | 3.74 | 2.96 | 2.20 |
| Numerical Aperture: | 0.85 | 0.65 | 0.45 |
| t1 (mm): | 0.7187 | 0.5000 | 0.3500 |
| t2 (mm): | 0.0875 | 0.6000 | 1.2000 |

| [Surface number & Radius of Curvature] OBJ (Light-Emitting Point) | [Axial Distance] | [N1] | [N₂] | [N3] | [Nd] | [vd] |
|---|---|---|---|---|---|---|
| | ∞ | | | | | |
| STO (Stop) | 0.5000 | | | | | |
| r1 = ∞ | 1.2000 | 1.5242 | 1.5064 | 1.5032 | 1.5091 | 56.5 |
| r2 = ∞ | 0.2000 | | | | | |
| r3 = 1.4492 | 2.6200 | 1.5596 | 1.5406 | 1.5372 | 1.5435 | 56.3 |
| r4 = -2.8750 | t1 | | | | | |
| r5 = ∞ | t2 | 1.6211 | 1.5798 | 1.5733 | 1.5733 | 30.0 |
| r6 = ∞ | | | | | | |

### [Aspherical Coefficients of Third Surface (r3)]

K = -0.65249
A4 = 0.77549 × 10⁻²
A6 = 0.29588 × 10⁻³
A8 = 0.19226 × 10⁻²
A10 = -0.12294 × 10⁻²
A12 = 0.29138 × 10⁻³
A14 = 0.21569 × 10⁻³
A16 = -0.16850 × 10⁻³
A18 = 0.44948 × 10⁻⁴
A20 = -0.43471 × 10⁻⁵

### [Aspherical Coefficients of Fourth Surface (r4)]

K = -0.43576 × 10²
A4 = 0.97256 × 10⁻¹
A6 = -0.10617
A8 = 0.81819 × 10⁻¹
A10 = -0.41190 × 10⁻¹
A12 = 0.11458 × 10⁻¹
A14 = -0.13277 × 10⁻²
A16=0
A18=0
A20 = 0

### [Diffraction Order of First Surface (r1), Production Wavelength Thereof, and Diffractive Surface Coefficient Thereof]

n_{BD} = 0
n_{DVD} = 1
n_{CD} = 0
λ_{B} = 658 nm
B2 = 5.0872 × 10⁻³
B4 = -9.3473 × 10⁻⁴
B6 = -2.1354 × 10⁻⁵
B8 = -5.5251 × 10⁻⁵
B10 = 1.1369 × 10⁻⁷

### [Diffraction Order of Second Surface (r2), Production Wavelength Thereof, and Diffractive Surface Coefficient Thereof]

n_{BD} = 0
n_{DVD} = 0
n_{CD} = 1
λ_{B} = 785 nm
B2 = 2.4797 × 10⁻²
B4 = -1.7553 × 10⁻³
B6 = 9.9805 × 10⁻⁴
B8 = -3.3757 × 10⁻⁴
B10 = 4.0994 × 10⁻⁵

### [[ Example 8 ]]

Here is described a numerical example of Example 8, based on the above-mentioned equations for obtaining L1 to L3 and H. The present example is suitable for the objective lens system of the optical pickup apparatus of the embodiment described with reference to Fig. 7. In this example, the diffractive optical element is made of plastic and the objective lens is made of glass (M-LAC 130, made by Hoya Corp).

The refractive index nd = 1.51 and the Abbe number vd = 56.5
λ1 = 408 nm
λ2 = 658 nm
λ3 = 785 nm
n1 = 1.524243
n2 = 1.506415
n3 = 1.503235
L1 = 778.27 nm
L2 = 1299.33 nm
L3 = 1559.91 nm

- First diffractive surface (M = 2):: H / L1 = 2
H / L2 = 1.198 ≈ 1.2)
H/L3 = 0.998 (≈1)
- Second diffractive surface (M = 5):: H / L1 = 5
H / L2 = 2.995 (≈ 3)
H / L3 = 2.495 (≈ 2.5)

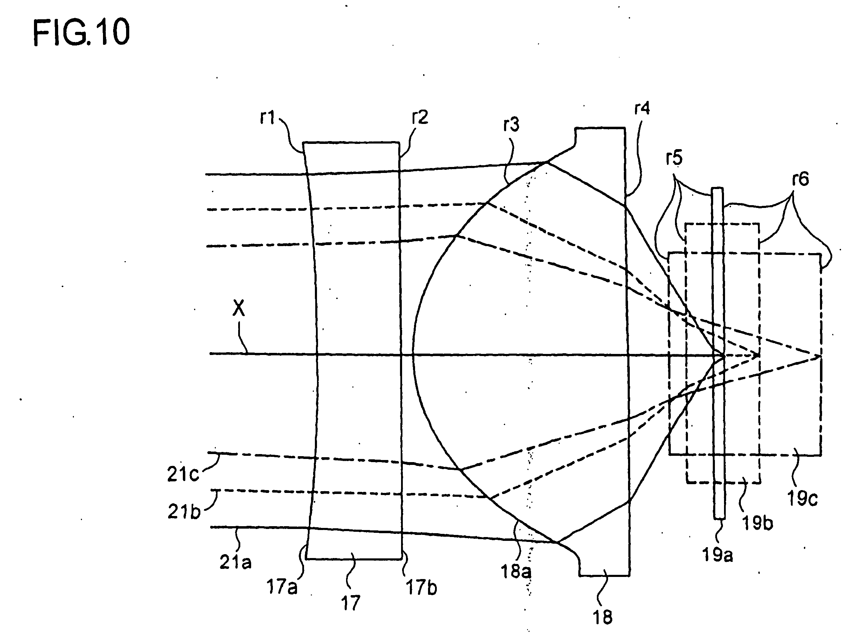

The following describes specific lens data in Example 8 as construction data. The construction of the present example is shown in Fig. 10. The lens data have the same construction as in Example 7. The first, third and fourth surfaces are each an aspherical surface. The equation representing the surface shape of the aspherical surface is equal to the equation defined in Example 7. The first and second surfaces are each a diffractive surface. The equation of the optical path difference function of the diffraction surface is equal to the equation defined in Example 7.

### << Lens Data of Example 8 >>

| | | | |
|---|---|---|---|
| Wavelength (nm): | λ1 = 408 | λ2 = 658 | λ3 = 785 |
| Entrance Pupil Diameter (mm): | 2.80 | 2.22 | 1.67 |
| Numerical Aperture: | 0.85 | 0.65 | 0.45 |
| t1 (mm): | 0.6714 | 0.4591 | 0.3500 |
| t2 (mm): | 0.1000 | 0.6000 | 1.2000 |

| [Surface number & Radius of Curvature] | [Axial Distance] | [N1] | [N₂] | [N3] | [nd] | [vd] |
|---|---|---|---|---|---|---|
| OBJ (Light-Emitting Point) | | | | | | |
| | ∞ | | | | | |
| STO (Stop) | 0.5000 | | | | | |
| r1 = -12.3047 | 0.7000 | 1.5242 | 1.5064 | 1.5032 | 1.5091 | 56.5 |
| r2 = ∞ | 0.2000 | | | | | |
| r3 = 1.2326 | 2.6200 | 1.7149 | 1.6895 | 1.6845 | 1.6935 | 53.2 |
| r4 = -5.3193 | t1 | | | | | |
| r5 = ∞ | t2 | 1.6211 | 1.5798 | 1.5733 | 1.5855 | 30.0 |
| r6 = ∞ | | | | | | |

### [Aspherical Coefficients of First Surface (r1)]

K = 0.34282 × 10²
A4 = 0.22218 × 10⁻²
A6 = 0.47370 × 10⁻³
A8 = -0.99925 × 10⁻⁴
A10 = 0.44441 × 10⁻⁴
A12 = 0.0
A14 = 0.0
A16 = 0.0
A18 = 0.0
A20 = 0.0

### [Aspherical Coefficients of Third Surface (r3)]

K = -0.65831
A4 = 0.15222 × 10⁻¹
A6 = -0.38126 × 10⁻²
A8 = 0.54510 × 10⁻²
A10 = -0.13881 × 10⁻²
A12 = -0.28414 × 10⁻³
A14 = 0.23005 × 10⁻³
A16 = 0.39923 × 10⁻⁴
A18 = 0.25103 × 10⁻⁵
A20 = -0.17517 × 10⁻⁴

### [Aspherical Coefficients of Fourth Surface (r4)]

K = -0.35782 × 10³
A4 = 0.61090 × 10⁻¹
A6 = -0.22431 × 10⁻¹
A8 = -0.56844 × 10⁻²
A10 = -0.86709 × 10⁻³
A12 = 0.26281 × 10⁻²
A14 = -0.22175 × 10⁻³
A16 = -0.19582 × 10⁻³
A18=0
A20 = 0

### [Diffraction Order of First Surface (r1), Production Wavelength Thereof, and Diffractive Surface Coefficient Thereof]

n_{BD} = 0
n_{DVD} = 1
n_{CD} = 0
λ_{B} 658 nm
B2 = 1.0199 × 10⁻²
B4 = -2.8624 × 10⁻³
B6 = 5.6016 × 10⁻⁴
B8 = -1.1665 × 10⁻³
B10 = 1.6292 × 10⁻⁴

### [Diffraction Order of Second Surface (r2), Production Wavelength Thereof, and Diffractive Surface Coefficient Thereof]

n_{BD} = 0
n_{DVD} = 0
n_{CD} = 1
λ_{B} = 785 nm
B2 = 3.4854 × 10⁻²
B4 = -4.3631 × 10⁻³
B6 = 1.1176 × 10⁻²
B8 = -9.7436 × 10⁻³
B10 = 3.7672 × 10⁻³

In Examples 1, 7 and 8, almost all of the light quantity of the light beam 21c of the wavelength λ3 that enters the lattice section 17d is divided into positive primary diffractive light and negative primary diffractive light. In Examples 1, 7 and 8, the positive primary diffractive light, out of the lights, is converged onto the information recording surface of a CD so as to record or reproduce information on or from the CD. The focal position of the positive primary diffractive light is neared to the recording medium than the focal position of the negative primary diffractive light, which is not used for the recording or reproducing of any information. The diffraction power in the paraxial of the lattice section 17d is decided so as to make the distance between the focus of the positive primary diffractive light and that of the negative primary diffractive light larger than the operating distance of the CD.

In general, at the time of performing the focus taking-in operation of the objective lens in an optical pickup apparatus, the focal position is detected by keeping the objective lens away once from the recording medium and subsequently bringing the objective lens close to the recording medium.

In Examples 1, 7 and 8, the focus of the positive primary diffractive light used in the recording or reproducing of information on or from the CD is earlier detected and further the distance between the focus of the positive primary diffractive light and that of the negative primary diffractive light is larger than the operating distance of the CD; therefore, in the focus taking-in operation, it does not happen that the focus of the negative primary diffractive light, which is not used in the recording or reproducing of any information, is incorrectly detected.

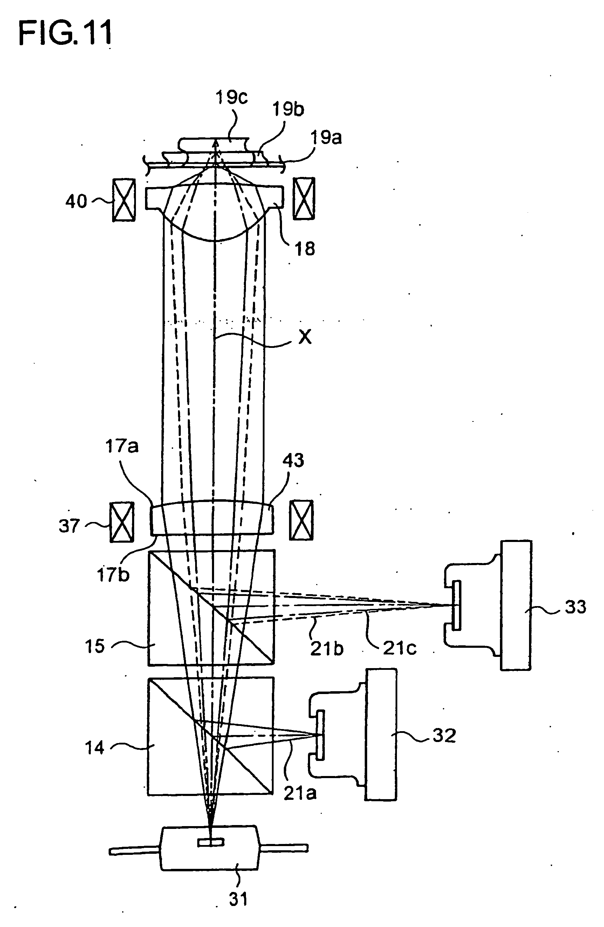

Fig. 11 is a construction diagram schematically showing an optical pickup apparatus of still another embodiment of the present invention. The present embodiment is also an optical pickup apparatus compatible with next-generation DVDs and conventional DVDs and CDs in the same manner as in the above-mentioned embodiment. The same reference numbers are attached to parts which act in the same way as in the above-mentioned embodiment, and detailed description thereof will not be given as the case may be. In Fig. 11, a photodetector 31 is arranged in the lower portion of this figure, and is a photodetector common to next-generation DVDs, conventional DVDs and CDs.

A first laser source 32 arranged at the upper right of the photodetector 31 is a light source emitting a single wavelength for next DVDs. The first laser source 32 emits a light beam 21a (shown by solid lines) of a wavelength λ1 of 408 nm toward the left side in the figure. Furthermore, a second laser source 33 arranged over the first laser source 32 is a light source emitting two wavelengths for conventional DVDs and CDs. The second laser source 33 emits a light beam 21b (shown by broken lines) of a wavelength λ2 of 658 nm (for conventional DVDs) and a light beam 21c (shown by alternate long and short dash lines) of a wavelength λ3 of 785 nm (for conventional CDs) toward the left side in the figure.

The present embodiment has a structure wherein the laser source emitting the single wavelength and the laser source emitting the two wavelengths, and the detector are separately arranged. However, the structure of the embodiment is not limited to this structure. It is allowable to use a one-can laser source, wherein three laser sources are put in one can (or case), a one-chip laser source, wherein light-emitting points of three laser sources are formed on one chip, or a laser source module wherein laser sources and photodetectors are integrated.

In the present embodiment, both surfaces of a collimator lens 43 for receiving a light beam 21 a in the state of a divergent light flux, converting the light beam 21 a to parallel light and then emitting the parallel light are a first diffractive surface 17a and a second diffractive surface 17b. That is, the collimator lens 43 in the present embodiment also functions as the diffractive optical element 17.

First, the laser beam 21 a emitted from the first light source 32 is reflected on a beam splitter 14 having a substantially cubic shape, and then enters a beam splitter 15 arranged over the beam splitter 14 and similarly having a substantially cubic shape. On the other hand, the light beams 21b and 21c emitted from the second laser source 33 each enter the beam splitter 15 having the substantially cubic shape. The light beams 21a, 21b and 21c are integrated through the beam splitter 15 to travel along a common optical path, and come to have a common optical axis X extending to a recording medium.

Subsequently, the light beam 21 a is converted to parallel light through the collimator lens 43 arranged above, and is further converged through an objective lens 18 arranged over the lens 43. The objective lens 18 has a convex shape mainly downward (in the direction opposite to the recording medium) in the figure. When the light beam 21b transmits through the first diffractive surface 17a of the collimator lens 43, the divergence angle thereof is changed. Thereafter, the light beam 21b is converged through the objective lens 18. When the light beam 21 c transmits through the second diffractive surface 17b of the collimator lens 43, the divergence angle thereof is changed. Thereafter, the light beam 21c is converged through the objective lens 18. In this way, the light beams 21b and 21c enter the objective lens 18 after the divergence angels thereof are changed through the first diffractive surface 17a and the second diffractive surface 17b, respectively. This action cancels spherical aberration generated on the basis of a variation in the thickness of the protective layer of the recording medium and a variation in the wavelength. The beam splitters 14 and 15 are optical elements for separating or integrating light beams by a wavelength selective interference film.

The collimator lens 43 can be driven in the direction of the optical axis X by a monoaxial actuator 37. By driving the collimator lens 43 in the direction of the optical axis X, the spherical aberration of a spot formed on the information recording surface of a next-generation DVD is corrected. Examples of the cause of generating such spherical aberration include a scattering in the wavelength of the first laser source 32, based on a production error thereof; a change in the refractive index of the objective lens system or a refractive index distribution thereof, following temperature change; focus jump between information recording layers of a multi-layered disk such as a two-layer disk, or a four-layer disk; and a scattering in the thickness of the protective layer of the next-generation DVD or a thickness distribution thereof, based on a production error thereof.

Besides, a coating film having a transmittance selectivity for wavelengths is formed on the optical surface of the objective lens 18. This wavelength selectivity causes aperture restriction corresponding to the numerical aperture of DVDs or CDs. The technique for performing aperture restriction by forming a coating film having such wavelength selectivity on the surface of an objective lens is known. Thus, detailed description thereof will not be given.

The light beam 21a of the wavelength λ1 emitted from the first laser source 32 forms an image on the surface of a first recording medium 19a opposite to the incident surface of the medium 19a. The light beam 21b of the wavelength λ2 emitted from the second laser source 33 forms an image on the surface of a second recording medium 19b opposite to the incident surface of the medium 19b. Similarly, the light beam 21c of the wavelength λ3 emitted from the second laser source 33 forms an image on the surface of a third recording medium 19c opposite to the incident surface of the medium 19c.

The first recording medium 19a is a next-generation DVD, and thickness from the external surface to the recording surface (the thickness of a covering layer) is 0.1 mm. The second recording medium 19b is a conventional DVD, and thickness from the external surface to the recording surface is 0.6 mm. The third recording medium 19c is a CD, and thickness from the external surface to the recording surface is 1.2 mm. Fig. 11 shows each of the recording media by only the thickness thereof. For convenience of illustration, the recording media 19a, 19b and 19c are drawn together with one another. As a practical matter, however, they are separately used.

First, the light beam 21a of the wavelength λ1 reflected on the first recording media 19a travels conversely along the optical path, and then transmits through the beam splitters 15 and 14. The light beam 21a finally enters the photodetector 31, thereby detecting an optical signal herein. The same matter is applied to the light beam 21b of the wavelength λ2 reflected on the second recording medium 19b and the light beam 21c of the wavelength λ3 reflected on the third recording medium 19c.

In the present embodiment, the collimator lens 43 is caused to have a function as the diffractive optical element 17. However, the beam expander 36 in the present embodiment described in Fig. 7 may be caused to have a function as the diffractive optical element 17.

### [[Example 9]]

Here is described a numerical example of Example 9, based on the above-mentioned equations for obtaining L1 to L3 and H. The present example is suitable for the optical system of the optical pickup apparatus of the above-mentioned embodiment described with reference to Fig. 11, and includes a collimator lens having a function as a diffractive optical element and an objective lens. In this example, the collimator lens and the objective lens are each made of plastic.

The refractive index nd = 1.51 and the Abbe number vd = 56.5
λ1 = 408 nm
λ2 = 658 nm
λ3 = 785 nm
= 1.524243
n2 = 1.506415
n3 = 1.503235
= 778.27 nm
L2 = 1299.33 nm
L3 = 1559.91 nm

- First diffractive surface (M = 2):: H/L1 = 2
H/L2 = 1.198(≈ 1.2)
H/L3= 0.998 (≈ 1)
- Second diffractive surface (M = 5):: H/L1= 5
H /L2 = 2.995 (≈ 3)
H/L3= 2.495 (≈ 2.5)

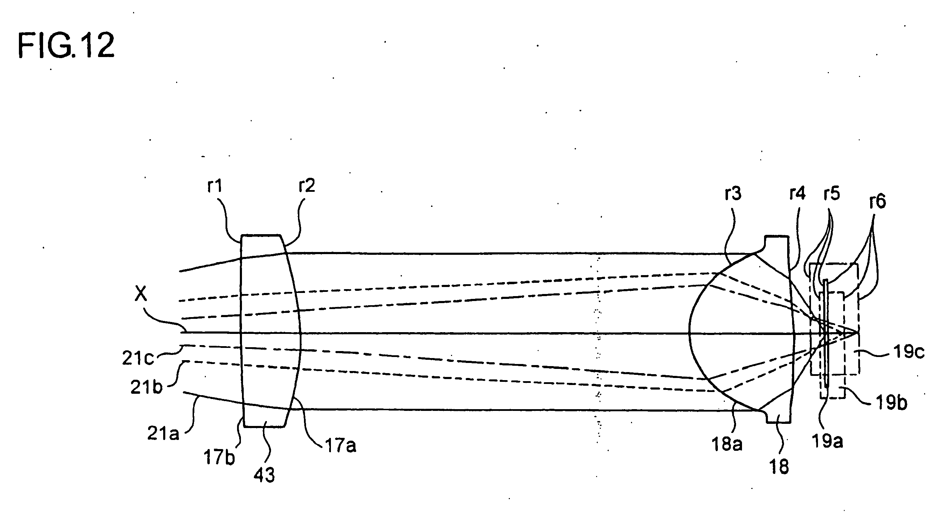

The following describes specific lens data in Example 9 as construction data. The construction of the present example is shown in Fig. 12. The lens data have the same construction as in Examples 7 and 8.

### << Lens Data of Example 9 >>

| | | | |
|---|---|---|---|
| Wavelength (nm): | λ1 = 408 | λ2 = 658 | λ3 = 785 |
| Entrance Pupil Diameter (mm): | 3.74 | 2.80 | 2.24 |
| Numerical Aperture: | 0.85 | 0.60 | 0.45 |
| t1 (mm): | 0.7187 | 0.6330 | 0.4213 |
| t2 (mm): | 0.0875 | 0.6000 | 1.2000 |

| [Surface number & Radius of Curvature] OBJ (Light-Emitting Point) | [Axial Distance] [N1] | | [N₂] | [N3] | [Nd] | [vd] |
|---|---|---|---|---|---|---|
| | 9.0967 | | | | | |
| r1 = 58.0520 | 1.5000 | 1.5242 | 1.5064 | 1.5032 | 1.5091 | 56.5 |
| r2 =-5.7117 | 10.0000 | | | | | |
| STO (Stop) | 0.0000 | | | | | |
| r3 = 1.4492 | 2.6200 | 1.5596 | 1.5406 | 1.5372 | 1.5435 | 56.3 |
| r4 = -2.8750 | t1 | | | | | |
| r5 = ∞ | t2 | 1.6211 | 1.5798 | 1.5733 | 1.5855 | 30.0 |
| r6 = ∞ | | | | | | |

### [Aspherical Coefficients of First Surface (r1)]

K = -0.14266 × 10³
A4 = 0.0
A6 = 0.0
A8 = 0.0
A10 = 0.0
A12 = 0.0
A14 = 0.0
A16 = 0.0
A18 = 0.0
A20 = 0.0

### [Aspherical Coefficients of Second Surface (r2)]

K = -0.7617
A4 = -0.1099 × 10⁻³
A6 = 0.0
A8 = 0.0
A10=0.0
A12 = 0.0
A14 = 0.0
A16 = 0.0
A18 = 0.0
A20 = 0.0

### [Aspherical Coefficients of Third Surface (r3)]

K = -0.65249
A4 = 0.77549 × 10⁻²
A6 = 0.29588 × 10⁻³
A8 = 0.19226 × 10⁻²
A10 = -0.12294 × 10⁻²
A12 = 0.29138 × 10⁻³
A14 = 0.21569 × 10⁻³
A16 = -0.16850 × 10⁻³
A18 = 0.44948 × 10⁻⁴
A20 = -0.43471 × 10⁻⁵

### [Aspherical Coefficients of Fourth Surface (r4)]

K = -0.43576 × 10²
A4 = 0.97256 × 10⁻¹
A6 = -0.10617
A8 = 0.81819 × 10⁻¹
A10 = -0.41190 × 10⁻¹
A12 = 0.11458 × 10⁻¹
A14 = -0.13277 × 10⁻²
A16 = 0
A18 = 0
A20 = 0

### [Diffraction Order of First Surface (r1), Production Wavelength Thereof, and Diffractive Surface Coefficient Thereof]

n_{BD} = 0
n_{DVD} = 1
n_{CD} = 0
λ_{B} = 658 nm
B2 = 0.1000
B4 = 0.0
B6 = 0.0
B8 = 0.0
B10 = 0.0

### [Diffraction Order of Second Surface (r2), Production Wavelength Thereof, and Diffractive Surface Coefficient Thereof]

n_{BD} = 0
n_{DVD} = 0
n_{CD} = 1
λ_{B} = 785 nm
B2 = 0.2350 × 10⁻¹
B4 = 0.0
B6 = 0.0
B8 = 0.0
B10=0.0

As the materials of the diffractive optical element and the objective lens, any optical resins and optical glass can be used. The optical resin which can be used is typically as follows.

The optical resin may be homopolymer or copolymer resin. Examples of a cyclic olefin which constitutes the homopolymer or copolymer resin include cyclic olefins each represented by the following general formula (1) or (3): 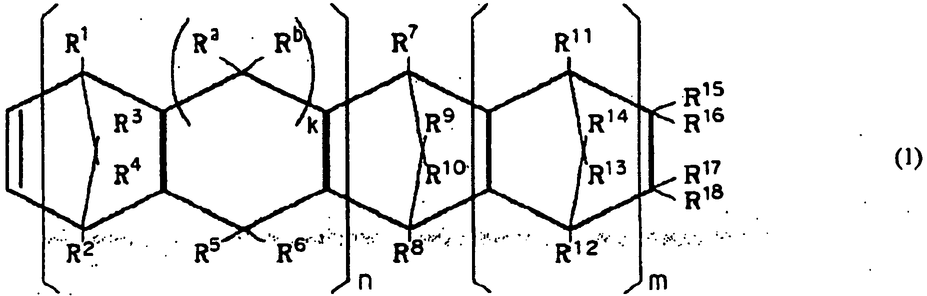 wherein n is 0 or 1, m is 0 or a positive integer, k is 0 or 1 (and the ring represented by use of k is a 6-membered ring when k is 1, and this ring is a 5-membered ring when k is 0), R¹ to R¹⁸, R^{a} and R^{b} each independently represent a hydrogen atom, a halogen atom or a hydrocarbon group. The halogen atom is a fluorine atom, a chlorine atom, a bromine atom or iodine atom.

The hydrocarbon group is usually an alkyl group having 1 to 20 carbon atoms, a halogenated alkyl group having 1 to 20 carbon atoms, a cycloalkyl group having 3 to 15 carbon atoms, or an aromatic hydrocarbon group. Specifically, examples of the alkyl group include methyl, ethyl, propyl, isopropyl, amyl, hexyl, octyl, decyl, dodecyl and octadecyl groups. These alkyl groups may be substituted with a halogen atom. An example of the cycloalkyl group is a cyclohexyl group. Examples of the aromatic hydrocarbon group include phenyl and naphthyl groups.

In the general formula (1), R¹⁵ and R¹⁶, R¹⁷ and R¹⁸, R¹⁵ and R¹⁷, R¹⁶ and R¹⁸, R¹⁵ and R¹⁸, or R¹⁶ and R¹⁷ may be bonded to each other (or combined with each other) to form a monocyclic group or a polycyclic group. The thus formed monocycle or polycycle may have a double bond. Specific examples of the monocycle or polycycle include the following:

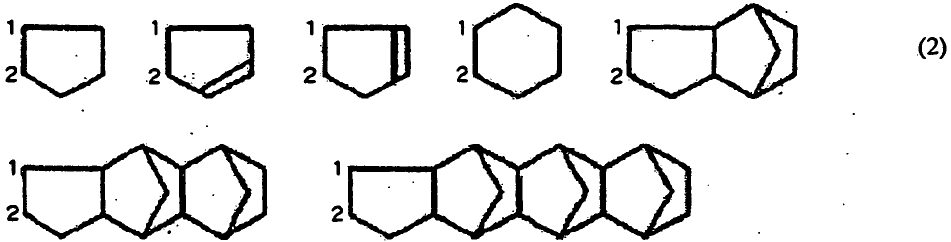

In the above-mentioned examples, the carbon atom to which number 1 or 2 is attached represents a carbon atom bonded to R¹⁵ (R¹⁶) or R¹⁷ (R¹⁸), respectively, in the general formula (1). R¹⁵ and R¹⁶, or R¹⁷ and R¹⁸ may form an alkylidene group. This alkylidene group is usually an alkylidene group having 2 to 20 carbon atoms. Specific examples of the alkylidene group include ethylidene, propylidene and isopropylidene groups. 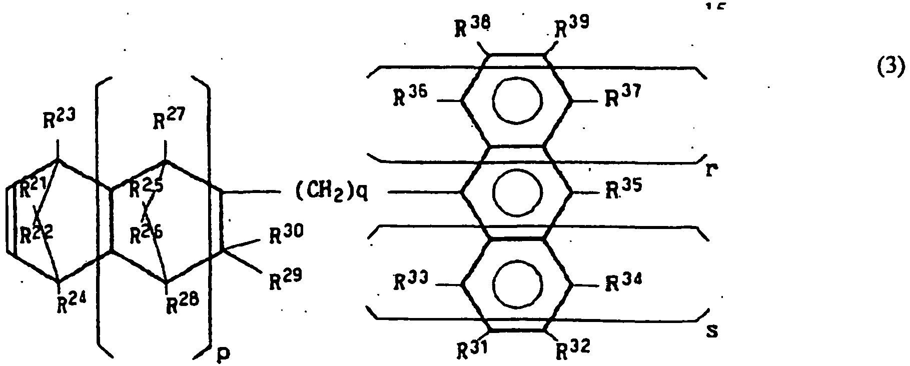 wherein p and q are each independently 0 or a positive integer, r and s are each independently 0, 1, or 2. In addition, R²¹ to R³⁹ each independently represent a hydrogen atom, a halogen atom, a hydrocarbon group, or an alkoxy group. The halogen atom referred to herein is equal to the halogen atom in the general formula (1).

The hydrocarbon group is usually an alkyl group having 1 to 20 carbon atoms, a cycloalkyl group having 3 to 15 carbon atoms, or an aromatic hydrocarbon group. Specifically, examples of the alkyl group include methyl, ethyl, propyl, isopropyl, amyl, hexyl, octyl, decyl, dodecyl and octadecyl groups. These alkyl groups may be substituted with a halogen atom.

An example of the cycloalkyl group is a cyclohexyl group. Examples of the aromatic hydrocarbon group include aryl and aralkyl groups. Specific examples thereof include phenyl, tolyl, naphthyl, benzyl, and phenylethyl groups. Examples of the alkoxy group include methoxy, ethoxy and propoxy groups.

The carbon atom to which R²⁹ and R³⁰ are bonded, and the carbon atom to which R³³ or R³¹ is bonded may be bonded directly or through an alkylene group having 1 to 3 carbon atoms to each other. That is, in the case that the two carbon atoms are bonded through the alkylene group to each other, R²⁹ and R³³, or R³⁰ and R³¹ are combined with each other to form any alkylene group selected from a methylene group (-CH₂-), an ethylene group (-CH₂CH₂-), and a propylene group (-CH₂CH₂CH₂-).

When r and s are each zero, R³⁵ and R³² or R³⁵ and R³⁹ may be bonded to each other to form a monocyclic or polycyclic aromatic ring. Specifically, when r and s are each zero, examples of the ring formed from R³⁵ and R³² include the following aromatic rings: 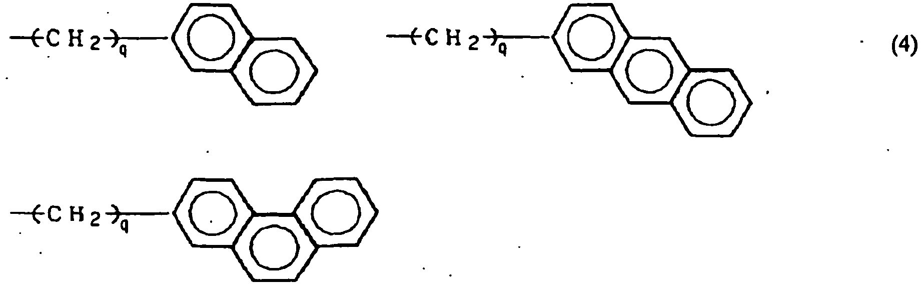 wherein q is equal to q in the general formula (3). Specific examples of the cyclic olefin represented by the general formula (1) or (3) include bicyclo-2-heptene derivatives (bicyclohept-2-ene derivatives), tricyclo-3-decene derivatives, tricyclo-3-undecene derivatives, tetracyclo-3-dodecene derivatives, pentacyclo-4-pentadecene derivatives, pentacyclopentadecadiene derivatives, pentacyclo-3-pentadecene derivatives, pentacyclo-3-hexadecene derivatives, pentacyclo-4-hexadecene derivatives, hexacyclo-4-heptadecene derivatives, heptacyclo-5-eicosene derivatives, heptacyclo-4-eicosene derivatives, heptacyclo-5-heneicosene derivatives, octacyclo-5-docosene derivatives, nonacyclo-5-pentacosene derivatives, nonacyclo-6-hexacosene derivatives, cyclopentadiene-acenaphthylene adducts, 1,4-metano-1,4,4a,9a-tetrahydrofluorene derivatives, and 1,4-metano-1,4,4a,5,10,10a-hexahydroanthracene derivatives.

More specific examples of the above-mentioned cyclic olefin represented by the general formula (1) or (3) are shown below. 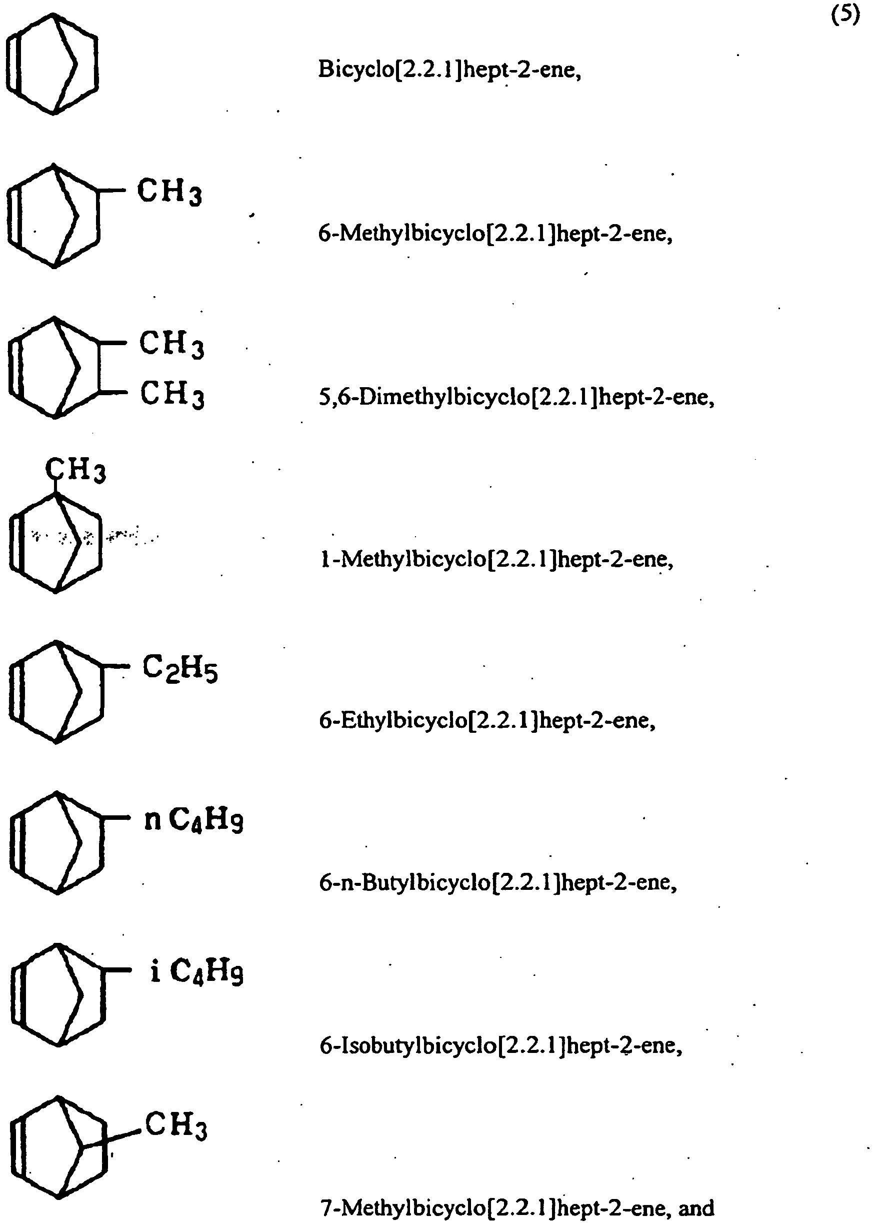 other bicyclo[2.2.1]hept-2-ene derivatives; 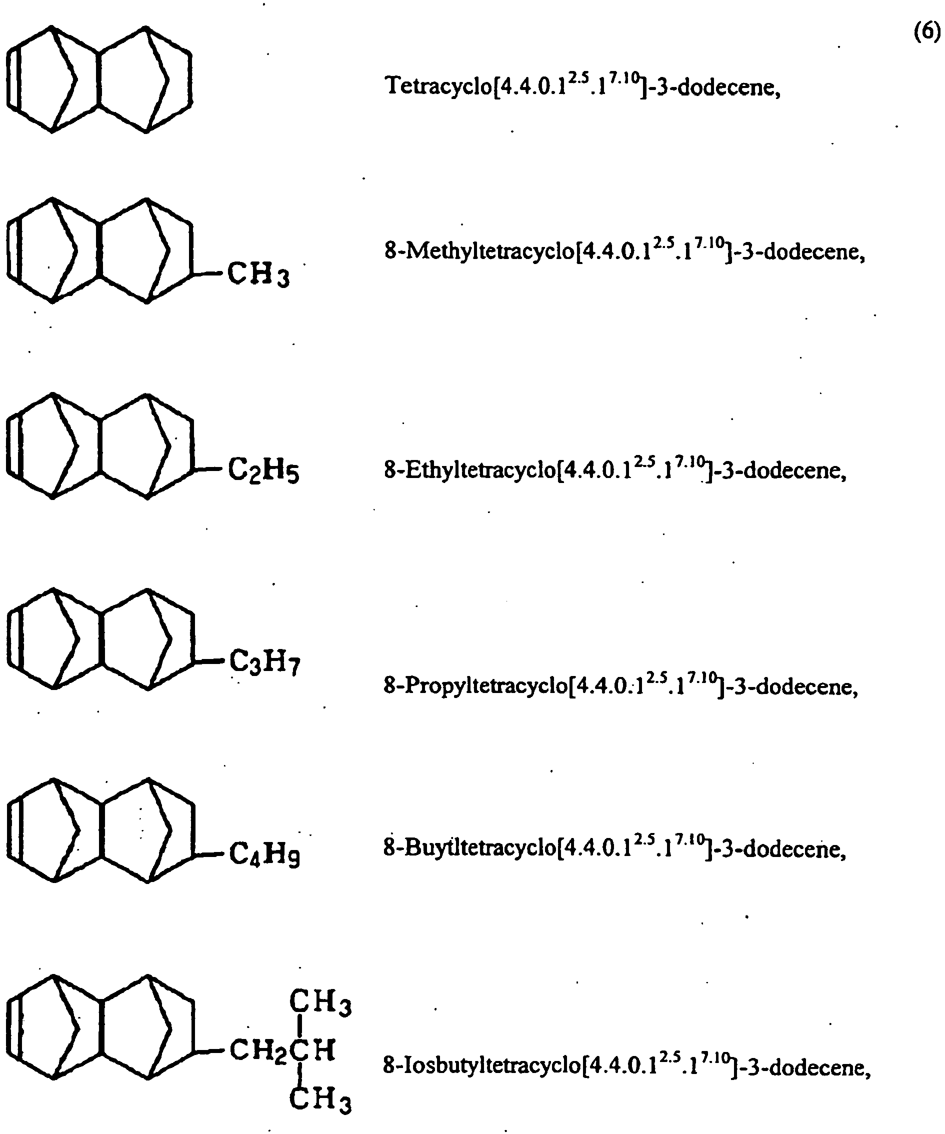 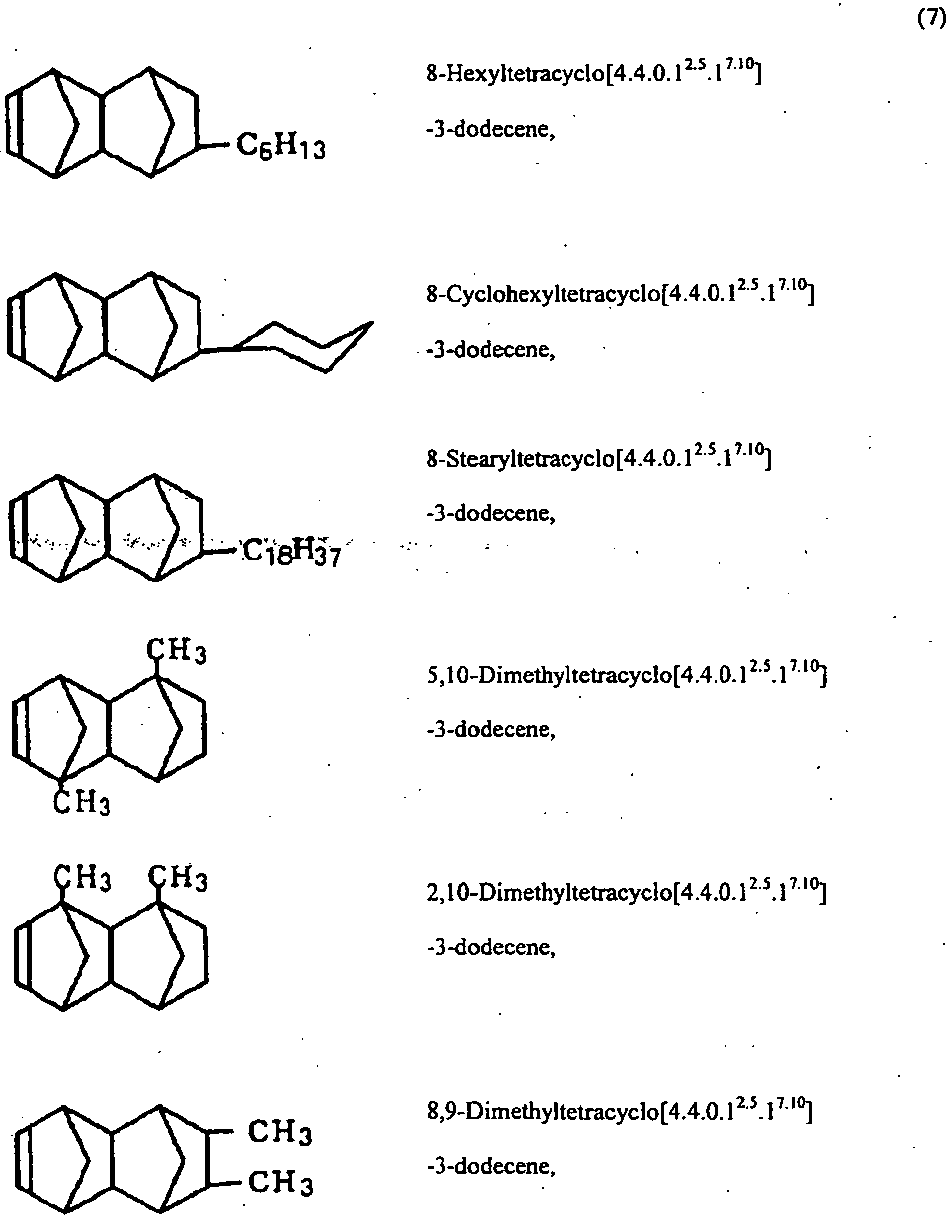 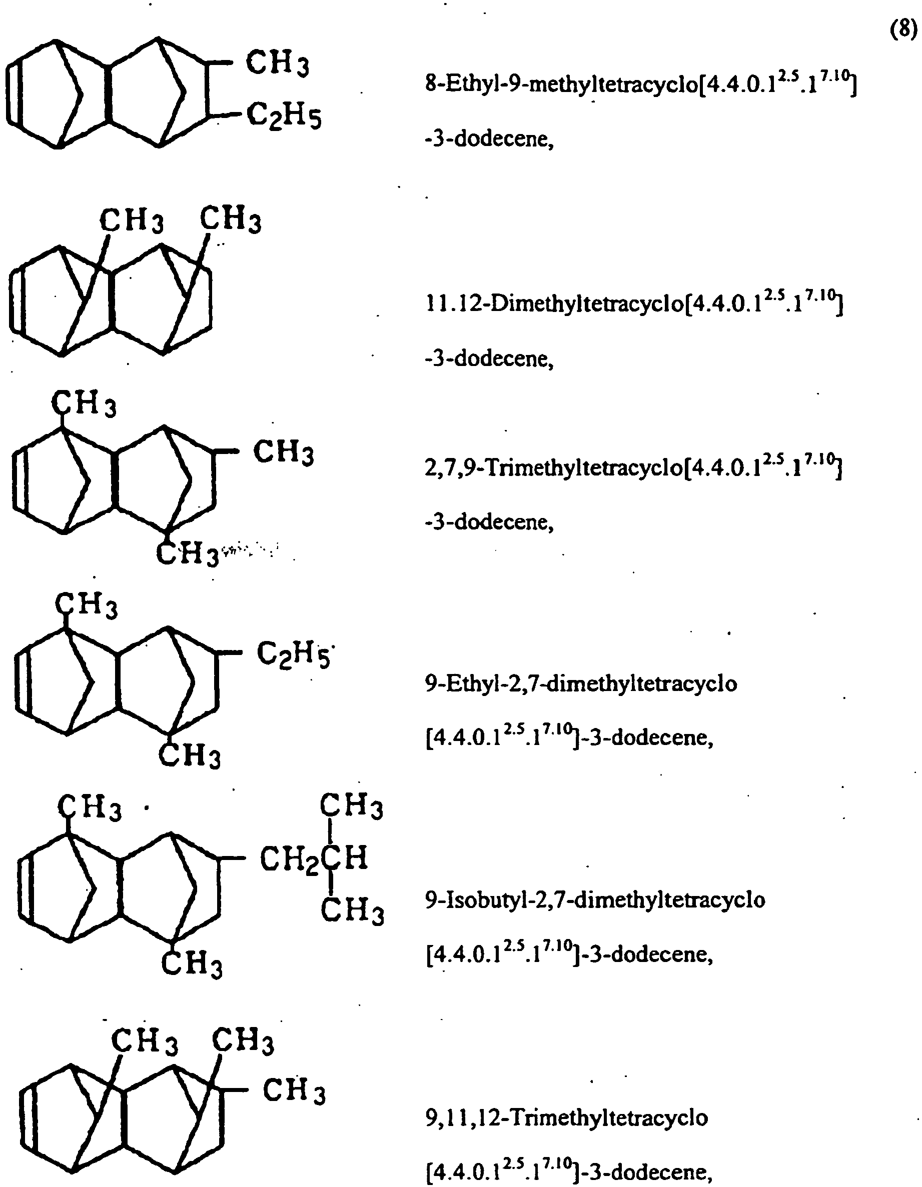 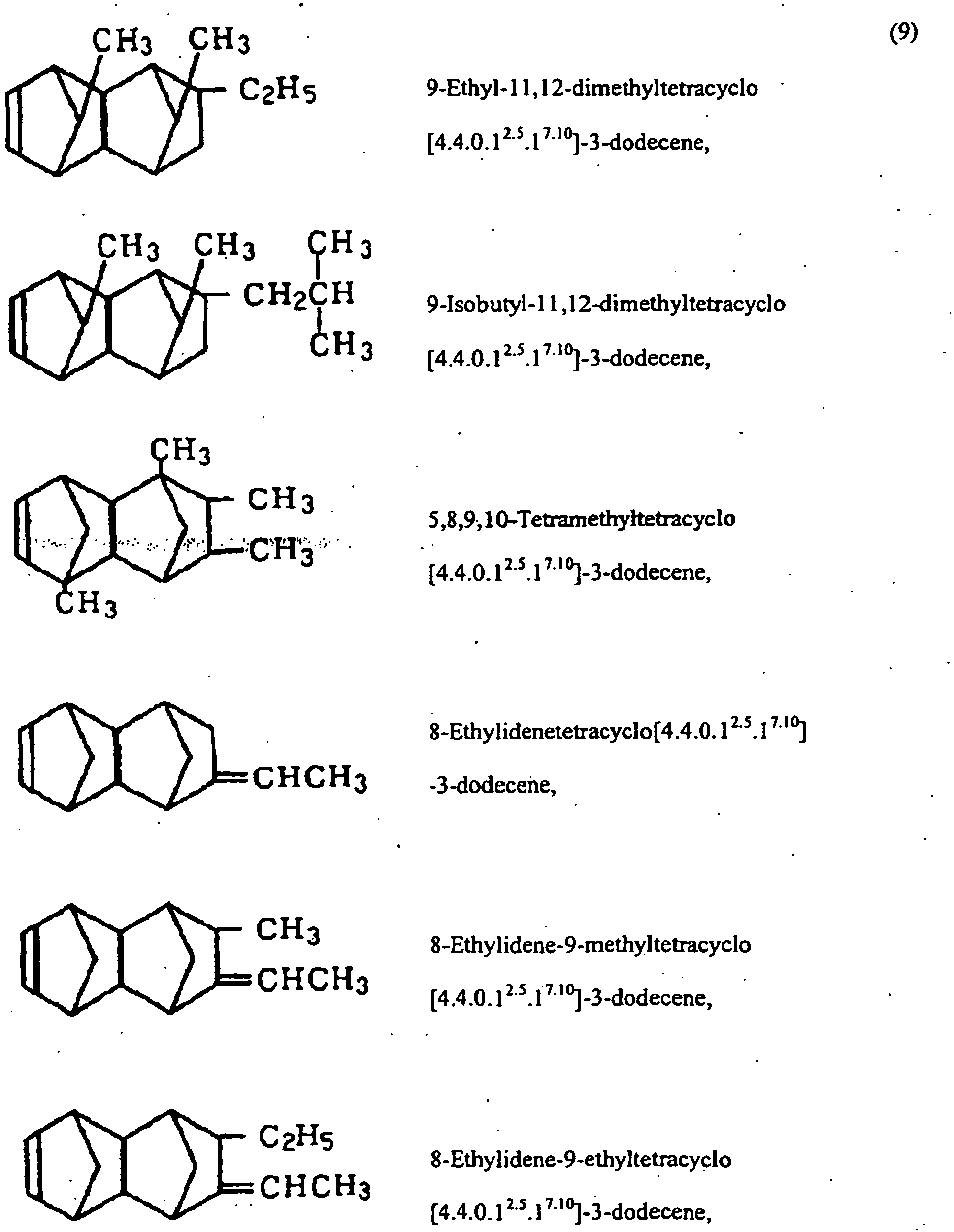 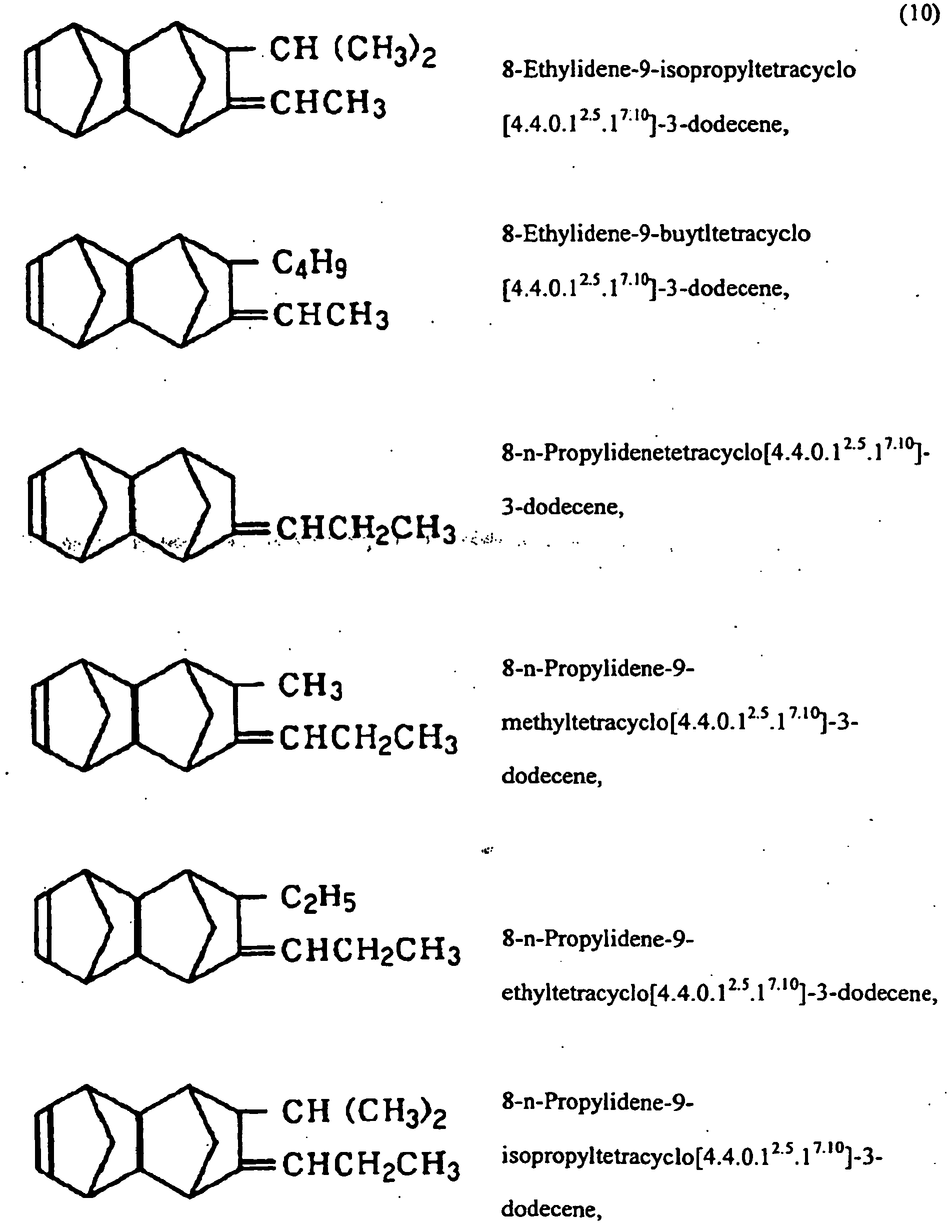 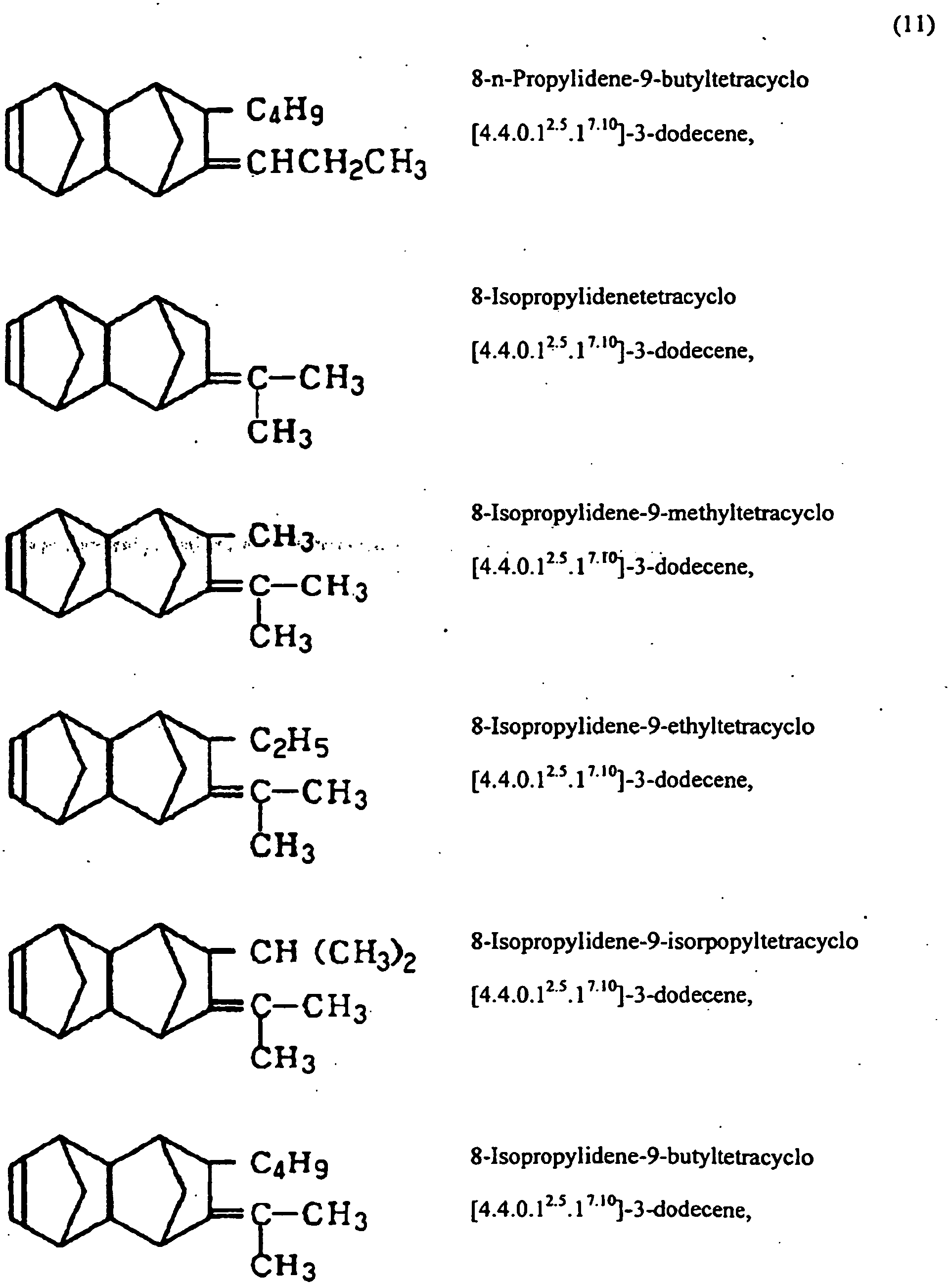 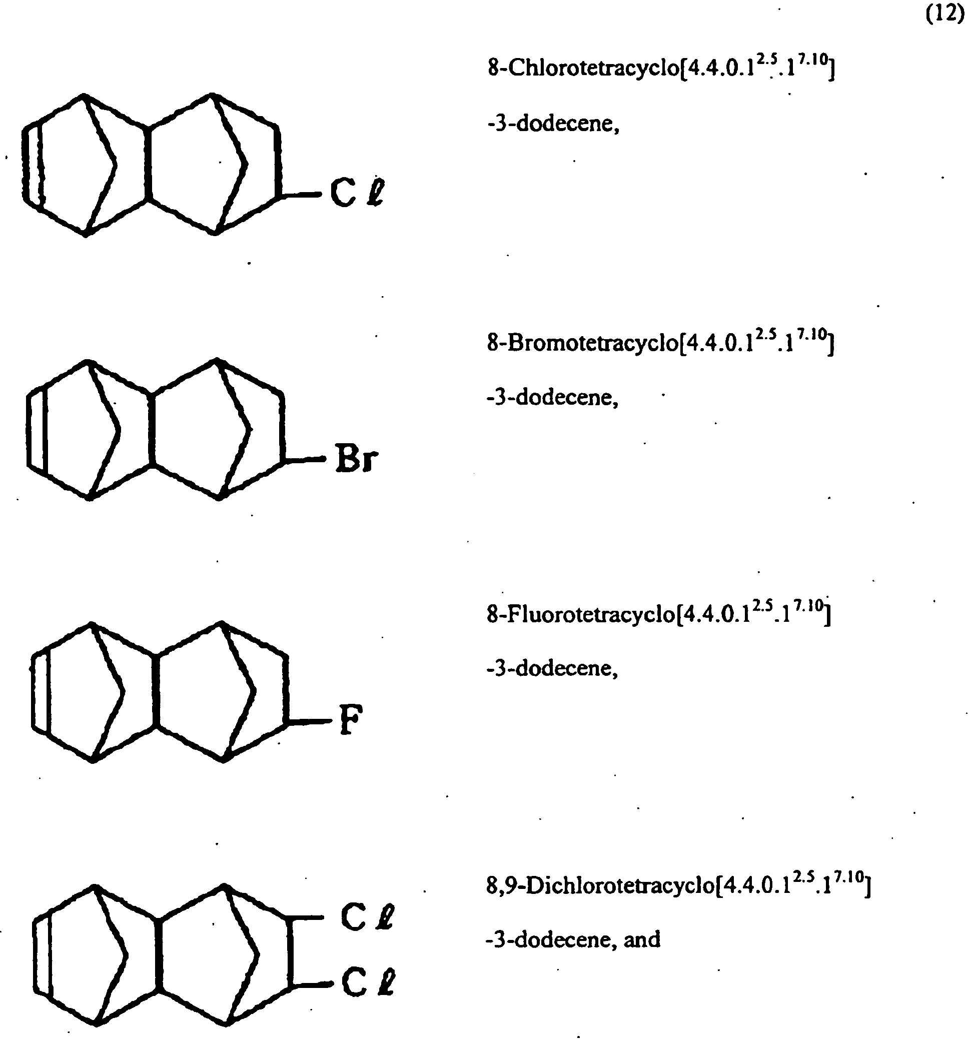 other tetracyclo[4.4.0.1^{2.5}.1^{7.10}]-3-dodecene derivatives; 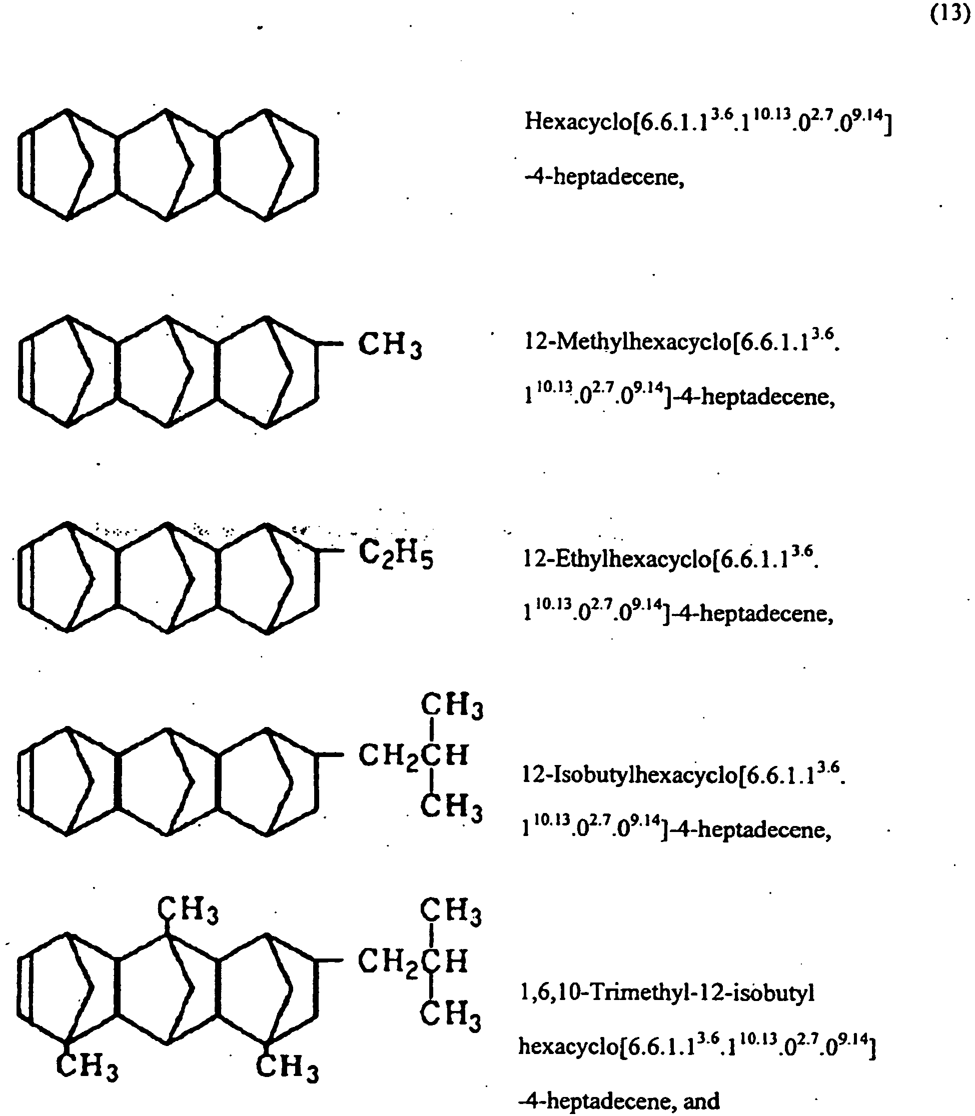 other hexacyclo[6.6.1.1^{3.6}.1^{10.13}.0^{2.7}.0^{9.14}]-4-heptadecene derivatives; 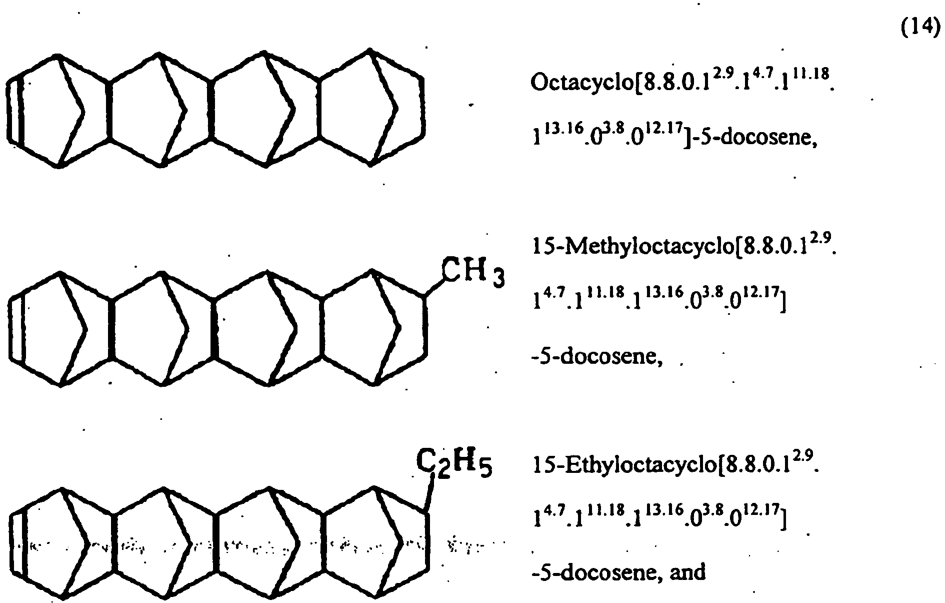 other octacyclo[8.8.0.1^{2.9}.1^{4.7}.1^{11.18}.1.^{13.16}.0^{3.8}.0^{12.17}] -5-docosene derivatives; 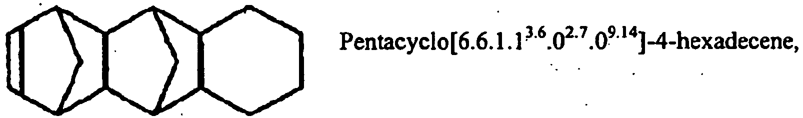 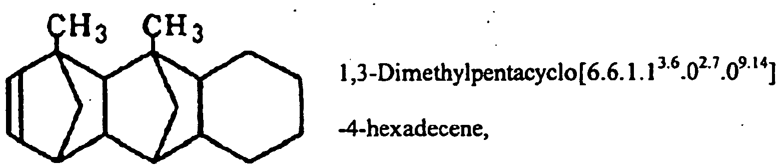 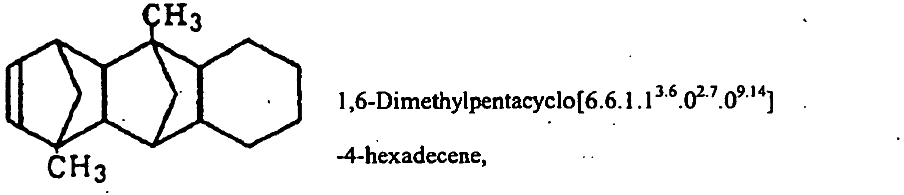 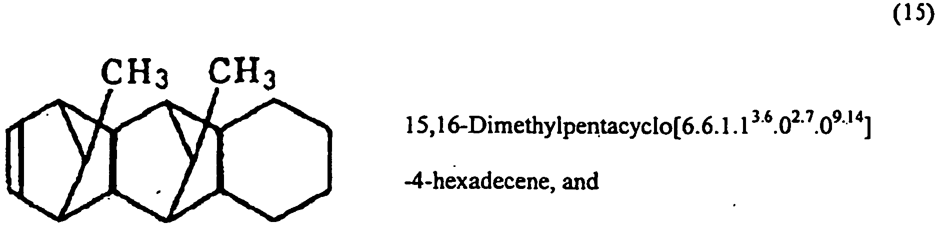 other pentacyclo[6.6.1.1^{3.6}.0^{2.7}.0^{9.14}]-4-hexadecene derivatives; 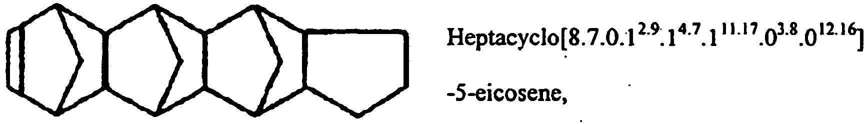 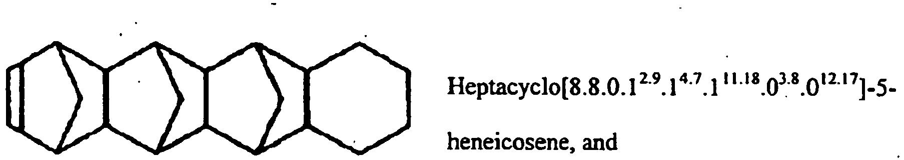 other heptacyclo-5-eicosene derivatives, or heptacyclo-5-heneicosene derivatives; 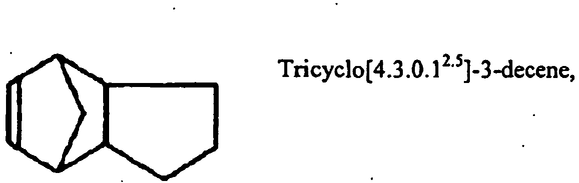 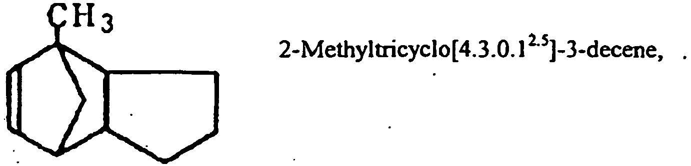 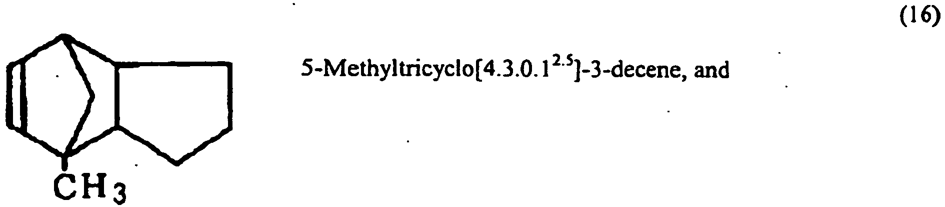 other tricyclo[4.3.0.1^{2.5}]-3-decene derivatives; 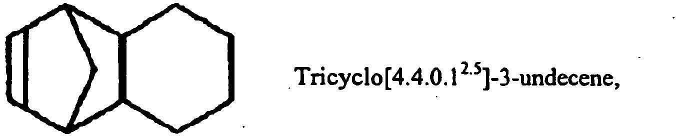 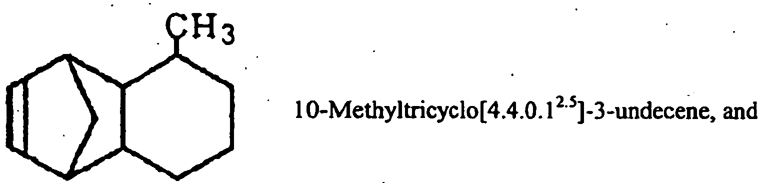 other tricyclo[4.4.0.1^{2.5}]-3-undecene derivatives; 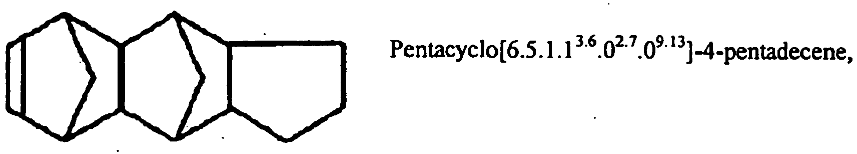 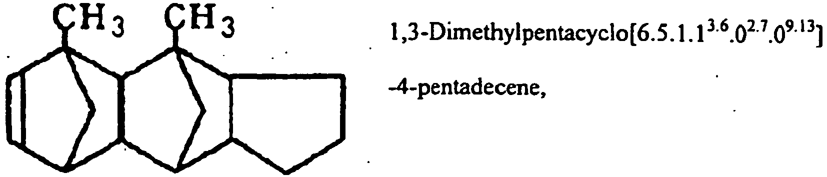 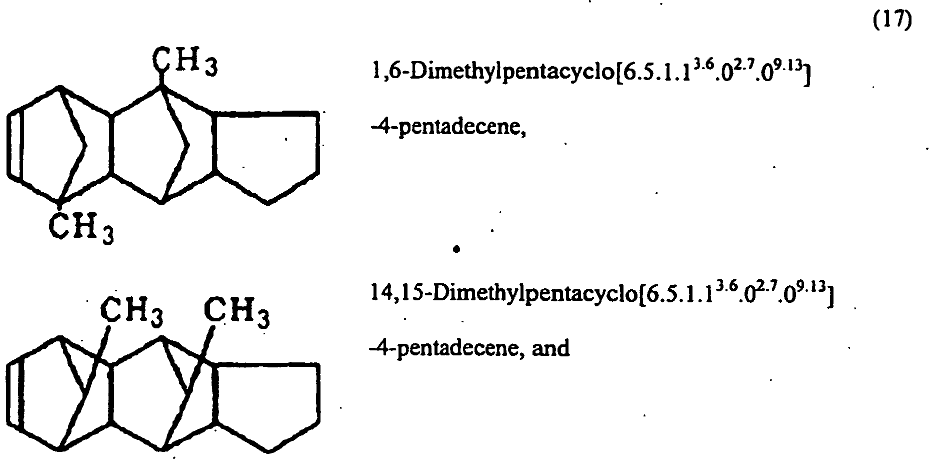 other pentacyclo[6.5.1.1^{3.6}.0^{2.7}.0^{9.13}]-4-pentadecene derivatives; 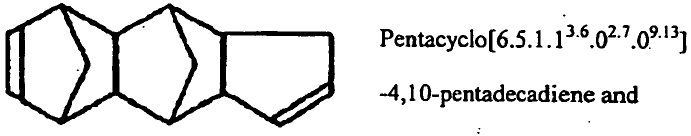 other diene compounds; 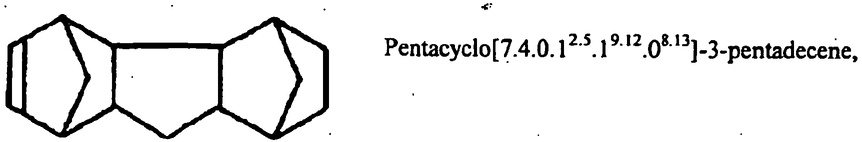 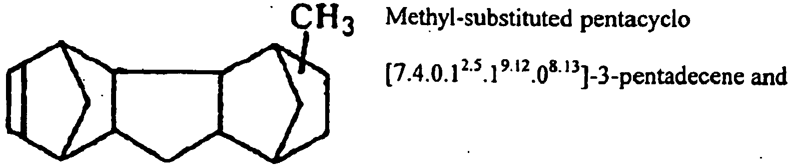 other pentacyclo[7.4.0.1^{2.5}1^{9.12}.0^{8.13}]-3-pentadecene derivatives; 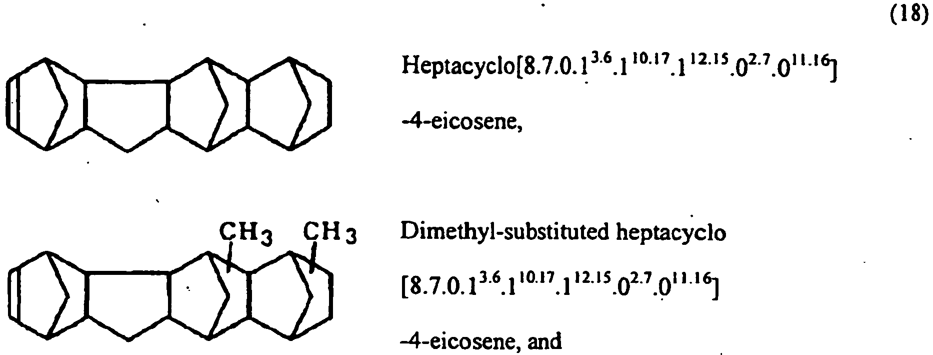 other heptacyclo[8.7.0.1^{3.6}.1^{10.17}.1^{12.15}.0^{2.7}.0^{11.16}]-4-eicosene derivatives; 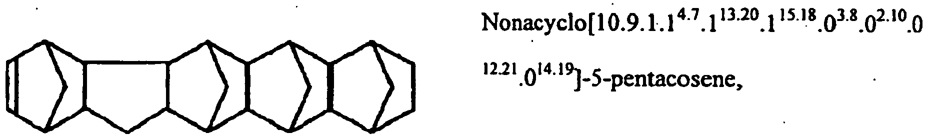 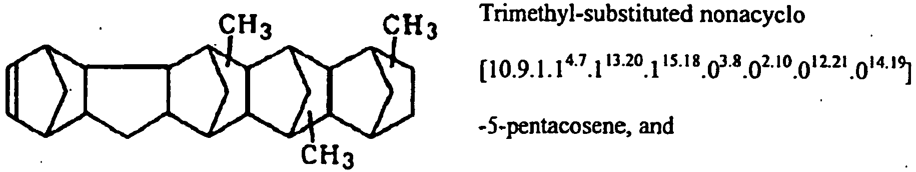 other nonacyclo[10.9.1.1^{4.7}.1^{13.20}.1 ^{15.18}.0^{3.8}.0^{2.10}.0^{12.21}.0^{14.19}]-5-pentacosene derivatives; 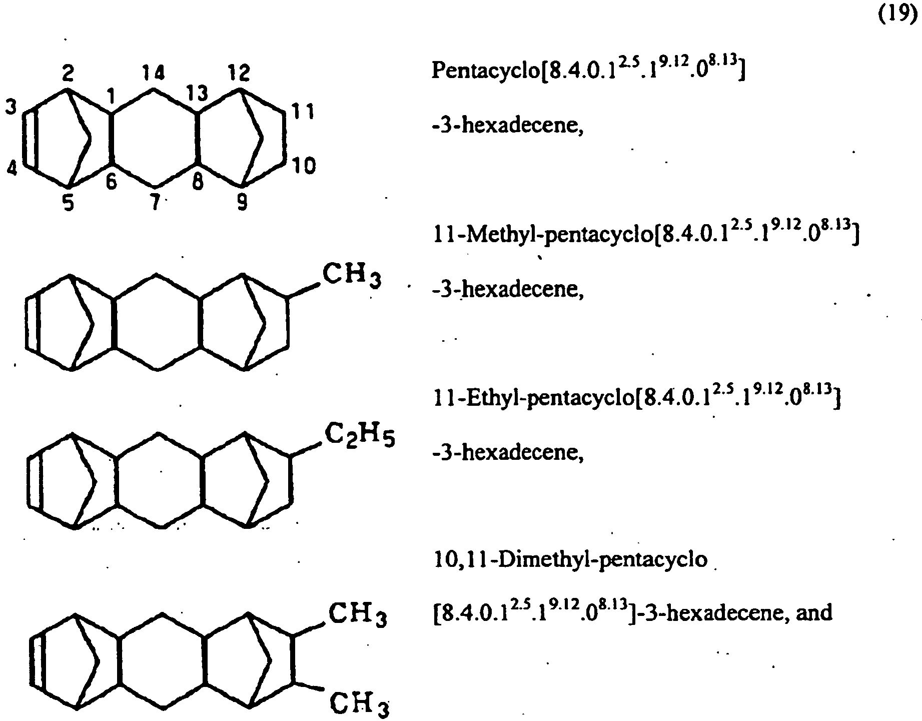 other pentacyclo[8.4.0.1^{2.5}.1^{9.12}.0^{8.13}]-3-hexadecene derivatives; 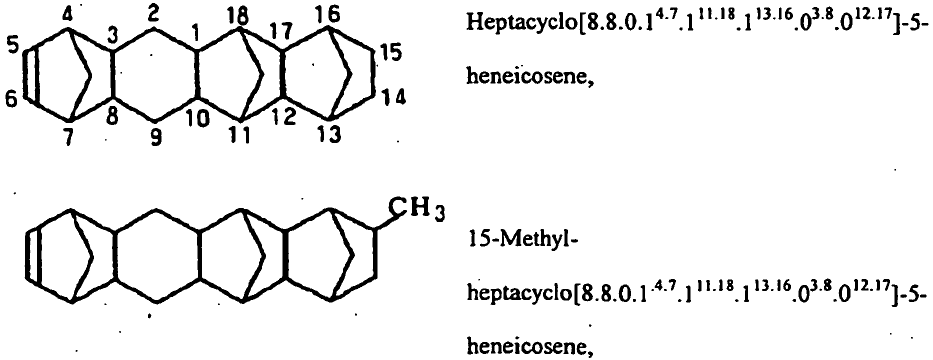 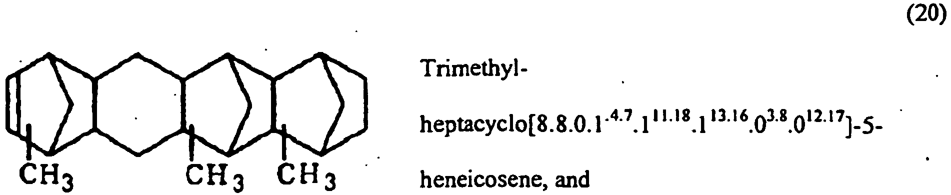 other heptacyclo[8.8.0.1.^{4.7}.1^{11.18}.1^{13.16}.0^{3.8}.0^{12.17}]-5-heneicosene derivatives; 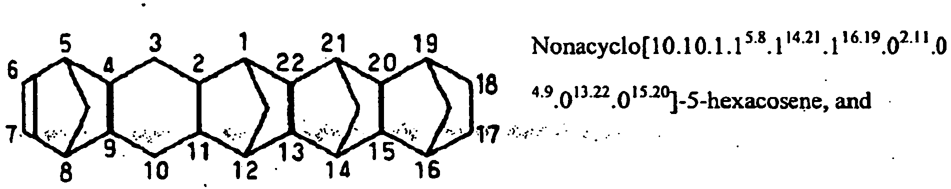 other nonacyclo[10.10.1.1^{5.8}.1^{14.21}.1^{16.19}.0^{2.11}.0^{4.9}.0^{13.22}.0^{15.20}]-5-hexacosene derivatives;

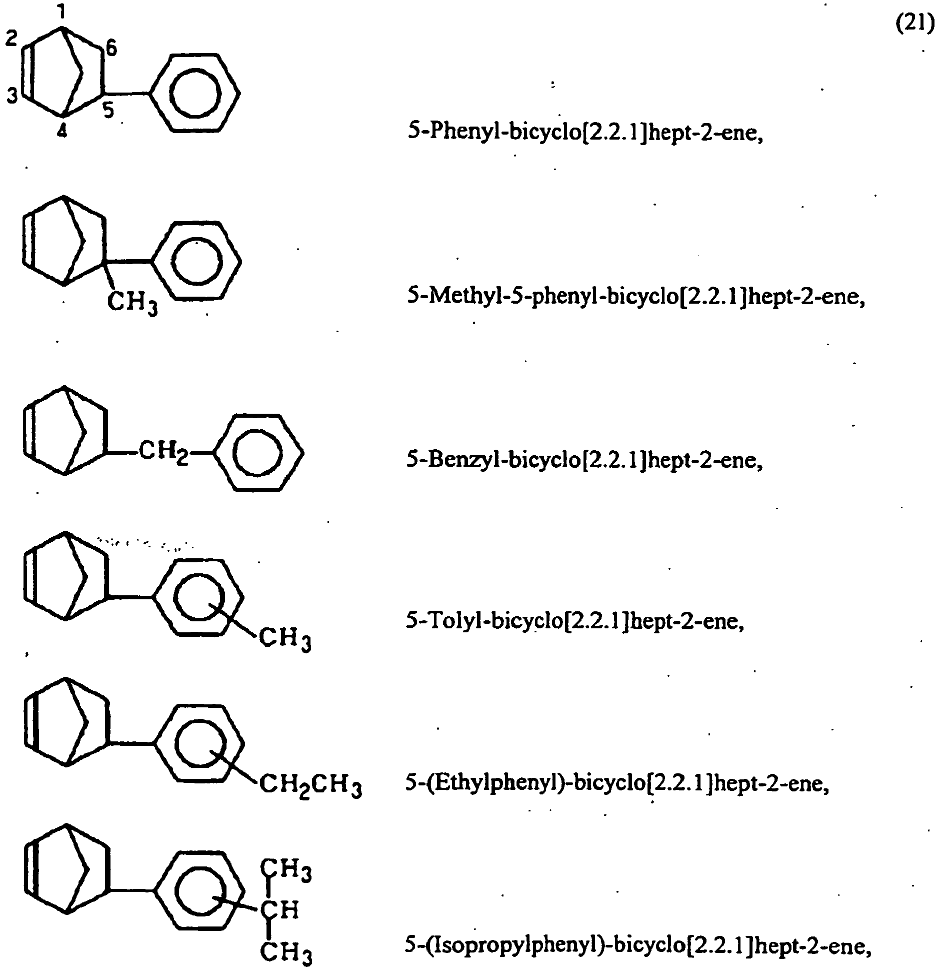

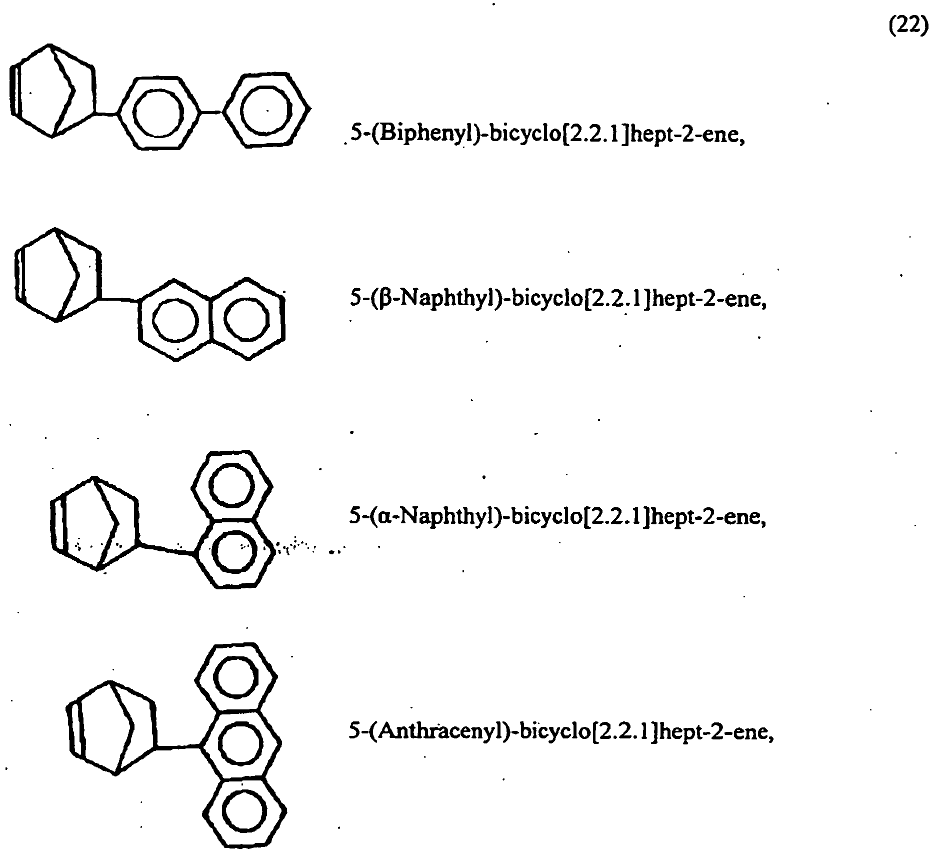

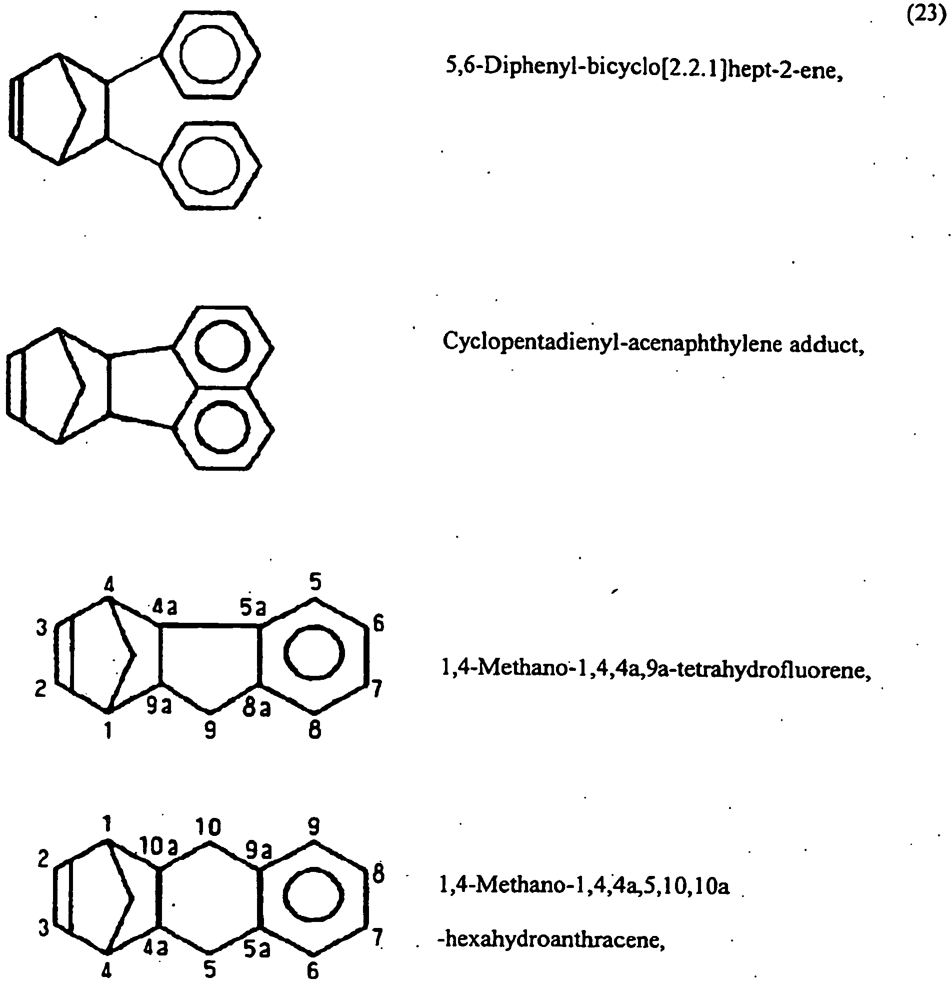

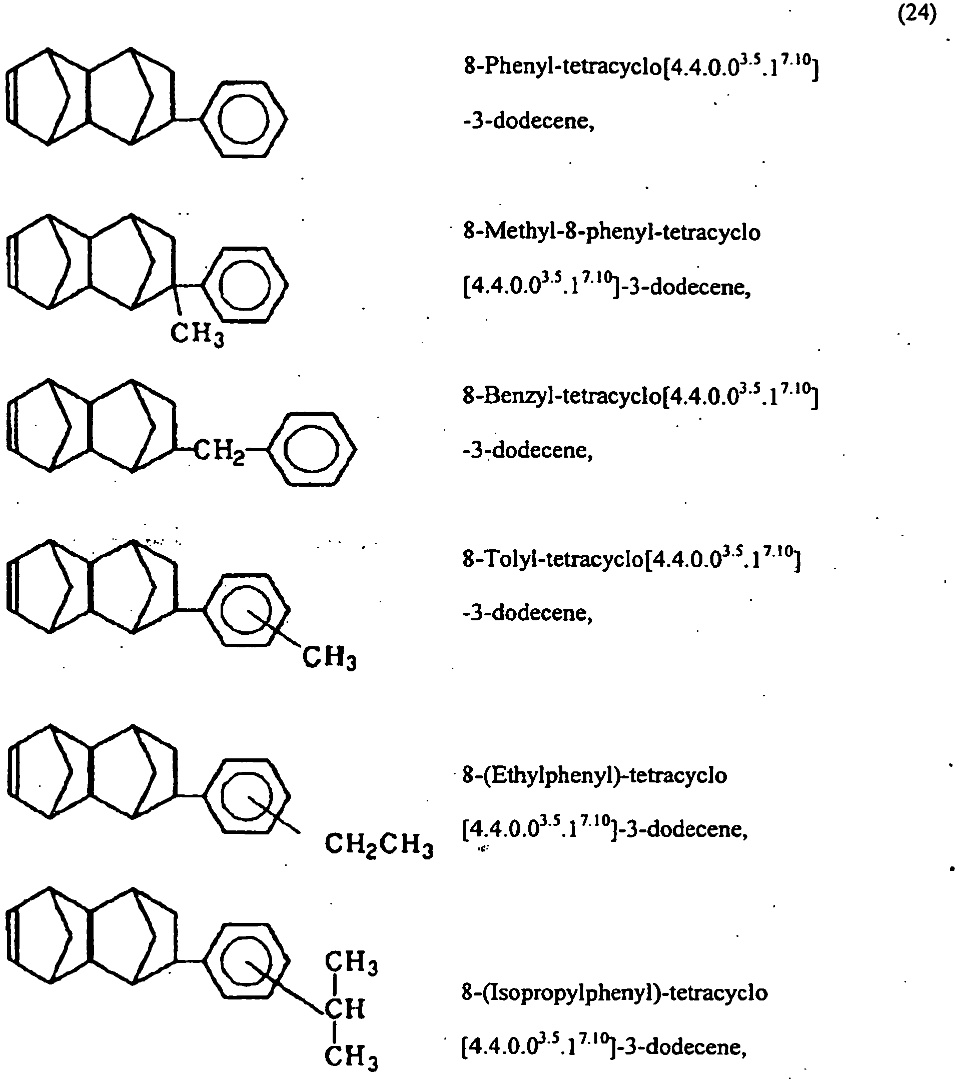

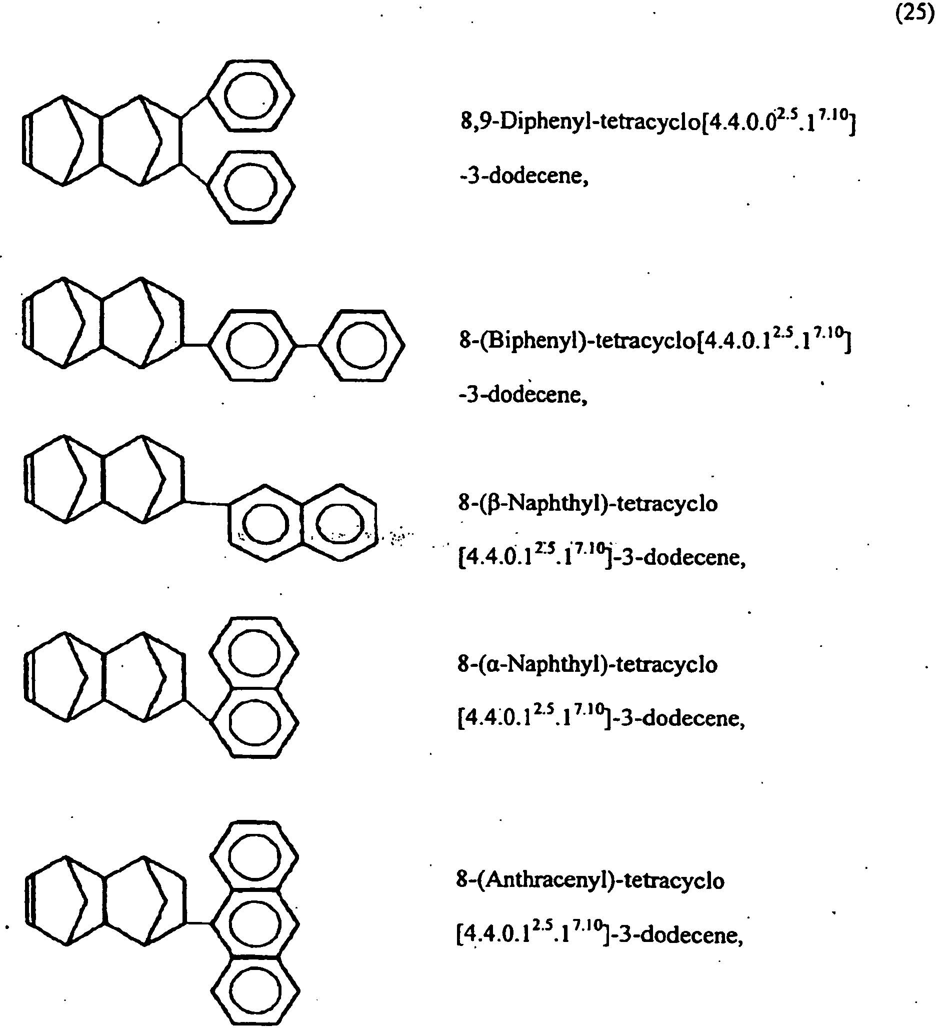

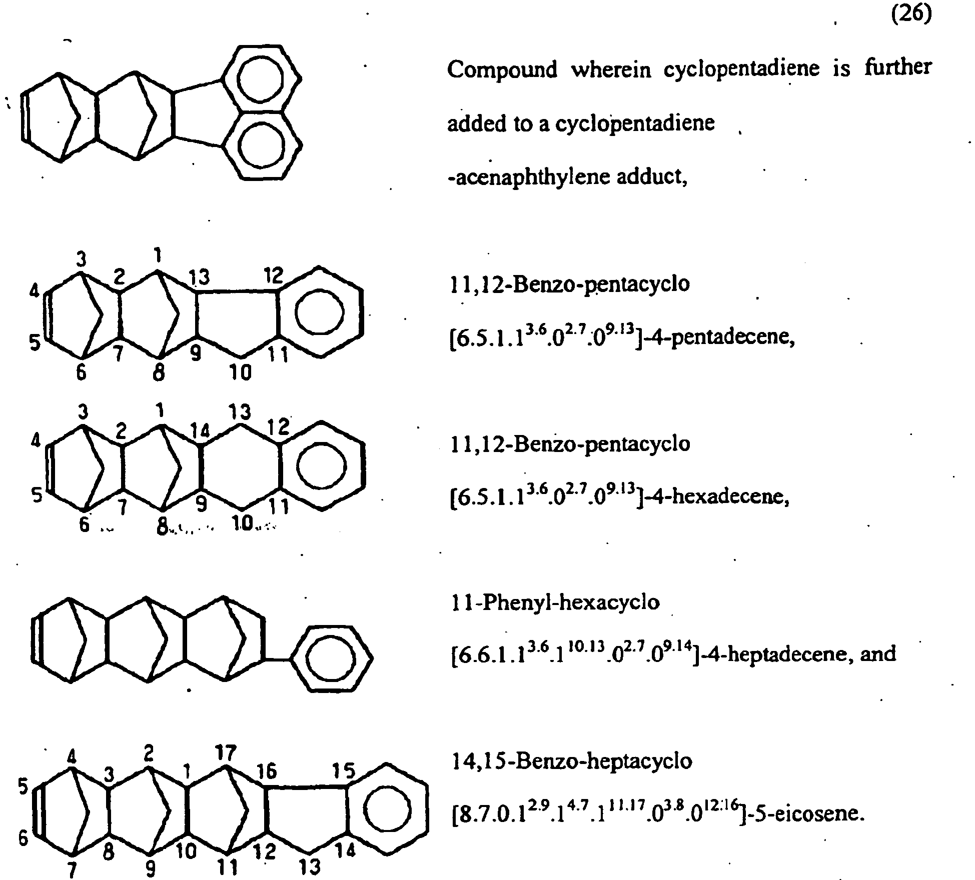

Examples of an acyclic olefin which constitutes the copolymer include linear α-olefins such as ethylene, propylene, 1-butene, 1-pentene, 1-hexene, 1-octene, 1-decene, 1-dodecene, 1-tetradecene, 1-hexadecene, 1-octadecene, and 1-eicosene; and branched α-olefins such as 4-methyl-1-pentene, 3-methyl-1-pentene, and 3-methyl-1-butene. Preferable are α-olefins having 2 to 20 carbon atoms. Such linear or branched α-olefins may be substituted with a substituent. They may be used alone or in combination of two or more thereof.

The substituent can be selected from various substituents without especial limitation. Typical examples thereof include alkyl, aryl, anilino, acylamino, sulfonamide, alkylthio, arylthio, alkenyl, cycloalkyl, cycloalkenyl, alkynyl, heterocyclic, alkoxy, aryloxy, heterocyclic oxy, siloxy, amino, alkylamino, imide, ureido, sulfamoylamino, alkoxycarbonylamino, aryloxycarbonylamino, alkoxycarbonyl, aryloxycarbonyl, heterocyclic thio, thioureido, hydroxyl and mercapto groups; spiro compound residues and bridged hydrocarbon compounds residues; sulfonyl, sulfinyl, sulfonyloxy, sulfamoyl, phosphoryl, carbamoyl, acyl, acyloxy, oxycarbonyl, carboxyl, cyano, nitro, halogen-substituted alkoxy, halogen-substituted aryloxy, pyrrolyl, and tetrazoyl groups; and halogen atoms.

The above-mentioned alkyl group preferably has 1 to 32 carbon atoms, and may be linear or branched. The aryl group is preferably a phenyl group. Examples of the acylamino group include alkylcarbonylamino and arylcarbonylamino groups. Examples of the sulfonamide group include alkylsulfonylamino and arylsulfonylamino groups. The alkyl and aryl components in the alkylthio and arylthio groups may be the above-mentioned alkyl and aryl groups, respectively. The alkenyl group preferably has 2 to 23 carbon atoms, and the cycloalkyl group preferably has 3 to 12 carbon atoms, more preferably 5 to 7 carbon atoms. The alkenyl group may be linear or branched. The cycloalkenyl group preferably has 3 to 12 carbon atoms, more preferably 5 to 7 carbon atoms.

The ureido group is preferably an alkyl ureido or aryl ureido group, and the sulfamonylamino group is preferably an alkylsulfamoylamino or arylsulfamoylamino group. The heterocyclic group is preferably a 5- to 7-membered cyclic group. Specific examples thereof include 2-furyl, 2-thienyl, 2-pyrimidinyl, and 2-benzothiazoyl. The heterocyclic group that is saturated is preferably a 5- to 7-membered cyclic group. Specific examples thereof include tetrahydropyranyl, and tetrahydrothiopyranyl. The heterocyclic oxy group preferably has a 5- to 7-membered heterocyclic group, example thereof including 3,4,5,6-tetrahydropyranyl-2-oxy and 1-phenyltetrazole-5-oxy. The heterocyclic thio group is preferably a 5- to 7-membered heterocyclic thio group, examples thereof including 2-pyridylthio, 2-benzothiazoylthio, and 2,4-diphenoxy-1,3,5-triazole-6-thio. Examples of the siloxy group include trimethylsiloxy, triethylsiloxy, and dimethylbutylsiloxy. Examples of the imide group include succinic imide, 3-heptadecylsuccinic imide, phthalimide, and glutalimide. Examples of the spiro compound residues include spiro [3.3] heptane-1-yl. Examples of the bridged organic hydrocarbon compound residues include bicycle[2.2.1]heptane-1-yl, tricycle[3.3.1.13.7]decane-1-yl, and 7,7-dimethyl-bicyclo[2.2.1]heptane-1-yl.

Examples of the sulfonyl group include alkylsulfonyl, arylsulfonyl, halogen-substituted alkylsulfonyl, and halogen-substituted arylsulfonyl groups. Examples of the sulfinyl group include alkylsulfinyl and arylsulfinyl groups. Examples of the sulfonyloxy group include alkylsulfonyloxy and arylsulfonyloxy groups. Examples of the sulfamoyl group include N,N-dialkylsulfamoyl, N,N-diarylsulfamoyl, and N-alkyl-N-arylsulfamoyl groups. Examples of the phosphoryl group include alkoxyphosphoryl, aryloxyphosphoryl, alkylphosphoryl, and arylphosphoryl. Examples of the carbamoyl group include N,N-dialkylcarbamoyl, N,N-diarylcarbamoyl, and N-alkyl-N-arylcarbamoyl groups. Examples of the acyl group include alkylcarbonyl and arylcarbonyl groups. Examples of the acyloxy group include alkylcarbonyloxy groups. Examples of the oxycarbonyl group include alkoxycarbonyl, and aryloxycarbonyl groups. Examples of the halogen-substituted alkoxy group include α-halogen substituted alkoxy groups. Examples of the halogen substituted aryloxy group include tetrafluoroaryloxy and pentafluoroaryloxy groups. Examples of the pyrrolyl group include a 1-pyrrolyl group. Examples of the tetrazolyl include a 1-tetrazolyl group.

Besides the above-mentioned substituents, the following can be preferably used: trifluoromethyl, heptafluoro-i-propyl, nonylfluoro-t-butyl, tetrafluoroaryl, and pentafluoroaryl groups. These substituents may be substituted with a different substituent. The content of the acyclic monomer in the present copolymer is preferably 20 % or more by weight, more preferably from 25 % to 90 % (inclusive), even more preferably from 30 % to 85 % (inclusive) from the viewpoint of the formability or moldability of the copolymer.

The glass transition temperature (Tg) of the present homopolymer or copolymer is preferably from 80 to 250 °C, more preferably from 90 to 220 °C, most preferably from 100 to 200 °C. The number-average molecular weight (Mn) thereof is preferably from 10,000 to 1,000,000, more preferably from 20,000 to 500,000, most preferably from 50,000 to 30,000 as a value relative to polystyrene standards which is measured by gel permeation chromatography (GPC). When the molecular weight distribution is represented by the ratio between the Mn and the weight-average molecular weight (Mw) thereof relative to polystyrene standards which is measured by GPC in the above-mentioned manner, the ratio Mw/Mn is preferably 2.0 or less. If the ratio Mw/Mn is too large, the mechanical strength or heat resistance of the molded body falls. In particular, in order to improve the mechanical strength, heat resistance and molding-workability, the ratio Mw/Mn is more preferably 1.8 or less, even more preferably 1.6 or less. The temperature for the polymerization is selected in the range from 0 to 200 °C, preferably from 50 to 150 °C. The pressure is selected from the range of 1 to 100 atmospheres. By causing hydrogen to be present in the polymerization zone, the molecular weight of the generated polymer can easily be adjusted.

The olefin resin used in the invention may be a polymer synthesized from a single-component cyclic monomer, and is preferably a copolymer selected from copolymers synthesized using two or more cyclic monomers, or a cyclic monomer and an acyclic monomer. This copolymer may be produced using 100 or more kinds of monomers, and is produced preferably using 10 or less kinds of monomers, more preferably using 5 or less kinds of monomers from the viewpoint of production efficiency and polymerization stability. The resultant copolymer may be a crystalline polymer or amorphous polymer, and is preferably an amorphous polymer.

The method for hydrogenating carbon-carbon unsaturated bonds, which may be ones in aromatic rings, in the homopolymer or copolymer used in the invention may be a known method. In particular, in order to make the rate of the hydrogenation high and decrease polymer chain cleavage reaction caused at the same time when the hydrogenation reaction is caused, it is preferable to conduct the hydrogenation reaction using a catalyst containing at least one metal selected from nickel, cobalt, iron, titanium, rhodium, palladium, platinum, ruthenium, and rhenium in organic solvent. The hydrogenation catalyst may be a heterogeneous catalyst or homogeneous catalyst. The heterogeneous catalyst can be used in a metal or metal compound state, or in the state that the catalyst is carried on a suitable carrier.

Examples of the carrier include activated carbon, silica, alumina, calcium carbide, titania, magnesia, zirconia, diatomaceous earth, and silicon carbide. About the carried amount of the catalyst, the metal content by percentage in the total of the catalyst is usually from 0.01 to 80 % by weight, preferably from 0.05 to 60 % by weight. The homogeneous catalyst may be a catalyst wherein a nickel, cobalt, titanium or iron compound is combined with an organic metal compound (such as an organic aluminum compound or an organic lithium compound), or an organic metal complex catalyst comprising rhodium, palladium, platinum, ruthenium, rhenium or the like. These hydrogenation catalysts may be used alone or in combination of two or more thereof. The amount of the used catalyst is usually from 0.01 to 100 parts by weight, preferably from 0.05 to 50 parts by weight, more preferably from 0.1 to 30 parts by weight for 100 parts by weight of the polymer.

The hydrogenation reaction temperature is usually from 0 to 300 °C, preferably from room temperature to 250 °C, even more preferably from 50 to 200 °C. The hydrogen pressure is usually from 0.1 to 30 MPa, preferably from 1 to 20 MPa, even more preferably from 2 to 15 MPa. The hydrogenation rate of the resultant hydrogenated product, which is measured by 1 H-NMR, is usually 90 % or more, preferably 95 % or more, even more preferably 97 % or more of the whole of the carbon-carbon unsaturated bonds in the main chain from the viewpoint of heat resistance and weather resistance. If the hydrogenation rate is low, optical properties (such as transmittance, low birefringence, and thermal stability) of the resultant polymer deteriorate.

The solvent used in the hydrogenation reaction of the homopolymer or copolymer used in the invention may be any solvent that is capable of dissolving the homopolymer or the copolymer and is not itself hydrogenated. Examples thereof include ethers such as tetrahydrofuran, diethyl ether, dibutyl ether, and dimethoxy ethane; aromatic hydrocarbons such as benzene, toluene, xylene and ethylbenzene; aliphatic hydrocarbons such as pentane, hexane and heptane; aliphatic cyclic hydrocarbons such as cyclopentane, cyclohexane, methylcyclohexane, dimethylcyclohexane and decalin; and halogenated hydrocarbons such as methylene dichloride, dichloroethane, dichloroethylene, tetrachloroethane, chlorobenzene and trichlorobenzene. These may be used alone or in the form of a mixture of two or more thereof.

The hydrogenated homopolymer or copolymer used in the invention can be produced by isolating a homopolymer or copolymer from a polymer solution and then dissolving the homopolymer or copolymer again in the above-mentioned solvent. For the production, it is allowable to adopt a method of adding the above-mentioned hydrogenation catalyst, which is composed of an organic metal complex and an organic aluminum compound, to a polymer solution without isolating any polymer from this solution, thereby conducting hydrogenation reaction. After the end of the hydrogenation reaction, the hydrogenation catalyst remaining in the polymer can be removed by a known method. Examples of the method include a method of an absorbing method by use of an absorbent; a method of adding an organic acid, such as lactic acid, a poor solvent and water to the solution containing a good solvent, and then keeping this system at room temperature or a raised temperature so as to extract and remove the remaining catalyst; a method of subjecting the solution or polymer slurry comprising a good solvent to catalytic treatment with a basic compound such as trimethylenediamine, aniline, pyridine, ethanediamide, or sodium hydroxide in a nitrogen or hydrogen gas atmosphere, subjecting the solution or slurry to catalytic treatment with an acidic compound such as acetic acid, citric acid, benzoic acid, or hydrochloric acid after the above-mentioned catalytic treatment or at the same time of the catalytic treatment, and then washing the resultant to remove the remaining catalyst.

The method for collecting the hydrogenated polymer from the solution of the hydrogenated homopolymer or copolymer used in the invention is not particularly limited, and may be a known method. Examples of the method include a method of discharging the reaction solution to a poor solvent which is being stirred so as to solidify the polymer, and then filtrating the solidified polymer; a method of collecting the polymer by centrifugation or decantation; a steam stripping method of blowing steam into the reaction solution to precipitate the hydrogenated polymer; and a method of removing the solvent directly from the reaction solution by heating or the like. When the above-mentioned hydrogenating method is used, a hydrogenation rate of 90 % or more can easily be attained. A hydrogenation rate of 95 % or more, in particular, a hydrogenation rate of 99 % or more can also be obtained. The thus-obtained hydrogenated homopolymer or copolymer is not easily oxidized and is a superior hydrogenated homopolymer or copolymer.

### (Process for Preparing Resin Composition)

A process for preparing a resin composition used in the invention is described hereinafter. This resin composition is preferably subjected to a specific working treatment before the step of forming or molding the composition (molding step). At the stage of the working treatment, additives which are added to conventional resin, such as a plasticizer and an antioxidant, may be added to the resin composition. The process for preparing the resin composition is preferably a kneading process or a process of dissolving a mixture into a solvent, removing the solvent, and drying the mixture to yield the composition, and is more preferably the kneading process.

The kneading process may be a process which is used to blend the starting components of ordinary resin. In the process, there is used, for example, a roll, a Banbury mixer, a biaxial kneader, or a kneader rudder. The Banbury mixer, biaxial kneader, or kneader rudder are preferable. In order to prevent the resin from being oxidized, a machine capable of kneading a resin in a closed system is preferably used. The kneading process is desirably performed in an inert gas such as nitrogen or argon.

### «Process for Producing Optical Resin Lens»

A process for producing an optical resin lens used in the invention is described hereinafter. This lens-producing process comprises the steps of preparing the above-mentioned resin composition, which may be made of only resin or a mixture of resin and additives, and then molding (or forming) the resultant resin composition.

The method of molding the resin composition used in the invention is described hereinafter. A molded product of this resin composition can be obtained by molding the molding material made of the resin composition. The process for molding, the kind of which is not particularly limited, is preferably melt molding process in order to obtain a molded product excellent in birefringence lowness, mechanical strength, dimensional precision and other properties. The melt molding process is performed using, for example, a commercially available press mold, a commercially available extrusion mold, a commercially available injection mold, or the like. The process using a commercially available injection mold is preferable from the viewpoints of moldability and productivity.

Molding conditions are appropriately selected in accordance with the use purpose of the resin or the molding process thereof. For example, the temperature of the resin composition, which may be made of only resin or a mixture of resin and additives, in injection molding is preferably from 150 to 400 °C, more preferably from 200 to 350 °C, even more preferably from 200 to 330 °C in order to give an appropriate fluidity to the resin at the time of the molding to prevent the generation of shrinkage or strain in the product to be molded, prevent the generation of silver streaks, based on thermal decomposition of the resin, and prevent yellowing of the product effectively.

The molded product related to the invention can be used in various forms, such as spherical, rod, plate, columnar, cylindrical, tubular, fibrous, film, or sheet form. Since the molded product is excellent in birefringence lowness, transparency, mechanical strength, heat resistance and water absorbability lowness, the molded product can be used as an optical resin lens in the invention. The molded product is suitable for other optical parts also.

### «Optical Resin Lens»

The optical resin lens used in the invention can be obtained by the above-mentioned process. Specific examples of optical parts for which the above-mentioned molded product can be used are as follows: an imaging lens of a camera; lenses such as microscopic, endoscopic, and telescopic lenses; entire light ray transmitting lenses such as lenses for spectacles; pickup lenses of optical disks such as CDs, CD-ROMs, WORMs (write once optical disks), MOs (rewritable optical disks and magnetooptical disks), MDs (mini disks), and DVDs (digital video disks); laser scanning lenses such as a fθ lens of a laser beam printer and a lens for a sensor; and a prism lens of a camera finder system.

The molded product may be used for optical disks, examples of which include CDs, CD-ROMs, WORMs, MOs, MDs, and DVDs. The molded product may be used for other optical members, examples of which include light guide plates of a liquid crystal display and others; optical films such as a light polarizing film, a phase difference film, and a light diffusion film; a light diffusion plate; an optical card; and a liquid crystal display element substrate. In particular, the molded product is suitable as the pickup lenses and the laser scanning lens, for which low birefringence is required, and is most suitable as the pickup lenses.

In the step of preparing the resin composition used in the invention or molding the resin composition, various additives, which may be referred to as compounding agents, may be added to the composition if necessary. The kinds of the additives are not particularly limited, and examples thereof include stabilizers such as an antioxidant, a thermal stabilizer, a light stabilizer, a weather stabilizer, an ultraviolet absorbent, and a near infrared absorbent; resin modifiers such as a lubricant and a plasticizer; coloring agents such as dye and pigment; an antistatic agent; a flame retardant; and a filler. These compounding agents may be used alone or in combination of two or more thereof. The amount thereof can be appropriately selected as far as the advantageous effects described the present specification are not damaged.

### «Antioxidant»

The following describes the antioxidant used in the invention. Examples of the antioxidant include phenol type antioxidants, phosphorus-containing antioxidants, and sulfur-containing antioxidants. Of these antioxidants, phenol type antioxidants are preferable and alkyl-substituted phenol type antioxidants are particularly preferable. The incorporation of these antioxidants makes it possible to prevent coloring of the lens to be obtained or a fall in the strength thereof, resulting from oxidation and deterioration at the time of molding into the lens, without lowering the transparency, the heat resistance or other properties of the lens. These antioxidants may be used alone or in combination of two or more thereof. The blend amount thereof is appropriately selected as far as the attainment of the objects of the invention is not hindered, and is preferably from 0.001 to 5 parts by mass, more preferably from 0.01 to 1 part by mass for 100 parts by mass of the polymer related to the invention.

The phenol type antioxidant may be one which has been conventionally known. Examples thereof include acrylate compounds described in Japanese Patent Application Laid-Open Nos. 63-179953 and 1-168643, such as 2-t-butyl-6-(3-t-butyl-2-hydroxy-5-methylbenzyl)-4-methylphenyl acrylate, and 2,4-di-t-amyl-6-(1-(3,5-di-t-amyl-2-hydroxyphenyl)ethyl)pnenyl acrylate; alkyl-substituted phenol type compounds such as octadecyl-3-(3,5-di-t-butyl-4-hydroxyphenyl) propionate, 2,2'-methylene-bis(4-methyl-6-butylphenol), 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis(methylene-3-(3',5'-di-t-butyl-4'-hydroxyphenyl propionate)methane[pentaerythrimethyl-tetrakis(3-(3,5-di-t-butyl-4-hydroxyphenyl propionate)), and triethylene glycol bis(3-(3-t-butyl-4-hydroxy-5-methylphenyl) propionate); triazine-group-containing phenol type compounds such as 6-(4-hydroxy-3,5-di-t-butylanilino)-2,4-bisoctylthio-1,3,5-triazine, 4-bisoctylthio-1,3,5-triazine, and 2-octylthio-4,6-bis-(3,5-di-t-butyl-4-oxyanilino)-1,3,5-triazine.

The phosphorus-containing antioxidant can be selected from ones that are usually used in an ordinary resin industry without especial limitation. Examples thereof include monophosphite compounds such as triphenyl phosphite, diphenylisodecyl phosphite, phenyldiisodecyl phosphite, tris(nonylphenyl) phosphite, tris(dinonylphenyl) phosphite, tris(2,4-t-butylphenyl) phosphite, and 10-(3,5-di-t-butyl-4-hydroxybenzyl)-9,10-dihydro-9-oxa-10-phosphaphenanthrene-10-oxide; and biphosphite compounds such as 4,4'-butylidene-bis(3-methyl-6-t-butylphenyl-di-tridecyl phosphite), and 4,4'-isopropylidene-bis(phenyl-dialkyl(C12 to C15) phosphite). Of these examples, mono phosphite compounds are preferable. Tris(nonylphenyl) phosphite, tris(dinonylphenyl) phosphite, and tris(2,4-t-butylphenyl) phosphite are particularly preferable.

Examples of the sulfur-containing antioxidant include dilauryl 3,3-thiodipropionate, dimyristyl 3,3-thiodipropionate, distearyl 3,3-thiodipropionate, laurylstearyl 3,3-thiodipropionate, pentaerythritol-tetrakis-(β-lauryl-thio-propionate, and 3,9-bis(2-dodecylthioethyl)-2,4,8,10-tetraoxaspiro[5,5]undecane.

### «Light Stabilizer»

The following describes the light stabilizer used in the invention. Examples of the light stabilizer include a benzophenone type light stabilizer, a benzotriazole type light stabilizer, and a hindered amine type light stabilizer. In the invention, it is preferable to use a hindered amine type light stabilizer from the viewpoint of the transparency and the coloring resistance of the lens. Of hinders amine type light stabilizers (hereinafter referred to as HALS), preferable are HALS having a number-average molecular weight (Mn) of 1,000 to 10,000, more preferable are HALS having a Mn of 2,000 to 5,000, and even more preferable are HALS having a Mn of 2,800 to 3,800. The Mn is a molecular weight relative to polystyrene standards, which is measured by GPC using THF as a solvent.

If the Mn of an HALS is too small, the HALS volatilizes when the HALS is heated, melted and kneaded to be incorporated into a block copolymer made of the resin composition, so that a given amount thereof cannot be incorporated. Alternatively, the working stability thereof deteriorates, for example, as follows: foams or silver streaks are generated when the copolymer is subjected to heating and melting molding such as injecting molding. When the lens made of the copolymer is used for a long time in the state that a lamp is turned on, volatile components are generated as gas from the lens. If the Mn is too large, the dispersibility of the HALS into the block copolymer lowers so that the transparency of the lens deteriorates and the effect of improving the light resistance decreases. In the invention, therefore, by setting the Mn of the HALS into the above-mentioned range, a lens excellent in working stability, gas-generation preventing power, and transparency can be obtained.

Specific examples of the HALS include high molecular weight HALS wherein piperidine rings are bonded to each other through a triazine skeleton such as N,N',N",N"'-tetrakis-[4,6-bis-{butyl-(N-methyl-2,2,6,6-tetramethylpiperidine-4-yl)amino}-triazine-2-yl]-4,7-diazadecane-1,10-diamine, a polycondensate of dibutylamine, 1,3,5-triazine and N,N'-bis(2,2,6,6-tetramethyl-4-piperidyl)butylamine, poly[{(1,1,3,3,-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], a polycondenstate of 1,6-hexanediamine-N,N'-bis(2,2,6,6-tetramethyl-4-piperidino) and morpholine-2,4,6-trichlro-1,3,5-triazine, and poly[(6-morpholino-s-triazine-2,4-diyl)(2,2,6,6-tetramethyl-4-piperidyl)imino]-hexamethylene[(2,2,6,6-tetramethyl-4-piperidyl)imino]; and high molecular weight HALS wherein piperidine rings are bonded to each other through an ester bond, such as a polymer of dimethyl succinate and 4-hydroxy-2,2,6,6-tetramethyl-1-piperidine ethanol, and a mixed ester of 1,2,3,4-butanetetracarboxylic acid, 1,2,2,6,6-pentamethyl-4-piperidinol and 3,9-bis(2-hydroxy-1,1-dimethylethyl)-2,4,8,10-tetraoxaspiro[5,5]undecane.

Of these examples, preferable are compounds having a Mn of 2,000 to 5,000 such as the polycondensate of dibutylamine, 1,3,5-triazine and N,N'-bis(2,2,6,6-tetramethyl-4-piperidyl)butylamine, poly[{(1,1,3,3,-tetramethylbutyl)amino-1,3,5-triazine-2,4-diyl} {(2,2,6,6-tetramethyl-4-piperidyl)imino}hexamethylene{(2,2,6,6-tetramethyl-4-piperidyl)imino}], and the polymer of dimethyl succinate and 4-hydroxy-2,2,6,6-tetramethyl-1-piperidine ethanol.

About the amount of the HALS incorporated into the resin used in the present invention, the amount thereof is preferably from 0.01 to 20 parts by mass, more preferably from 0.02 to 15 parts by mass, even more preferably from 0.05 to 10 parts by mass for 100 parts by mass of the polymer. When this amount is too small, the effect of improving the light resistance is not sufficiently obtained. Thus, when the resin composition is used outdoors for a long time, the resin is colored. On the other hand, if the amount of the HALS is too large, a part thereof is generated as gas and the dispersibility thereof into the resin lowers so that the transparency of the lens lowers. By incorporating, into the resin composition used in the invention, a compound the lowest glass transition temperature of which is 30 °C or less, the resin can be prevented from becoming clouded, without lowering various properties such as transparency, heat resistance and mechanical strength, in a high-temperature and high-humidity environment for a long time.

In the present invention, there is used the above-mentioned resin composition or another resin composition comprising the resin composition and at least one compounding agent selected from the group consisting of (1) a soft polymer and (2) an alcoholic compound. The incorporation of these compounding agents makes it possible to prevent the resin composition from becoming clouded, without lowering various properties such as transparency, heat resistance and mechanical strength, in a high-temperature and high-humidity environment for a long time. Of these resin compositions, the resin composition comprising the soft polymer (1) and the alcoholic compound (2) is better in the effect of preventing the resin composition from becoming clouded in a high-temperature and high-humidity environment and the transparency of the resin composition.

### (1) Soft Polymer

The soft polymer used in the invention is usually a polymer having a Tg of 30 °C or less. When the soft polymer has plural Tg's, it is preferable that at least the lowest Tg is 30 °C or less. Specific examples of the soft polymer include olefin type soft polymers such as liquid polyethylene, polypropylene, poly-1-butene, ethylene/α-olefin copolymer, propylene/α-olefin copolymer, ethylene/propylene/diene copolymer (EPDM), and ethylene/propylene/styrene copolymer; isobutylene type soft polymers such as polyisobutylene, isobutylene/isoprene rubber, and isobutylene/styrene copolymer; diene type soft polymers such as polybutadiene, polyisoprene, butadiene/styrene random copolymer, isoprene/styrene random copolymer, acrylonitrile/butadiene copolymer, acrylonitrile/butadiene/styrene copolymer, butadiene/styrene block copolymer, styrene/butadiene/styrene block copolymer, isoprene/styrene block copolymer, and styrene/isoprene/styrene block polymer; silicon-containing soft polymers such as dimethylpolysiloxane, diphenylpolysiloxane, and dihydroxypolysiloxane; soft polymers made from α,β-unsaturated acid, such as polybutyl acrylate, polybutyl methacrylate, polyhydroxyethyl methacrylate, polyacrylamide, polyacrylonitrile, and butyl acrylate/styrene copolymer; soft polymers made from an unsaturated alcohol or amine, an acyl derivative thereof, or an acetal, such as polyvinyl alcohol, polyvinyl acetate, polyvinyl stearate, and vinyl acetate/styrene copolymer; epoxy type soft polymers such as ethylene oxide, polypropylene oxide, and epichlorohydrin rubber; fluorine-containing soft polymers such as vinylidene fluoride rubber, ethylene tetrafluoride/propylene rubber; and other soft polymers such as natural rubber, polypeptide, protein, polyester type thermoplastic elastomer, vinyl chloride type thermoplastic elastomer, and polyamide type thermoplastic elastomer. These soft polymers may have crosslink structure, and may have a functional group introduced by modifying reaction. Of the above-mentioned soft polymers, diene type soft polymers are preferable. Hydrogenated diene type soft polymers wherein carbon-carbon unsaturated bonds are hydrogenated are particularly good from the viewpoints of rubber elasticity, mechanical strength, flexibility and dispersibility.

### (2) Alcoholic Compound

The alcoholic compound is a compound having in the molecule thereof at least one non-phenolic hydroxyl group, and preferably has at least one hydroxyl group and at least one ether bond or ester bond. Specific examples of this compound preferably include dihydric alcohols and higher-order polyhydric alcohols, more preferably trihydric alcohols and higher-order polyhydric alcohols, even more preferably alcoholic ether compounds or alcoholic ester compounds each obtained by etherifying or esterifying one out of hydroxyl groups of a polyhydric alcohol, the number of the hydroxyl groups being from 3 to 8.

Examples of the dihydric alcohols and higher-order polyhydric alcohols include polyethylene glycol, glycerol, trimethylolpropane, pentaerythritol, diglycerol, triglycerol, dipentaerythritol, 1,6,7-trihydroxy-2,2-di(hydroxymethyl)-4-oxoheptane, sorbitol, 2-methyl-1,6,7-trihydroxy-2-hydroxymethyl-4-oxoheptane, 1,5,6-trihydroxy-3-oxohexanepentaerythritol, and tris(2-hydroxyethyl)isocyanurate. Trihydric alcohols and higher-order polyhydric alcohols are preferable and polyhydric alcohols having 3 to 8 hydroxyl groups are particularly preferable. In the case that the alcoholic ester compound is obtained, preferable is glycerol, diglycerol or triglycerol, which makes it possible to synthesize an alcoholic ester compound containing α,β-diol.

Examples of this alcoholic ester compound include polyhydric alcoholic ester compounds such as glycerin monostearate, glycerin monolaurate, glycerin monobehenate, diglycerin monostearate, glycerin distearate, glycerin dilaurate, pentaerythritol monostearete, pentaerythritol monolaurate, pentaerythritol monobehenate, pentaerythritol distearate, pentaerythritol dilaurate, pentaerythritol tristearete and dipentaerythritol distearate; 3-(octyloxy)-1,2-propanediol, 3-(decyloxy)-1,2-propanediol, 3-(lauryloxy)-1,2-propanediol, 3-(4-nonylphenyloxy)-1,2-propanediol, 1,6-dihydroxy-2,2-di(hydroxymethyl)-7-(4-nonylphenyloxy)-4-oxoheptane, an alcoholic ether compound obtained by reacting a condensate of p-nonylphenyl ether and formaldehyde with glycidol, an alcoholic ether compound obtained by reacting a condensate of p-octylphenyl ether and formaldehyde with glycidol, and an alcoholic ether compound obtained by reacting a condensate of p-octylphenyl ether and dicyclopentadiene with glycidol. These polyhydric alcoholic compounds may be used alone or in combination of two or more thereof. The molecular weight of these alcoholic compounds is not particularly limited, and is usually from 500 to 2,000, preferably from 800 to 1,500 since a fall in the transparency of the polymer is small.

### (3) Organic or Inorganic Filler

The filler used in the resin composition may be an organic or inorganic filler. The organic filler may be made ordinary organic polymer particles or crosslinked organic polymer particles. Examples thereof include particles or crosslinked particles made of polyolefins such as polyethylene and polypropylene; halogen-containing vinyl polymers such as polyvinyl chloride and polyvinylidene chloride; polymers each derived from an α, β-unsaturated acid, such as polyarylate or polymethacrylate; polymers each derived from an unsaturated alcohol, such as polyvinyl alcohol or polyvinyl acetate; polyethylene oxide or polymers each derived from bisglycidyl ether; aromatic condensed polymers such as polyphenylene oxide, polycarbonate and polysulfone; polyurethanes; polyamides; polyesters; aldehyde/phenol resins; and natural polymer compounds.

Examples of the inorganic fillers include compounds of elements in the I group, such as lithium fluoride and borax (hydrated sodium borate); compounds of elements in the II group, such as magnesium carbonate, magnesium phosphate, calcium carbonate, strontium titanate, and barium carbonate; compounds of elements in the IV group, such as titanium dioxide (titania) and titanium monooxide; compounds of elements in the VI group, such as molybdenum dioxide and molybdenum trioxide; compounds of elements in the VII group, such as manganese chloride and manganese acetate; compounds of elements in the VIII to X groups, such as cobalt chloride and cobalt acetate; compounds of elements in the XI group, such as copper iodine; compounds of elements in the XII group, such as zinc oxide and zinc acetate; compounds of elements in the XIII group, such as aluminum oxide (alumina), aluminum fluoride, aluminosilicate (alumina silicate, kaolin, and kaolinite); compounds of elements in the XIV group, such as silicon oxide (silica and silica gel), plumbago, carbon, graphite, and glass; and particles made of a natural mineral such as carnalite, kainite, mica, magnesia mica, or villous mineral.

The blend amount of the compounds (1) to (3) is decided in accordance with combination with compounds blended with the copolymer, in particular, alicyclic hydrocarbon copolymer, which will be detailed later. If the blend amount is too large, the glass transition temperature or the transparency of the composition generally lowers to a large extent. Thus, the composition is unsuitable for being used as an optical material. If the blend amount is too small, the molded product may become clouded at high temperature and high humidity. The blend amount is usually from 0.01 to 10 parts by mass, preferably from 0.02 to 5 parts by mass, even more preferably from 0.05 to 2 parts by mass for 100 parts by mass of the alicyclic hydrocarbon copolymer. If the blend amount is too small, the effect of preventing the molded product from becoming clouded at high temperature and high humidity cannot be produced. If the blend amount is too large, the heat resistance and the transparency of the molded product deteriorate.

### <<Other Compounding Agents>>

If necessary, the following may be incorporated, as other compounding agents, into the resin composition used in the invention: an ultraviolet absorbent, a light stabilizer, a near infrared absorbent, a coloring agent such as dye or pigment, a lubricant, a plasticizer, an antistatic agent, a fluorescent bleaching agent, and others. These may be used alone or in the form of a mixture of two or more thereof. The blend amount of each of the agents is appropriately selected as far as the attainment of the objects of the invention cannot be hindered.

The optical resin used in the invention preferably has a resin base comprising a polymer having an alicyclic structure. This polymer, which has an alicyclic structure, is preferably an alicyclic hydrocarbon copolymer comprising recurring units (a) having an alicyclic structure represented by the following general formula (27) and recurring units (b) having a chain structure or chain structures represented by the following general formula (28) and/or the following general formula (29), the content by percentage of the total thereof being 90 % or more by weight and the content by percentage of the recurring units (b) being 1 % or more and less than 10 % by weight:

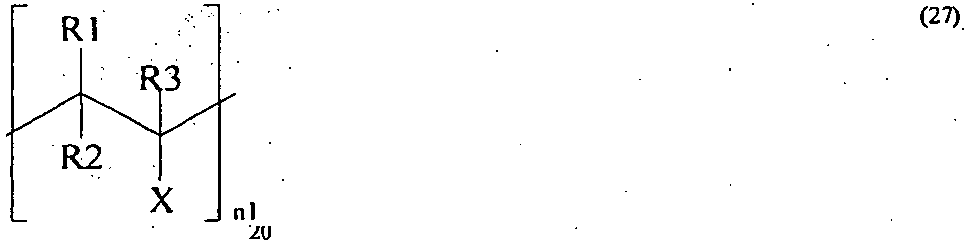

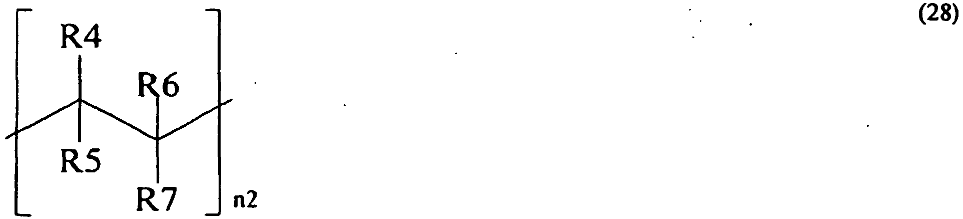

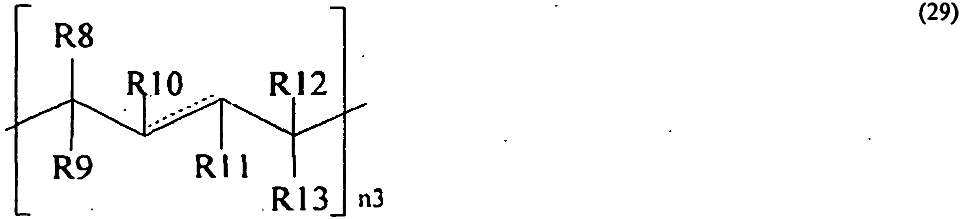

In the formula (27), X represents an alicyclic hydrocarbon group. In the formulae (27), (28) and (29), R1 to R13 each independently represent a hydrogen atom, a chain (or linear) hydrocarbon group, a halogen atom, an alkoxy group, a hydroxyl group, an ether group, an ester group, a cyano group, an amide group, an imide group, a silyl group, or a chain hydrocarbon group substituted with a polar group (selected from a halogen atom, an alkoxy group, a hydroxyl group, an ether group, an ester group, a cyano group, an amide group, an imide group and a silyl group). Of these atoms or groups, a hydrogen atom or a chain hydrocarbon group having 1 to 6 carbon atoms is preferable since superior heat resistance and low water absorbability can be obtained.

Examples of the halogen atom include fluorine, chlorine, bromine and iodine atoms. Examples of the chain hydrocarbon group substituted with the polar group include halogenated alkyl groups having 1 to 20 carbon atoms, preferably 1 to 10 carbon atoms, more preferably 1 to 6 carbon atoms. Examples of the chain hydrocarbon group include alkyl groups having 1 to 20 carbon atoms, preferably 1 to 10 carbon atoms, more preferably 1 to 6 carbon atoms; and alkenyl groups having 2 to 20 carbon atoms, preferably 2 to 10 carbon atoms, more preferably 2 to 6 carbon atoms.

X in the general formula (27) represents an alicyclic hydrocarbon group, and this group usually has 4 to 20 carbon atoms, preferably 4 to 10 carbon atoms, more preferably 5 to 7 carbon atoms. When the number of carbon atoms which constitute the alicyclic structure is set into this range, the birefringence can be reduced. The alicyclic structure may be a monocyclic structure or a polycyclic structure such as a norbomane or dicyclohexane ring structure.

The alicyclic hydrocarbon group may have a carbon-carbon unsaturated bond, and the content by percentage thereof is 10 % or less, preferably 5 % or less, more preferably 3 % or less of the total amount of carbon-carbon bonds. When the content by percentage of the carbon-carbon unsaturated bond in the alicyclic hydrocarbon group is set into this range, the transparency and heat resistance can be improved. To each of the carbons which constitute the alicyclic hydrocarbon group, the following may be bonded: a hydrogen atom, a hydrocarbon group, a halogen atom, an alkoxy group, a hydroxyl group, an ether group, an ester group, a cyano group, an amide group, an imide group, a silyl group, a chain hydrocarbon group substituted with a polar group (selected from a halogen atom, an alkoxy group, a hydroxyl group, an ether group, an ester group, a cyano group, an amide group, an imide group and a silyl group), or some other group. Of these atoms or groups, a hydrogen atom or a chain hydrocarbon group having 1 to 6 carbon atoms is preferable since superior heat resistance and low water absorbability can be obtained.

The "........" in the general formula (29) represents a carbon-carbon saturated bond or a carbon-carbon unsaturated bond in each of units which constitute the main chain. In the case that transparency and heat resistance are intensely required, the content by percentage of the unsaturated bonds is usually 10 % or less, preferably 5 % or less, more preferably 3 % or less of all carbon-carbon bonds which constitute the main chain.

Of the recurring units represented by the general formula (27), a recurring unit represented by the following general formula (30) is superior from the viewpoints of the heat resistance and low water absorbability of the polymer.

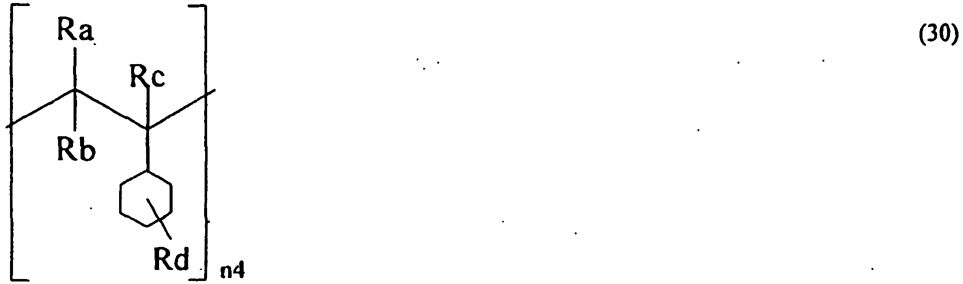

Of the recurring units represented by the general formula (28), a recurring unit represented by the following general formula (31) is superior from the viewpoints of the heat resistance and low water absorbability.

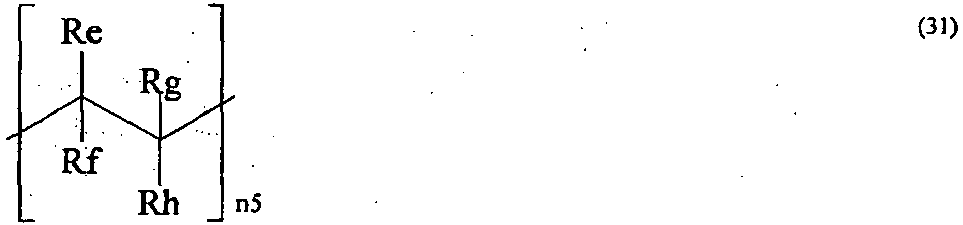

Of the recurring units represented by the general formula (29), a recurring unit represented by the following general formula (32) is superior from the viewpoints of the heat resistance and low water absorbability.

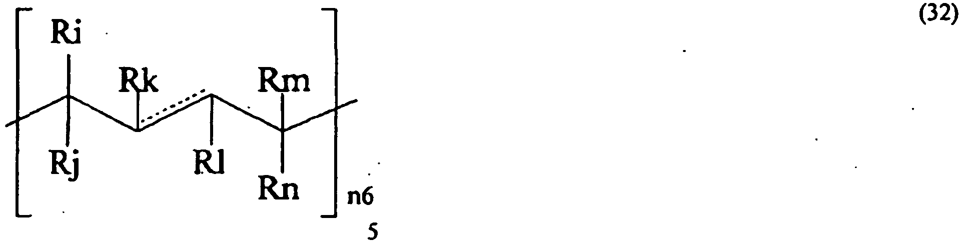

In the general formulae (30), (31) and (32), Ra to Rn each independently represents a hydrogen atom, or a lower chain hydrocarbon group, and preferably represents a hydrogen atom or a lower alkyl group having 1 to 6 carbon atoms from the heat resistance and low water absorbability. Of the chain recurring units represented by the general formulae (28) and (29), the chain recurring unit represented by the general formula (29) is superior since strong properties of the hydrocarbon polymer are larger.

In the invention, the total content by percentage of the recurring units (a) each having the alicyclic structure represented by the general formula (27) and the recurring units (b) each having the chain structure(s) represented by the general formula (28) and/or the general formula (29) in the hydrocarbon copolymer is usually 90 % or more, preferably 95 % or more, more preferably 97 % or more by weight. When the total content is set into this range, the low birefringence, heat resistance, low water absorbability and mechanical strength are balanced with each other at a high level.

The content by percentage of the chain recurring units (b) in the alicyclic hydrocarbon copolymer is appropriately selected in accordance with the use purpose of the copolymer, and is usually 1 % or more and less than 10 %, preferably from 1 to 8 % (inclusive), more preferably from 2 to 6 % (inclusive) by weight. When the content of the recurring units (b) is within this range, the low birefringence, heat resistance, and low water absorbability are balanced with each other at a high level.

The chain lengths of the recurring units (a) are far shorter than the molecular chain lengths of the alicyclic hydrocarbon copolymer. Specifically, when A represents the weight-average molecular weight of the chain of the recurring units each having the alicyclic structure and B represents (the weight-average molecular weight (Mw) of the alicyclic hydrocarbon copolymer) × (the number of the recurring units each having the alicyclic structure/the total number of the recurring units which constitute the alicyclic hydrocarbon copolymer)), A is 30 % or less of B, preferably 20 % or less thereof, more preferably 15 % or less thereof, even more preferably 10 % or less. If A is outside this range, a low birefringence cannot be obtained.

The chain lengths of the recurring units (a) preferably have a specific distribution. Specifically, when A represents the weight-average molecular weight of the chain of the recurring units each having the alicyclic structure and C represents the number-average molecular weight of the chain of the recurring units each having the alicyclic structure, the ratio of A / C is preferably 1.3 or more, more preferably from 1.3 to 8, even more preferably 1.7 to 6. If the ratio of A / C is too small, the block degree of the copolymer increases. If the ratio is too large, the random degree increases. In either case, a low birefringence cannot be obtained.

The molecular weight of the alicyclic hydrocarbon copolymer used in the invention is from 1,000 to 1,000,000, preferably from 5,000 to 500,000, more preferably from 10,000 to 300,000, most preferably from 50,000 to 250,000 as the weight-average molecular weight (Mw) thereof relative to polystyrene (or polyisoprene) standards, measured by gel permeation chromatography (GPC). If the weight-average molecular weight (Mw) of the alicyclic hydrocarbon copolymer is too small, strength properties of the molded product are poor. If the weight-average molecular weight is too large, the birefringence of the molded product is large.

The molecular weight distribution of this copolymer may be appropriately selected in accordance with the use purpose thereof. The ratio of Mw / Mn is usually 2.5 or less, preferably 2.3 or less, more preferably 2 or less. The Mw and Mn are the weight-average molecular weight and the number-average molecular weigh of the copolymer, respectively, relative to polystyrene (or polyisoprene) standards, measured by GPC. When the ratio of Mw / Mn is within this range, the mechanical strength and the heat resistance are balanced with each other at a high level. The glass transition temperature (Tg) of the copolymer may be appropriately selected in accordance with the use purpose thereof, and is usually from 50 to 250 °C, preferably from 70 to 200 °C, more preferably from 90 to 180 °C.

### «Process for Producing the Alicyclic Hydrocarbon Copolymer»

Examples of the process for producing the alicyclic hydrocarbon copolymer used in the invention include a process (1) of copolymerizing an aromatic vinyl compound with a different monomer copolymerizable therewith and, then, hydrogenating carbon-carbon unsaturated bonds in the main chain and aromatic rings of the copolymer; and a process (2) of copolymerizing an alicyclic vinyl compound with a different monomer copolymerizable therewith and, optionally, hydrogenating the resultant compound.

In the case that the alicyclic hydrocarbon copolymer used in the invention is produced by the above-mentioned processes, the copolymer can be effectively yielded by hydrogenating carbon-carbon unsaturated bonds in the main chain and unsaturated rings, such as aromatic or cycloalkene rings, of the copolymer which is made from an aromatic vinyl compound and / or an alicyclic vinyl compound (a') and a different monomer (b') copolymerizable therewith, and which has recurring units that are derived from the compound (a') and that have a chain structure wherein D is 30 % or less, preferably 20 % or less, more preferably 15 % or less, most preferably 10 % or less of E wherein D represents the weight-average molecular weight of the recurring unit chain originating from the aromatic vinyl compound and / or the alicyclic vinyl compound and E represents (the weight-average molecular weight (Mw) of the hydrocarbon copolymer × (the number of the recurring units originating from the aromatic vinyl compound and / or the alicyclic vinyl compound / the number of all recurring units which constitute the hydrocarbon copolymer). If D is outside this range, the birefringence of the resultant alicyclic hydrocarbon copolymer becomes high. In the invention, the process (1) is more preferable since the alicyclic hydrocarbon copolymer can be more effectively obtained.

About the above-mentioned copolymer that is not yet hydrogenated, the ratio of D / F is preferably within a given range wherein F represents the number-average molecular weight of the recurring unit chain originating from the aromatic vinyl compound and / or the alicyclic vinyl compound. Specifically, the ratio of D / F is preferably 1.3 or more, more preferably from 1.3 to 8 (inclusive), most preferably from 1.7 to 6 (inclusive). If the ratio of D / F is outside this range, the birefringence of the resultant alicyclic hydrocarbon copolymer becomes high.

The weight-average molecular weight and the number-average molecular weight of the recurring unit chains originating from the compound (a') can be identified by, for example, a method described in Macromolecules, 1983, 16, 1925-1928, that is, a method of adding ozone to unsaturated bonds in the main chain of an aromatic vinyl copolymer, decomposing the resultant by reduction, and then measuring the molecular weight of the taken-out aromatic vinyl chain.

The molecular weight of the copolymer that is not yet hydrogenated is from 1,000 to 1,000,000, preferably from 5,000 to 500,000, more preferably from 10,000 to 300,000 as the weight-average molecular weight (Mw) thereof relative to polystyrene (polyisoprene) standards, which is measured by GPC. If the weight-average molecular weight (Mw) of the copolymer is too small, the molded body made of the resultant alicyclic hydrocarbon copolymer is poor in strength properties. If the molecular weight is too large, the copolymer is poor in hydrogenation reactivity.

Specific examples of the aromatic vinyl compound used in the process (1) include styrene, a-methylstyrene, α-ethylstyrene, α-propylstyrene, α-isopropylstyrene, α-t-butylstyrene, 2-methylstyrene, 3-methylstyrene, 4-methylstyrene, 2,4-diisopropylstyrene, 2,4-dimethylstyrene, 4-t-butylstyrene, 5-t-butyl-2-methylstyrene, monochlorostyrene, dichlorostyrene, monofluorostyrene, and 4-phenylstyrene. Styrene, 2-methylstyrene, 3-methylstyrene and 4-methylstyrene are preferable.

Specific examples of the alicylic vinyl compound used in the process (2) include cyclobutylethylene, cyclopentylethylene, cyclohexylethylene, cycloheptylethylene, cyclooctylethylene, norbornylethylene, dicyclohexylethylene, α-methylcyclohexylethylene, α-t-butylcyclohexylethylene, cyclopentenylethylene, cyclohexenylethylene, cycloheptenylethylene, cyclooctenylethylene, cyclodecenylethylene, norbornenylethylene, α-methylcyclohexenylethylene, and α-t-butylcyclohexenylethylene. Of these examples, cyclohexylethylene and α-methylcyclohexylethylene are preferable. These aromatic vinyl compounds may be used alone or in combination of two or more thereof, as well as the alicyclic vinyl compounds.

The different copolymerizable monomer, which is not particularly limited, may be a chain vinyl compound, a chain conjugated diene compound or some other compound. When the chain conjugated diene compound is used, the operability of the copolymer-producing process is superior and strong properties of the resultant alicyclic hydrocarbon copolymer are also superior.

Specific examples of the chain vinyl compound include chain olefin monomers such as ethylene, propylene, 1-butene, 1-pentene, and 4-methyl-1-pentene; nitrile monomers such as 1-cyanoethylene(acrylonitrile), 1-cyano-1-methylethylene(methacrylonitrile), and 1-cyano-1-chloroethylene(α-chloroacrylonitrile); (meth)acrylic acid ester monomers such as 1-(methoxycarbonyl)-1-methylethylene(methyl methacrylate), 1-(ethoxycarbonyl)-1-methylethylene(ethyl methacrylate), 1-(propoxycarbonyl)-1-methylethylene(propyl methacrylate), 1-(butoxycarbonyl)-1-methylethylene(butyl methacrylate), 1-methoxycarbonylethylene(methyl acrylate), 1-ethoxycarbonylethylene(ethyl acrylate), 1-propoxycarbonylethylene(propyl acrylate), and 1-butoxycarbonylethylene(butyl acrylate); and unsaturated aliphatic acid monomers such as 1-carboxyethylene(acrylic acid), 1-carboxy-1-methylethylene(methacrylic acid), and maleic anhydride. Of these examples, chain olefin monomers are preferable, and ethylene, propylene and 1-butene are more preferable.

Examples of the chain conjugated diene include 1,3-butadiene, isoprene, 2,3-dimethyl-1,3-butadiene, 1,3-pentadiene, and 1,3-hexadiene. Of these chain vinyl compounds and chain conjugated dienes, the chain conjugated dienes are preferable, and butadiene and isoprene are particularly preferable. These chain vinyl compounds may be used alone or in combination of two or more thereof, as well as the chain conjugated dienes.

The process for polymerizing the compound (a') is not particularly limited, and may be a collectively-polymerizing process (batch process), a monomer successively-adding process (a process of using a part of the total amount of monomers to be used to start polymerization, and then adding the remaining amount of the monomers successively to the polymerization system so as to advance the polymerization). In particular, when the monomer successively-adding process is used, a hydrocarbon copolymer having a preferable chain structure can be obtained. As the above-mentioned value D of the copolymer that is not yet hydrogenated is smaller and / or the ratio of D / F is larger, the copolymer has a more random chain structure. The degree of the randomness of the copolymer is decided by the ratio of the polymerization rate of the aromatic vinyl compound to the polymerization rate of the different monomer copolymerizable therewith. As this ratio is smaller, the copolymer has a more random chain structure.

According to the monomer successively-adding process, the mixed monomers which are homogeneously mixed are successively added to the polymerization system; therefore, the polymerization selectivities of the monomers can be made lower in the process of growing the polymer by the polymerization of the monomers, which is different from the batch process. Consequently, the resultant copolymer has a more random structure. Moreover, heat from the polymerization reaction less accumulates in the polymerization system, so that the polymerization temperature can be kept low and stable.

In the case of the monomer successively-adding process, an initiator is added to a polymerization reactor in the state that generally 0.01 to 60 % by weight, preferably 0.02 to 20 % by weight, more preferably 0.05 to 10 % by weight of all monomers to be used is caused to be present, as initial monomers, beforehand in the polymerization reactor, thereby starting polymerization. When the amount of the initial monomers is set into this range, it is possible to easily remove reaction heat generated in the initial reaction after the polymerization start and make the resultant copolymer into a more random chain structure. When the reaction is continued until the polymerization conversion ratio of the initial monomers turns to 70 % or more, preferably 80 % or more, more preferably 90 % or more, the chain structure of the resultant copolymer becomes more random. Thereafter, the remaining monomers are successively added to the polymerization system. The speed of the addition is decided considering the consumption speed of the monomers in the polymerization system.

When the time required until the polymerization conversion ratio of the initial monomers reaches 90 % is represented by T and the ratio (%) of the amount of the initial monomers to that of all used monomers is represented by I, the addition speed is usually decided in such a manner that the addition of the remaining monomers will be finished in the time 0.5 to 3 times, preferably 0.8 to 2 times, more preferably 1 to 1.5 times the time given by the equation of [(100 -I) × T / I]. Specifically, the amount of the initial monomers and the addition speed of the remaining monomers are decided to set the above-mentioned time into the range of 0.1 to 30 hours, preferably 0.5 to 5 hours, more preferably 1 to 3 hours. The polymerization conversion ratio of all the monomers is usually 80 % or more, preferably 85 % or more, more preferably 90 % or more immediately after the finish of the addition of the monomers. When the polymerization conversion ratio of all the monomers is set into this range immediately after the finish of the addition of the monomers, the chain structure of the resultant copolymer becomes more random.

A method for the polymerization reaction, which is not particularly limited, may be radical polymerization, anionic polymerization, cationic polymerization, or the like. Anionic polymerization is preferable, considering the easiness of polymer operation and hydrogenation reaction in the post-process of the polymerization, and the mechanical strength of the finally-obtained hydrocarbon copolymer. In the case of the radical polymerization, bulk polymerization, solution polymerization, suspension polymerization, emulsion polymerization or some other polymerization can be used in the presence of an initiator usually at 0 to 200 °C, preferably 20 to 150 °C. In the case that it is necessary to prevent impurities or the like from being incorporated into the resin, bulk polymerization and suspension polymerization are particularly preferable. Examples of the radical initiator include organic peroxides such as benzoyl peroxide, lauroyl peroxide, and t-butyl-peroxy-2-ethylhexanoate; azo compounds such as azoisobutyronitrile, 4,4-azobis-4-cyanopentanoic acid, and azodibenzoyl; and water-soluble catalysts or redox initiators, typical examples of which include potassium persulfate and ammonium persulfate.

In the case of the anionic polymerization, bulk polymerization, solution polymerization, slurry polymerization, or some other polymerization may be used in the presence of an initiator usually at 0 to 200 °C, preferably 20 to 100 °C, more preferably 20 to 80 °C. Considering the removal of reaction heat, solution polymerization is preferable. In this case, an inactive solution wherein the polymer and the hydrogenated product thereof can be dissolved is used. Examples of the inactive solution used in the solution polymerization include aliphatic hydrocarbons such as n-butane, n-pentane, iso-pentane, n-hexane, n-heptane, and iso-octane; alicyclic hydrocarbons such as cyclopentane, cyclohexane, methylcyclopentane, methylcyclohexane, and decalin; aromatic hydrocarbons such as benzene and toluene. When any one of the aliphatic hydrocarbons or the alicyclic hydrocarbons is used, it can be used, as it is, as an inactive solvent for hydrogenation reaction. The solvents may be used alone or in combination of two or more thereof. The solvent(s) is / are usually used in an amount of 200 to 10,000 parts by weight for 100 parts by weight of all used monomers. Examples of the initiator which can be used in the anionic polymerization include mono organic lithium compounds such as n-butyllithium, sec-butyllithium, t-butyllithium, hexyllithium, and phenyllithium; and polyfunctional organic lithium compounds such as dilithiomethane, 1,4-dilithiobutane, and 1,4-dilithio-2-ethylcyclohexane.

In the polymerization reaction, a polymerization promoter, a randomizer (an additive having a function of preventing the chain of some component from becoming long), or the like can be used. In the case of the anionic polymerization, for example, a Lewis basic compound can be used as the randomizer. Specific examples of the Lewis basic compound include ether compounds such as dimethyl ether, diethyl ether, diisopropyl ether, dibutyl ether, tetrahydrofuran, diphenyl ether, ethylene glycol diethyl ether, and ethylene glycol methyl phenyl ether; tertiary amine compounds such as tetramethylethylenediamine, trimethylamine, triethylamine, and pyridine; alkali metal alkoxide compounds such as potassium-t-amyloxide, and potassium-t-butyloxide; and phosphine compounds such as triphenylphosphine. These Lewis basic compounds may be used alone or in combination of two or more thereof.

The polymer obtained by the radical polymerization or anionic polymerization can be collected by a known method such as a steam stripping method, direct solvent-removing method or alcohol solidifying method. In the case of using the solvent inactive for hydrogenation reaction at the time of the polymerization, the polymer solution can be used, as it is, in a hydrogenation step without collecting any polymer from the polymer solution.

### «Process for Hydrogenating the Unsaturated Bonds»

In the case of hydrogenating carbon-carbon double bonds in unsaturated rings, such as aromatic rings or cycloalkene rings, of the copolymer that is not yet hydrogenated, unsaturated bonds in the main chain of the copolymer, and other unsaturated bonds, the reaction method and the reaction form of the hydrogenation are not particularly limited. Thus, the hydrogenation may be performed in accordance with a known method. A hydrogenation method which can make the hydrogenation rate high and less causes polymer chain cleavage reaction caused at the same time of the hydrogenation reaction is preferable. An example thereof is a method of using a catalyst containing at least one kind of metal selected from nickel, cobalt, iron, titanium, rhodium, palladium, platinum, ruthenium, and rhenium in an organic solvent. The hydrogenation catalyst may be a heterogeneous catalyst or homogeneous catalyst.

The heterogeneous catalyst can be used in a metal or metal compound state, or in the state that the catalyst is carried on a suitable carrier. Examples of the carrier include activated carbon, silica, alumina, calcium carbide, titania, magnesia, zirconia, diatomaceous earth, and silicon carbide. The amount of the carried catalyst is usually from 0.01 to 80 % by weight, preferably from 0.05 to 60 % by weight. The homogeneous catalyst may be a catalyst wherein a nickel, cobalt, titanium or iron compound is combined with an organic metal compound (such as an organic aluminum compound or an organic lithium compound), or an organic metal complex catalyst comprising rhodium, palladium, platinum, ruthenium, rhenium or the like.

Examples of the nickel, cobalt, titanium or iron compound include acetylacetone salts, naphthonic acid salts, cyclopentadienyl compounds and cyclopentadienyldichloro compounds of the metals. Preferable examples of the organic aluminum compound include alkylaluminum compounds such as triethylaluminum and triisobutylaluminum; halogenated aluminum compounds such as diethylaluminum chloride and ethylaluminum dichloride; and alkylaluminum hydrides such as diisobutylaluminum hydride.

Examples of the organic metal complex catalyst include γ-dichloro-π-benzene complexes of the above-mentioned metals, dichloro-tris(triphenylphosphine) complexes thereof, and hydride-chloro-triphenylphosphine complexes thereof. These hydrogenation catalysts may be used alone or in combination of two or more thereof. The amount of the used catalyst(s) is usually from 0.01 to 100 parts by weight, preferably from 0.05 to 50 parts by weight, more preferably from 0.1 to 30 parts by weight for 100 parts by weight of the polymer. The temperature for the hydrogenation reaction is usually from 10 to 250 °C. The temperature is preferably from 50 to 200 °C, more preferably from 80 to 180 °C since the hydrogenation rate can be made high and polymer chain cleavage reaction caused at the same time of the hydrogenation reaction can be decreased. The pressure for the hydrogenation is usually from 0.1 to 30 MPa. The pressure is preferably from 1 to 20 MPa, more preferably 2 to 10 MPa for the above-mentioned reasons and the operability of the hydrogenation.

The hydrogenation rate of the thus-obtained hydrogenated product, which is according to 1 H-NMR, is usually 90 % or more, preferably 95 % or, more, more preferably 97 % or more about each of the case of carbon-carbon unsaturated bonds in the main chain, the case of carbon-carbon double bonds in aromatic rings of the product, and the case of carbon-carbon double bonds in unsaturated rings thereof. If the hydrogenation rate is low, the birefringence of the resultant copolymer is high and the thermal stability thereof deteriorates. The method for collecting the hydrogenated product after the hydrogenation reaction is not particularly limited. The following method can be usually used: a method of removing the residue of the hydrogenation catalyst by filtration, centrifugation or some other method and then removing the solvent directly from the solution of the hydrogenated product by drying; or method of pouring the solution of the hydrogenated product into a poor solvent for the hydrogenated product so as to solidify the hydrogenated product.

The polymer having an alicyclic structure is more preferably a block copolymer having a polymer block [A] and a polymer block [B]. The polymer block [A] comprises recurring units [1] each represented by the following formula (33). The content by percentage of the recurring units [1] in the polymer block [A] is preferably 50 % or more by mole, more preferably 70 % or more by mole, even more preferably 90 % or more by mole. 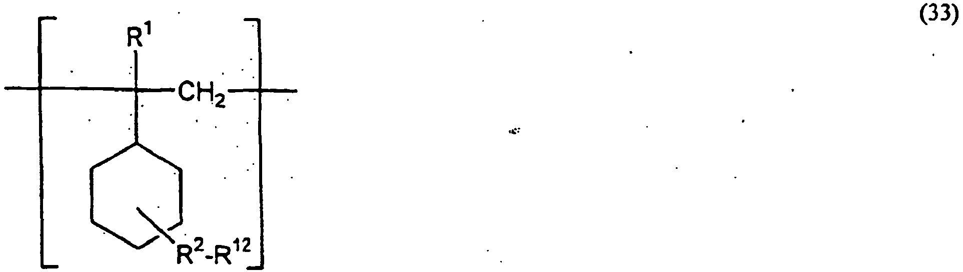 wherein R¹ represents a hydrogen atom or an alkyl group having 1 to 20 carbon atoms, R² to R¹² each independently represent a hydrogen atom, an alkyl group having 1 to 20 carbon atoms, a hydroxyl group, an alkoxy group having 1 to 20 carbon atoms, or a halogen atom.

The structure of the recurring unit [1] represented by the formula (33) is preferably a structure wherein R¹ is hydrogen or a methyl group and R² to R¹² are each a hydrogen atom. When the content by percentage of the recurring units [1] in the polymer block [A] is within the above-mentioned range, the transparency and mechanical strength of the polymer are superior. The balance in the polymer block [A], which is any portion other than the recurring units [1] therein, is made of hydrogenated recurring units originating from a chain conjugated diene and a chain vinyl compound.

The polymer block [B] comprises the recurring units [1] and recurring units [2] each represented by the following formula (34) and / or recurring units [3] each represented by the following formula (35). The content by percentage of the recurring units [1] in the polymer block [B] is preferably from 40 to 95 % by mole, more preferably from 50 to 90 % by mole. When the content by percentage of the recurring units [1] is within this range, the transparency and mechanical strength are superior. When the mole fraction of the recurring units [2] in the block [B] and the mole fraction of the recurring units [3] therein are represented by m2 (% by mole) and m3 (% by mole), respectively, the value of 2 x m2 + m3 is preferably 2 % or more by mole, preferably from 5 to 60 % by mole, most preferably from 10 to 50 % by mole. 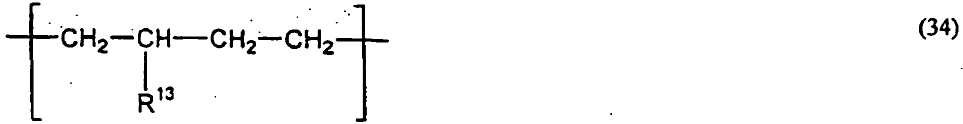 wherein R¹³ represents a hydrogen atom or an alkyl group having 1 to 20 carbon atoms.

The structure of the recurring unit [2] represented by the formula (34) is preferably a structure wherein R¹³ is hydrogen or a methyl group. 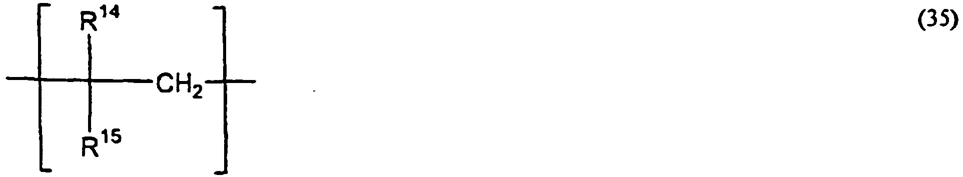 wherein R¹⁴ and R¹⁵ each independently represent a hydrogen atom, or an alkyl group having 1 to 20 carbon atoms. The structure of the recurring unit [3] represented by the formula (35) is preferably a structure wherein R¹⁴ is a hydrogen, and R¹⁵ is a methyl or ethyl group.

If the content by percentage of the recurring unit [2] or [3] in the polymer block [B] is too small, the mechanical strength lowers. Accordingly, when the content by percentage of the recurring unit [2] or [3] is within the above-mentioned range, the transparency and mechanical strength are superior. The polymer block [B] may comprise recurring units [X] each represented by the following formula (36). The content by percentage of the recurring units [X] is a value within such a range that properties of the block copolymer used in the invention are not damaged, and is preferably 30 % or less by mole, more preferably 20 % or less by mole of the whole of the block copolymer. 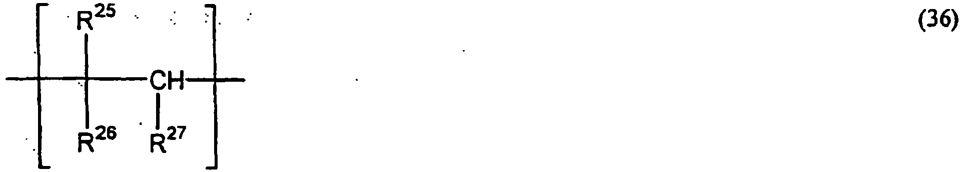 wherein R²⁵ represents a hydrogen atom, or an alkyl group having 1 to 20 carbon atoms, R²⁶ represents a nitrile, alkoxycarbonyl, formyl or hydroxycarbonyl group, or a halogen atom, R²⁷ represents a hydrogen atom, or R²⁶ and R²⁷ may be bonded to each other to form an acid anhydride or imide group.

When the mole fraction of the recurring units [1] in the polymer block [A] and the mole fraction of the recurring units [1] in the polymer block [B] in the block copolymer used in the invention are represented by a and b, respectively, the block copolymer preferably satisfies the relationship of a > b. This makes it possible to make the transparency and mechanical strength of the copolymer superior. When the mole number of all recurring units which constitute the block [A] and the mole number of all recurring units which constitute the block [B] in the block copolymer used in the invention are represented by ma and mb, respectively, the ratio of ma to mb is preferably from 5 : 95 to 95 : 5, more preferably from 30 : 70 to 95 : 5, even more preferably from 40 : 60 to 90 : 10. When the ratio of ma to mb is within this range, the mechanical strength and heat resistance are superior.

The molecular weight of the block copolymer used in the invention is preferably from 10,000 to 300,000, more preferably from 15,000 to 250,000, even more preferably from 20,000 to 200,000 as the weight-average molecular weight (Mw) thereof relative to polystyrene (or polyisoprene) standards, which is measured by GPC using tetrahydrofuran (THF) as a solvent. When the Mw of the block copolymer is within this range, the mechanical strength, heat resistance and moldability thereof are superior.

The molecular weight distribution of the block copolymer may be appropriately selected in accordance with the use purpose thereof. The ratio Mw / Mn wherein Mw is defined above and Mn is the number-average molecular weight of the block copolymer relative to polystyrene (polyisoprene) standards, which is measured by GPC, is preferably 5 or less, more preferably 4 or less, even more preferably 3 or less. When the ratio Mw / Mn is within this range, the mechanical strength and heat resistance are superior. The glass transition temperature (Tg) of the block copolymer may be appropriately selected in accordance with the use purpose thereof, and is preferably from 70 to 200 °C, more preferably from 80 to 180 °C, even more preferably from 90 to 160 °C as a measured value at high temperatures with a differential scanning calorimeter (hereinafter referred to as a DSC).

The above-mentioned block copolymer used in the invention has the polymer block(s) [A] and the polymer block(s) [B], and may be a di-block copolymer in the form of ([A]-[B]), a tri-block copolymer in the form of ([A]-[B]-[A]) or ([B]-[A]-[B]), or a block copolymer wherein the polymer block [A] and the polymer block [B] are alternately linked to each other so as to form four or more blocks. The block copolymer may be a block copolymer wherein these blocks are bonded in a radial form.

The block copolymer used in the invention can be obtained by one of the following methods. According to one method, a monomer mixture containing an aromatic vinyl compound and / or an alicyclic vinyl compound containing in the ring thereof an unsaturated bond, and a monomer mixture containing a vinyl monomer (except any aromatic vinyl compound or any alicyclic vinyl compound) are polymerized so as to obtain a block copolymer having a polymer block containing recurring units originating from the aromatic vinyl compound and / or the alicyclic vinyl compound, and a polymer block containing recurring units originating from the vinyl monomer.

This aromatic rings and / or the aliphatic rings in the block polymer is then hydrogenated. According to another method, a monomer mixture containing a saturated alicyclic vinyl compound, and a vinyl monomer (except any aromatic vinyl compound or any alicyclic vinyl compound) are polymerized so as to obtain a block copolymer having a polymer block containing recurring units originating from the alicyclic vinyl compound, and a polymer block containing recurring units originating from the vinyl monomer. The block copolymer used in the invention can be more preferably obtained, for example, by the following methods.

A first method comprises the step of polymerizing a monomer mixture [a'] containing 50 % or more by mole of an aromatic vinyl compound and/or an alicyclic vinyl compound having in the ring thereof an unsaturated bond to yield a polymer block [A'] containing recurring units originating from the aromatic vinyl compound and / or the alicyclic vinyl compound, and the step of polymerizing a monomer mixture [b'] containing 2 % or more by mole of a vinyl monomer (except any aromatic vinyl compound or any alicyclic vinyl compound) and further containing an aromatic vinyl compound and / or an alicyclic vinyl compound having in the ring thereof an unsaturated bond at a smaller percentage than the percentage of the same compound(s) in the monomer mixture [a'] to yield a polymer block [B'] containing recurring units originating from the aromatic vinyl compound and / or the alicyclic vinyl compound and recurring units originating from the vinyl monomer. Through at least these steps, a block copolymer having the polymer block [A'] and the polymer block [B'] is yielded. Thereafter, the aromatic rings and / or the aliphatic rings are hydrogenated.

A second method comprises the step of polymerizing a monomer mixture [a] containing 50 % or more by mole of a saturated alicyclic vinyl compound to yield a polymer block [A] containing recurring units originating from the saturated alicyclic vinyl compound, and the step of polymerizing a monomer mixture [b] containing 2 % or more by mole of a vinyl monomer (except any aromatic vinyl compound or any alicyclic vinyl compound) and further containing a saturated alicyclic vinyl compound at a smaller percentage than the percentage of the same compound in the monomer mixture [a] to yield a polymer block [B] containing recurring units originating from the saturated alicyclic vinyl compound and recurring units originating from the vinyl monomer. Through at least these steps, a block copolymer having the polymer block [A] and the polymer block [B] is yielded.

Of these methods, the first method is more preferable from the viewpoints of the easiness of availability of the monomers, the yield of the polymer, the easiness of the introduction of the recurring units [1] into the polymer block [B'], and others. Specific examples of the aromatic vinyl compound in the first method include styrene, α-methylstyrene, α-propylstyrene, α-isopropylstyrene, α-t-butylstyrene, 2-methylstyrene, 3-methylstyrene, 4-methylstyrene, 2,4-diisopropylstyrene, 2,4-dimethylstyrene, 4-t-butylstyrene, 5-t-butyl-2-methylstyrene, monochlorostyrene, dichlorostyrene, monofluorostyrene and 4-phenylstyrene, and these compounds having a substituent such as a hydroxyl or alkoxy group. Of these examples, styrene, 2-methylstyrene, 3-methylstyrene and 4-methylstyrene are preferable.

Specific examples of the unsaturated alicyclic vinyl compound in the first method include cyclohexenylethylene, α-methylcyclohexenylethylene and α-t-butylcyclohexenylethylene, and these compounds having a substituent such as a halogen atom, or an alkoxy or hydroxyl group. The aromatic vinyl compounds may be used alone or in combination of two or more thereof, as well as the alicyclic vinyl compounds. In the invention, it is preferable to use the aromatic vinyl compound, in particular, styrene or α-methylstyrene in the both of the monomer mixture [a'] and [b'].

The vinyl monomer used in the above-mentioned method may be a chain vinyl compound or a chain conjugated diene compound. Specific examples of the chain vinyl compound include chain olefin monomers such as ethylene, propylene, 1-butene, 1-pentene, and 4-methyl-1-pentene, the chain olefin monomers being particularly preferable. Most preferable are ethylene, propylene and 1-butene. Examples of the chain conjugated diene include 1,3-butadiene, isoprene, 2,3-dimethyl-1,3-butadiene, 1,3-pentadiene, and 1,3-hexadiene. Of the chain vinyl compound and the chain conjugated diene, the chain conjugated diene is preferable. Particularly preferable are butadiene, and isoprene. The chain vinyl compounds may be used alone or in combination of two or more thereof, as well as the chain conjugated dienes.

When the monomer mixture containing any one of the above-mentioned monomers is polymerized, radical polymerization, anionic polymerization, cationic polymerization or any other polymerization may be performed. The anionic polymerization is preferable, and living anionic polymer in an inactive solvent is most preferable. Anionic polymer polymerization is performed usually at 0 to 200 °C, preferably at 20 to 100 °C, more preferably at 20 to 80 °C in the presence of a polymerization initiator. Examples of the initiator include mono organic lithium compounds such as n-butyllithium, sec-butyllithium, t-butyllithium, hexyllithium, and phenyllithium; and polyfunctional organic lithium compounds such as dilithiomethane, 1,4-dilithiobutane, 1,4-dilithio-2-ethylcyclohexane.

Examples of the used inactive solvent include aliphatic hydrocarbons such as n-butane, n-pentane, isopentane, n-hexane, n-heptane, and isooctane; alicyclic hydrocarbons such as cyclopentane, cyclohexane, methylcyclopentane, methylcyclohexane, and decalin; and aromatic hydrocarbons such as benzene and toluene. When any one of the aliphatic hydrocarbons or alicyclic hydrocarbons is used, it can be used, as it is, as an inactive solvent for hydrogenation. These solvents may be used alone or in combination of two or more thereof. The solvent(s) is / are used in an amount of 200 to 10,000 parts by weight for 100 parts of all used monomers.

When each of the polymer blocks is polymerized, a polymerization promoter, a randomizer, or the like can be used in order to prevent the chain of some component in each of the blocks from becoming long. In particular, in the case that the polymerization reaction is performed by anionic polymerization, a Lewis basic compound or the like can be used as the randomizer. Specific examples of the Lewis basic compound include ether compounds such as dimethyl ether, diethyl ether, diisopropyl ether, dibutyl ether, tetrahydrofuran, diphenyl ether, ethylene glycol diethyl ether, and ethylene glycol methyl phenyl ether; tertiary amine compounds such as tetramethylethylenediamine, trimethylamine, triethylamine, and pyridine; alkali metal alkoxide compounds such as potassium-t-amyloxide, and potassium-t-butyloxide; and phosphine compounds such as triphenylphosphine. These Lewis basic compounds may be used alone or in combination of two or more thereof.

The method for obtaining the block copolymer by living anionic polymerization may be a successive addition polymerization reaction or a coupling method, which has been known so far. In the invention, the successive addition polymerization reaction method is preferably used. In the case that the block copolymer having the polymer block [A'] and the polymer block [B'] is obtained by the successive addition polymerization reaction method, the step of yielding the polymer block [A'] and the step of yielding the polymer block [B'] are successively performed. Specifically, the monomer mixture [a'] is polymerized in the presence of the above-mentioned living anionic polymerization catalyst in an inactive solvent to yield a polymer block [A'] and subsequently the monomer mixture [b'] is added to the reaction system to continue the polymerization, thereby yielding a polymer block [B'] linked to the polymer block [A'].

If desired, the monomer mixture [a'] is again added to the reaction system to polymerize it, thereby linking a polymer block [A'] to the above-mentioned polymer so as to prepare a tri-block copolymer. Furthermore, the monomer mixture [b'] is again added to the reaction system to yield a tetra-block copolymer wherein a polymer block [B'] is linked to the tri-block polymer. The resultant block copolymer is collected by a known method such as a steam stripping method, direct solvent-removing method or alcohol solidifying method. In the case of using the solvent inactive for hydrogenation reaction at the time of the polymerization reaction, the polymer solution can be used, as it is, in a hydrogenation step. Thus, the block copolymer may not be collected from the polymer solution.

Of the block copolymers having the polymer block [A'] and the polymer block [B'] obtained in the above-mentioned first method, which will be referred to as the "block copolymers before hydrogenation", a block copolymer having recurring units having the following structures is preferable. The polymer block [A'] which constitutes the preferable block copolymer before hydrogenation is a polymer block containing 50 % or more by mole of recurring units [4] each represented by the following formula (37): 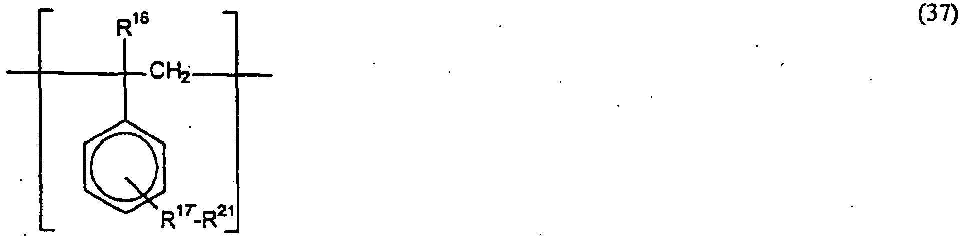 wherein R¹⁶ represents a hydrogen atom or an alkyl group having 1 to 20 carbon atoms, R¹⁷ to R²¹ each independently represent a hydrogen atom, an alkyl group having 1 to 20 carbon atoms, a hydroxyl group, an alkoxy group having 1 to 20 carbon atoms, or a halogen atom.

The polymer block [B'] is preferably a polymer block which never fails to contain the above-mentioned recurring units [4], and contains recurring units [5] each represented by the following formula (38) and / or recurring units each represented by the following formula (39): 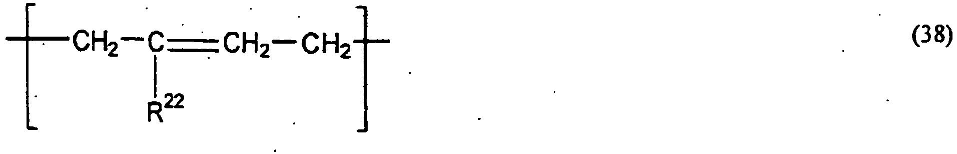 wherein R²² represents a hydrogen atom, or an alkyl group having 1 to 20 carbon atoms, and 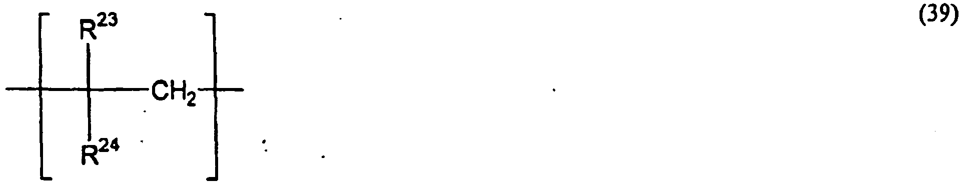 wherein R²³ represents a hydrogen atom, or an alkyl group having 1 to 20 carbon atoms, and R²⁴ represents a hydrogen group or an alkyl or alkenyl group having 1 to 20 carbon atoms.

When the mole fraction of the recurring units [4] in the polymer block [A'] and the mole fraction of the recurring units [4] in the polymer block [B'] are represented by a' and b', respectively, the relationship a' > b' is satisfied.

Furthermore, the block [B'] may contain recurring units each represented by the following formula (40): 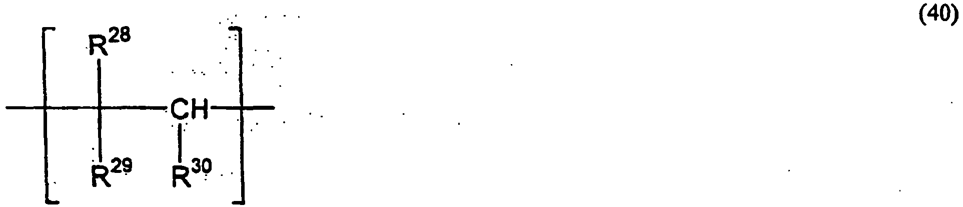 wherein R²⁸ represents a hydrogen atom, or an alkyl group having 1 to 20 carbon atoms, R²⁹ represents a nitrile, alkoxycarbonyl, formyl or hydroxycarbonyl group, or a halogen atom, R³⁰ represents a hydrogen atom, or R²⁹ and R³⁰ may be bonded to each other to form an acid anhydride or imide group.

When the mole number of all recurring units which constitute the block [A'] and the mole number of all recurring units which constitute the block [B'] in the preferable block copolymer for hydrogenation are represented by ma' and mb', respectively, the ratio of ma' to mb' is from 5 : 95 to 95 : 5, preferably from 30 : 70 to 95 : 5, more preferably from 40 : 60 to 90 : 10. When the ratio of ma' to mb' is within this range, the mechanical strength and heat resistance of the copolymer are superior. The molecular weight of the preferable block copolymer before hydrogenation is from 12,000 to 400,000, preferably from 19,000 to 350,000, more preferably from 25,000 to 300,000 as the weight-average molecular weight (Mw) thereof relative to polystyrene (or polyisoprene) standards, which is measured by GPC using THF as a solvent. If the molecular weight Mw of the block copolymer is too small, the mechanical strength lowers. If the molecular weight Mw is too large, the hydrogenation rate of the block copolymer lowers.

The molecular weight distribution of the preferable block copolymer before hydrogenation may be appropriately selected in accordance with the use purpose thereof. The ratio Mw / Mn wherein Mw is defined above and Mn is the number-average molecular weight of the block copolymer relative to polystyrene (polyisoprene) standards, which is measured by GPC, is 5 or less, preferably 4 or less, more preferably 3 or less. When the ratio Mw / Mn is within this range, the hydrogenation rate is improved. The glass transition temperature (Tg) of the preferable block copolymer before hydrogenation may be appropriately selected in accordance with the use purpose thereof, and is from 70 to 150 °C, preferably from 80 to 140 °C, more preferably from 90 to 130 °C as a measured value at high temperatures with a DSC.

The method for hydrogenating carbon-carbon unsaturated bonds in unsaturated rings, such as aromatic rings or cycloalkene rings, of the block copolymer before hydrogenation, unsaturated bonds in the main chain or side chains of the copolymer, and other unsaturated bonds, and the reaction form of the hydrogenation are not particularly limited. Thus, the hydrogenation may be performed in accordance with a known method. A hydrogenation method which can make the hydrogenation rate of the unsaturated bonds high and less causes polymer chain cleavage reaction is preferable. An example thereof is a method of using a catalyst containing at least one kind of metal selected from nickel, cobalt, iron, titanium, rhodium, palladium, platinum, ruthenium, and rhenium in an organic solvent. The hydrogenation catalyst may be a heterogeneous catalyst or homogeneous catalyst.

The heterogeneous catalyst can be used in a metal or metal compound state, or in the state that the catalyst is carried on a suitable carrier. Examples of the carrier include activated carbon, silica, alumina, calcium carbide, titania, magnesia, zirconia, diatomaceous earth, and silicon carbide. The amount of the carried catalyst is usually from 0.01 to 80 % by weight, preferably from 0.05 to 60 % by weight. The homogeneous catalyst may be a catalyst wherein a nickel, cobalt, titanium or iron compound is combined with an organic metal compound (such as an organic aluminum compound or an organic lithium compound), or an organic metal complex catalyst comprising rhodium, palladium, platinum, ruthenium, rhenium or the like. Examples of the nickel, cobalt, titanium or iron compound include acetylacetone salts, naphthonic acid salts, cyclopentadienyl compounds and cyclopentadienyldichloro compounds of the metals. Preferable examples of the organic aluminum compound include alkylaluminum compounds such as triethylaluminum and triisobutylaluminum; halogenated aluminum compounds such as diethylaluminum chloride and ethylaluminum dichloride; and alkylaluminum hydrides such as diisobutylaluminum hydride.

Examples of the organic metal complex catalyst include γ-dichloro-π-benzene complexes of the above-mentioned metals, dichloro-tris(triphenylphosphine) complexes thereof, and hydride-chloro-triphenylphosphine complexes thereof. These hydrogenation catalysts may be used alone or in combination of two or more thereof. The amount of the used catalyst(s) is preferably from 0.01 to 100 parts by weight, more preferably from 0.05 to 50 parts by weight, even more preferably from 0.1 to 30 parts by weight for 100 parts by weight of the polymer. The temperature for the hydrogenation reaction is usually from 10 to 250 °C. The temperature is preferably from 50 to 200 °C, more preferably from 80 to 180 °C since the hydrogenation rate can be made high and polymer chain cleavage reaction can be decreased. The pressure for the hydrogenation is preferably from 0.1 to 30 MPa. The pressure is more preferably from 1 to 20 MPa, even more preferably from 2 to 10 MPa for the above-mentioned reasons and the operability of the hydrogenation.

The hydrogenation rate of the thus-obtained block copolymer, which is according to 1H-NMR, is preferably 90 % or more, more preferably 95 % or more, even more preferably 97 % or more about each case of carbon-carbon unsaturated bonds in the main chain and side chains of the block copolymer, and the case of carbon-carbon unsaturated bonds in aromatic rings or cycloalkene rings thereof. If the hydrogenation rate is low, the birefringence of the resultant copolymer is high and the thermal stability thereof deteriorates. After the finish of the hydrogenation, the block copolymer can be collected by a method of removing the hydrogenation catalyst from the reaction solution by filtration, centrifugation or some other method and then removing the solvent directly by drying; or method of pouring the reaction solution into a poor solvent for the block copolymer so as to solidify the block copolymer.

Various compounding agents may be incorporated into the above-mentioned block copolymer if necessary. The kinds of the compounding agents are not particularly limited, and examples thereof include stabilizers such as an antioxidant, a thermal stabilizer, a light stabilizer, a weather stabilizer, an ultraviolet absorbent, and a near infrared absorbent; resin modifiers such as a lubricant and a plasticizer; coloring agents such as dye and pigment; an antistatic agent; a flame retardant; and a filler. These compounding agents may be used alone or in combination of two or more thereof. The amount thereof can be appropriately selected as far as the advantageous effects of the invention are not damaged.

Of the above-mentioned compounding agents, an antioxidant, an ultraviolet absorbent, and a light stabilizer are preferably incorporated into the copolymer in the invention. Examples of the antioxidant include phenol type antioxidants, phosphorus-containing antioxidants, and sulfur-containing antioxidants. Of these antioxidants, phenol type antioxidants are preferable and alkyl-substituted phenol type antioxidants are particularly preferable. The incorporation of these antioxidants makes it possible to prevent coloring of the lens to be obtained or a fall in the strength thereof, resulting from oxidation and deterioration at the time of molding into the lens, without lowering the transparency, the heat resistance or other properties of the lens. These antioxidants may be used alone or in combination of two or more thereof. The blend amount thereof is appropriately selected as far as the attainment of the objects of the invention is not hindered, and is preferably from 0.001 to 5 parts by weight, more preferably from 0.01 to 1 part by weight for 100 parts by weight of the block copolymer related to the invention.

Examples of the ultraviolet absorbent include benzophenone ultraviolet absorbents such as 2,4-dihydroxybenzophenone, 2-hydroxy-4-methoxybenzophenone, 2,2'-dihydroxy-4-methoxybenzophenone, 2,2'-dihydroxy-4,4'-dimethoxybenzophenone, 2-hydroxy-4-methoxy-2'-benzophenone, 2-hydroxy-4-methoxy-5-sulfobenzophenone trihydrate, 2-hydroxy-4-n-octoxybenzophenone, 2,2',4,4'-tetrahydroxybenzophenone, 4-dodecyloxy-2-hydroxybenzophenone, and bis(5-benzoyl-4-hydroxy-2-methoxyphenyl)methane; and benzotriazol ultraviolet absorbents such as 2-(2'-hydroxy-5'-methyl-phenyl)benzotriazol, 2-(2H-benzotriazol-2-yl)-4-methyl-6-(3,4,5,6-tetrahydrophthalimidylmethyl)phenol, 2-(2H-benzotriazol-2-yl)-4,6-bis(1-methyl-1-phenylethyl)phenol, 2-(2'-hydroxy-3',5'-di-tert-butylphenyl)benzotriazol, 2-(2'-hydroxy-3'-tert-butyl-5'-methylphenyl)-5-chlorobenzotriazol, 2-(2'-hydroxy-5'-tert-octylphenyl)benzotriazol, 2-(2'-hydroxy-3',5'-di-tert-amylphenyl)benzotriazol, 2-[2'-hydroxy-3'-(3",4",5",6"-tetrahydrophthalimidemethyl)-5'-methylphenyl]benzotriazol, and 2,2'-methylenebis[4-(1,1,3,3-tetramethylbutyl)-6-(2H-benzotriazol-2-yl)phenol]. Of these examples, 2-(2'-hydroxy-5'-methyl-phenyl)benzotriazol, 2-(2H-benzotriazol-2-yl)-4-methyl-6-(3,4,5,6-tetrahydrophthalimidylmethyl)phenol, and 2-(2H-benzotriazol-2-yl)-4,6-bis(1-methyl-1-phenylethyl)phenol are preferable from the viewpoints of the heat resistance and low volatility thereof.

Examples of the light stabilizer include benzophenone light stabilizers, benzotriazol light stabilizers, and hindered amine light stabilizers. In the invention, hindered amine light stabilizers are preferable from the viewpoints of the transparency, the coloring resistance, and others of the lens. Of the hindered amine light stabilizers (referred to as the HALS, described above), preferable are ones having a molecular weight Mn of 1,000 to 10,000. More preferable are ones having a molecular weight Mn of 2,000 to 5,000, and even more preferable are ones having a molecular weight Mn of 2,800 to 3,800, the Mn being a number-average molecular weight relative to polystyrene standards, which is measured by GPC using THF as a solvent. If the Mn is too small, the used HALS cannot be incorporated in a necessary amount because of volatilization at the time of heating, melting, kneading and incorporating the HALS into the polymer or foaming or silver streaks are generated at the time of heating, meting and molding of the polymer, for example, injection molding thereof, so that the work stability thereof deteriorates. Moreover, when the lens is used for a long time in the state that a lamp is turned on, volatile components are generated as gas from the lens. If the Mn is too large, the dispersibility of the HALS into the block copolymer deteriorates so that the transparency of the lens lowers and the effect of improving the light resistance is decreased. In the invention, therefore, the setting of the Mn of the HALS into the above-mentioned range makes it possible to yield a lens superior in work stability, gas-generation reducing effect, and transparency.

Specific examples of the HALS include high molecular weight HALS wherein piperidine rings are bonded to each other through a triazine skeleton, such as N,N',N",N"'-tetrakis-[4,6-bis-{butyl-(N-methyl-2,2,6,6-tetramethylpiperidine-4-yl)amino}-triazine-2-yl]-4,7-diazadecane-1,10-diamine, a polycondensate of dibutylamine, 1,3,5-triazine and N,N'-bis(2,2,6,6-tetramethyl-4-piperidyl)butylamine, poly[{(1,1,3,3,-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], a polycondenstate of 1,6-hexanediamine-N,N'-bis(2,2,6,6-tetramethyl-4-piperidino) and morpholine-2,4,6-trichlro-1,3,5-triazine, and poly[(6-morpholino-s-triazine-2,4-diyl)(2,2,6,6-tetramethyl-4-piperidyl)imino]-hexamethylene[(2,2,6,6-tetramethyl-4-piperidyl)imino]; and high molecular weight HALS wherein piperidine rings are bonded to each other through an ester bond, such as a polymer of dimethyl succinate and 4-hydroxy-2,2,6,6-tetramethyl-1-piperidine ethanol, and a mixed ester of 1,2,3,4-butanetetracarboxylic acid, 1,2,2,6,6-pentamethyl-4-piperidinol and 3,9-bis(2-hydroxy-1,1-dimethylethyl)-2,4,8,10-tetraoxaspiro[5,5]undecane.

Of these examples, preferable are compounds having a molecular weight Mn of 2,000 to 5,000 such as the polycondensate of dibutylamine, 1,3,5-triazine and N,N'-bis(2,2,6,6-tetramethyl-4-piperidyl)butylamine, poly[{(1,1,3,3,-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], and the polymer of dimethyl succinate and 4-hydroxy-2,2,6,6-tetramethyl-1-piperidine ethanol.

The amount of the ultraviolet absorbent and HALS incorporated into the block copolymer used in the present invention is preferably from 0.01 to 20 parts by weight, more preferably from 0.02 to 15 parts by weight, even more preferably from 0.05 to 10 parts by weight for 100 parts by weight of the copolymer. If this amount is too small, the effect of improving the light resistance is not sufficiently obtained. Thus, if the copolymer is used outdoors for a long time, the copolymer is colored. On the other hand, if the amount of the HALS is too large, a part thereof is generated as gas and the dispersibility thereof into the copolymer lowers so that the transparency of the lens lowers. By incorporating, into the copolymer used in the invention, a soft polymer lowest glass transition temperature of which is 30 °C or lower, the copolymer can be prevented from becoming clouded, without lowering various properties such as transparency, heat resistance and mechanical strength, in a high-temperature and high-humidity environment for a long time.

Specific examples of the soft polymer include olefin soft polymers such as polyethylene, polypropylene, ethylene-α-olefin copolymer and ethylene-propylene-diene copolymer (EPDM); isobutyrene soft polymers such as polyisobutylene, isobutylene-isoprene rubber, and isobutylene-styrene copolymer; diene soft polymers such as polybutadiene, polyisoprene, butadiene-styrene random copolymer, isoprene-styrene random polymer, acrylonitrile-butadiene copolymer, acrylonitrile-butadiene-styrene copolymer, butadiene-styrene block copolymer, styrene-butadiene-styrene block copolymer, isoprene-styrene block copolymer, and styrene-isoprene-styrene block copolymer; silicon-containing soft polymers such as dimethylpolysiloxane and diphenylpolysiloxane; acrylic soft polymers such as polybutyl acrylate, polybutyl methacrylate, and polyhydroxyethyl methacrylate; epoxy soft polymers such as polyethylene oxide, polypropylene oxide and epichlorohydrin rubber; fluorine-containing soft polymers such as vinylidene fluoride rubber, and ethylene tetrafluoride-propylene rubber; and other soft polymers such as natural rubber, polypeptide, protein, polyester thermoplastic elastomer, vinyl chloride thermoplastic elastomer, and polyamide thermoplastic elastomer. These soft polymers may have crosslinked structure or have functional groups introduced by modifying-reaction.

Of the above-mentioned polymers, diene soft polymers are preferable. Hydrogenated polymers wherein carbon-carbon unsaturated bonds in the diene soft polymers are hydrogenated are particularly excellent in rubber elasticity, mechanical strength, flexibility, and dispersibility. The blend amount of the soft polymer(s) is varied in accordance with the kind thereof. If the blend amount is too large, the glass transition temperature or the transparency of the polymer generally lowers to a large extent. Thus, the polymer cannot be used for a lens. If the blend amount is too small, the molded product may become clouded at high temperature and high humidity. The blend amount is preferably from 0.01 to 10 parts, more preferably from 0.02 to 5 parts, even more preferably from 0.05 to 2 parts by weight for 100 parts by weight of the block copolymer.

Examples of the method for blending the above-mentioned compounding agents with the polymer used in the invention to form a polymer composition include a method of making the block copolymer into a melted state by means of a mixer, a biaxial kneader, a roll, a brabender, an extruder or the like and then kneading the copolymer together with the compounding agents; and a method of dissolving the compounding agents into an appropriate solvent, dispersing the copolymer into the resultant solution, and solidifying the dispersion. In the case that the biaxial kneader is used, the polymer composition after being kneaded is usually extruded, in a melted state, into the form of strands and then the strands are cut into a pellet form with a pelletizer in many cases. The polymer having an alicyclic structure, used in the invention, may be a norbornene type ring-opened polymer or a hydrogenated norbornene type ring-opened polymer. Preferable examples of such a polymer include polymers described in Japanese Patent Application Laid-Open Nos. 2004-2795, 2003-301032 and 2003-292586.

Although the present invention has been described and illustrated in detail, it is clearly understood that the same is by way of illustration and example only and is not to be taken by way of limitation, the scope of the present invention being limited only by the terms of the appended claims.

### Industrial applicability

As described above, according to the present invention it is possible to provide an optical pickup apparatus that has a simple construction, that achieves compatibility with three different types of recording medium including a next-generation format, and that employs a diffractive optical element offering high diffraction efficiency and easy to fabricate.

## Claims

1. A diffractive optical element (17) comprising:
a first diffractive surface (17a) that neither diffracts a light beam (21a) of a first wavelength λ1 nor a light beam (21c) of a third wavelength λ3 but diffracts a light beam (21b) of a second wavelength λ2, the wavelengths λ1, λ2, and λ3 being different from each other; and
a second diffractive surface (17b) that neither diffracts the light beam (21a) of the first wavelength λ1 nor the light beam (21b) of the second wavelength λ2 but diffracts the light beam (21c) of the third wavelength λ3,
the diffractive optical element (17) being a single element wherein the first diffractive surface (17a) is formed at one of the light beam entrance side or the light beam exit side of this element, and the second diffractive surface (17b) is formed at the other side, and
wherein the first diffractive surface is in a shape of concentric circles having a step-shaped section and comprises a repeated pattern of four steps,
wherein a plurality of repeated patterns of four steps face in the same direction to the optical axis of the diffractive optical element,
wherein the second diffractive surface is in a shape of concentric circles having a step-shaped cross section and comprises a repeated pattern of a single step, and
the one single step is up from a bottom surface of the diffractive optical element and the next single step is down from a top surface of the diffractive optical element.

2. The diffractive optical element (17) as claimed in claim 1, wherein the light beams (21a, 21b, 21c) of the wavelengths λ1, λ2 and λ3 have increasingly longer wavelengths in order from the wavelength λ1 through the wavelength λ2 to the wavelength λ3 and an optical path difference generated in the height of each step in a lattice section (17c, 17d) which is arranged in each of the first (17a) and second (17b) diffractive surfaces and has a step-shaped cross section is an integral multiple of λ1.

3. The diffractive optical element (17) as claimed in claim 1, wherein each of the light beam (21a) of the wavelength λ1, the light beam (21b) of the wavelength λ2, and the light beam (21c) of the wavelength λ3 enters the diffractive optical element (17) as a parallel beam.

4. The diffractive optical element (17) as claimed in claim 1, wherein the light beam (21b) of the second wavelength λ2 is diffracted on the first diffractive optical surface (17a) to convert a parallel beam to a divergent beam, and the light beam (21c) of the third wavelength λ3 is diffracted on the second diffractive optical surface (17b) to convert a parallel beam to a divergent beam.

5. The diffractive optical element (17) as claimed in claim 1, which is made of an optical resin.

6. The diffractive optical element (17) as claimed in claim 5, wherein the optical resin is an ultraviolet curable resin.

7. An optical pickup apparatus comprising:
the diffractive optical element (17) of claim 1; and
an objective lens (18) that focuses the light beam (21a) of the first wavelength λ1, the light beam (21b) of the second wavelength λ2 and the light beam (21c) of the third wavelength λ3 on a first recording medium (19a), a second recording medium (19b), and a third recording medium (19c), respectively.

8. The optical pickup apparatus as claimed in claim 7, wherein the light beams (21a, 21b, 21c) of the wavelengths λ1, λ2 and λ3 have increasingly longer wavelengths in order from the wavelength λ1 through the wavelength λ2 to the wavelength λ3 and an optical path difference generated in the height of each step in a lattice section (17c, 17d) which is arranged in each of the first (17a) and second (17b) diffractive surfaces and has a step-shaped cross section is an integral multiple of 1.

9. The optical pickup apparatus as claimed in claim 7, wherein each of the light beam (21a, 21b, 21c) of the wavelength λ1, the light beam of the wavelength λ2, and the light beam of the wavelength λ3 enters the diffractive optical element (17) as a parallel beam.

10. The optical pickup apparatus as claimed in claim 7, wherein the light beam (21b) of the second wavelength λ2 is diffracted on the first diffractive optical surface (17a) to convert a parallel beam to a divergent beam, and the light beam (21c) of the third wavelength λ3 is diffracted on the second diffractive optical surface (17b) to convert a parallel beam to a divergent beam.

11. The optical pickup apparatus as claimed in claim 7, wherein the diffractive optical element (17) and the objective lens (18) are held in such a way that relative position relationship therebetween remains fixed.

12. The optical pickup apparatus as claimed in claim 7, wherein the diffractive optical element (17) is made of an optical resin.

13. The optical pickup apparatus as claimed in claim 12, wherein the optical resin is an ultraviolet curable resin.

14. The diffractive optical element of any one of claims 1 to 6, wherein the following formulas are satisfied: $λ ⁢ 1 < λ ⁢ 2 < λ ⁢ 3$ $H ⁢ 1 = 2 ⋅ λ ⁢ 1 / \left(n⁢1-1\right)$ $H ⁢ 2 = 5 ⋅ λ ⁢ 1 / \left(n⁢1-1\right)$
where H1 represents a height of one step of the first diffractive surface, H2 represents a height of one step of the second diffractive surface, n1 represents a refractive index of the diffractive optical element at the wavelength λ1.

15. The diffractive optical element of any one of claims 1 to 6 and 14, wherein the light beam of the first wavelength λ1 is used for a first recording medium, the light beam of the second wavelength λ2 is used for a second recording medium and the light beam for the third wavelength is used for a third recording medium,
wherein the first diffractive surface is formed only in a numerical aperture for the second recording medium, and
wherein the following formula is satisfied: $λ ⁢ 1 < λ ⁢ 2 < λ ⁢ 3.$

16. The diffractive optical element of claim 15, wherein the light beam of the second wavelength λ2 which passes through an area outside of the first diffractive surface does not form any image on an information recording surface of the second recording medium and becomes a flare component.

17. The diffractive optical element of any one of claims 1 to 6 and 14 to 16, wherein the light beam of the first wavelength λ1 is used for a first recording medium, the light beam of the second wavelength λ2 is used for a second recording medium and the light beam for the third wavelength λ3 is used for a third recording medium, and
wherein almost all of the light quantity of the light beam of the third wavelength λ3 that enters the second diffractive surface is divided into positive primary diffractive light and negative primary diffractive light.

18. The diffractive optical element of claim 17, wherein the negative primary diffractive light is not used for recording or reproducing of any information on or from the third recording medium.

19. The diffractive optical element of claim 17 or 18, a distance between a focus of the positive primary diffractive light and a focus of the negative primary diffractive light is larger than an operating distance for the third recording medium.

20. The optical pickup apparatus of any one of claims 7 to 13, wherein the following formulas are satisfied: $λ ⁢ 1 < λ ⁢ 2 < λ ⁢ 3$ $H ⁢ 1 = 2 ⋅ λ ⁢ 1 / \left(n⁢1-1\right)$ $H ⁢ 2 = 5 ⋅ λ ⁢ 1 / \left(n⁢1-1\right)$
where H1 represents a height of one step of the first diffractive surface, H2 represents a height of one step of the second diffractive surface, n1 represents a refractive index of the diffractive optical element at the wavelength λ1.

21. The optical pickup apparatus of any one of claim 7 to 13 and 20, wherein the first diffractive surface is formed only in a numerical aperture for the second recording medium, and
wherein the following formula is satisfied: $λ ⁢ 1 < λ ⁢ 2 < λ ⁢ 3.$

22. The optical pickup apparatus of claim 21, wherein the light beam of the second wavelength λ2 which passes through an area outside of the first diffractive surface does not form any image on an information recording surface of the second recording medium and becomes a flare component.

23. The optical pickup apparatus of any one of claims 7 to 13 and 20 to 22, wherein almost all of the light quantity of the light beam of the third wavelength λ3 that enters the second diffractive surface is divided into positive primary diffractive light and negative primary diffractive light.

24. The optical pickup apparatus of claim 23, wherein the negative primary diffractive light is not used for the recording or reproducing of any information on or from the third recording medium.

25. The optical pickup apparatus of claim 23 or 24, a distance between a focus of the positive primary diffractive light and a focus of the negative primary diffractive light is larger than an operating distance for the third recording medium.

26. An objective lens unit comprising:
a diffractive optical element; and
an objective lens that focuses a light beam of a first wavelength λ1, a light beam of a second wavelength λ2 and a light beam of a third wavelength λ3 on a first recording medium, a second recording medium, and a third recording medium, respectively, the wavelength λ1, λ2 and λ3 being different from each other, wherein
the diffractive optical element comprises:
a first diffractive surface (17a) that neither diffracts the light beam (21a) of the first wavelength λ1 nor the light beam (21c) of the third wavelength λ3 but diffracts the light beam (21b) of the second wavelength λ2; and
a second diffractive surface (17b) that neither diffracts the light beam (21a) of the first wavelength X1 nor the light beam (21b) of the second wavelength λ2 but diffracts the light beam (21c) of the third wavelength λ3, and
the diffractive optical element (17) is a single element wherein the first diffractive surface (17a) is formed at one of the light beam entrance side or the light beam exit side of this element, and the second diffractive surface (17b) is formed at the other side, and
wherein the first diffractive surface is in a shape of concentric circles having a step-shaped section and comprises a repeated pattern of four steps,
wherein a plurality of repeated patterns of four steps face in the same direction to the optical axis of the diffractive optical element,
wherein the second diffractive surface is in a shape of concentric circles having a step-shaped cross section and comprises a repeated pattern of a single step, and
the one single step is up from a bottom surface of the diffractive optical element and the next single step is down from a top surface of the diffractive optical element.

27. The objective lens unit of claim 26, wherein the light beams of the wavelength λ1, λ2 and λ3 have increasingly longer wavelength in order from the wavelength λ1 through the wavelength λ2 to the wavelength λ3 and an optical path difference generated in the height of each step in a lattice section which is arranged in each of the first and second diffractive surfaces and has a step-shaped cross section is an integral multiple of λ1.

28. The objective lens unit of claim 26 or 27, wherein each of the light beam of the wavelength λ1, the light beam of the wavelength λ2, and the light beam of the wavelength λ3 enters the diffractive optical element as a parallel beam.

29. The objective lens unit of any one of claim 26 to 28, wherein the light beam of the second wavelength λ2 is diffracted on the first diffractive surface to convert a parallel beam to a divergent beam, and the light beam of the third wavelength λ3 is diffracted on the second diffractive surface to convert a parallel beam to a divergent beam.

30. The objective lens unit of any one of claim 26 to 29, wherein the diffractive optical element and the objective lens are held in such a way that relative position relationship therebetween remains fixed.

31. The objective lens unit of any one of claim 26 to 30, wherein the diffractive optical element is made of plastic, and the objective lens is made of plastic.

32. The objective lens unit of any one of claim 26 to 30, wherein the diffractive optical element is made of plastic and the objective lens is made of glass.

33. The objective lens unit of any one of claim 26 to 32, wherein the following formulas are satisfied: $λ ⁢ 1 < λ ⁢ 2 < λ ⁢ 3$ $H ⁢ 1 = 2 ⋅ λ ⁢ 1 / \left(n⁢1-1\right)$ $H ⁢ 2 = 5 ⋅ λ ⁢ 1 / \left(n⁢1-1\right)$
where H1 represents a height of one step of the first diffractive surface, H2 represents a height of one step of the second diffractive surface, n1 represents a refractive index of the diffractive optical element at the wavelength λ1.

34. The objective lens unit of any one of claim 26 to 33, wherein the first diffractive surface is formed only in a numerical aperture for the second recording medium, and
wherein the following formula is satisfied: $λ ⁢ 1 < λ ⁢ 2 < λ ⁢ 3.$

35. The objective lens unit of any one of claim 26 to 34, wherein the light beam of the second wavelength λ2 which passes through an area outside of the first diffractive surface does not form any image on an information recording surface of the second recording medium and becomes a flare component.

36. The objective lens unit of any one of claim 26 to 35, wherein almost all of the light quantity of the light beam of the third wavelength λ3 that enters the second diffractive surface is divided into positive primary diffractive light and negative primary diffractive light.

37. The objective lens unit of claim 36, wherein the negative primary diffractive light is not used for the recording or reproducing of any information on or from the third recording medium.

38. The objective lens unit of claim 36, a distance between a focus of the positive primary diffractive light and a focus of the negative primary diffractive light is larger than an operating distance for the third recording medium.

39. The diffractive optical element (17) of claim 1 to 6 and 14 to 19, wherein each of the first (17a) and second (17b) diffractive surfaces satisfies the following condition inequality: $Λ / λ \geq 8$
wherein
A represents the minimum pitch of the first and second diffractive surfaces in the case that the width which generates a phase difference of one wavelength when the wavefronts resulting from adjacent steps in each of the diffractive surfaces are linked with each other is defined as one pitch, the minimum pitch defined as the width of the smallest pitch in the same diffractive surface and
λ represents the wavelength of the diffracted light.

40. The optical pickup apparatus of claim 7 to 13 and 20 to 25, wherein each of the first and second diffractive surfaces satisfies the following condition inequality: $Λ / λ \geq 8$
wherein
Λ represents the minimum pitch of the first and second diffractive surfaces in the case that the width which generates a phase difference of one wavelength when the wavefronts resulting from adjacent steps in each of the diffractive surfaces are linked with each other is defined as one pitch, the minimum pitch defined as the width of the smallest pitch in the same diffractive surface and
λ represents the wavelength of the diffracted light.

41. The objective lens unit of any one of claim 26-38, wherein each of the first and second diffractive surfaces satisfies the following condition inequality: $Λ / λ \geq 8$
wherein
Λ represents the minimum pitch of the first and second diffractive surfaces in the case that the width which generates a phase difference of one wavelength when the wavefronts resulting from adjacent steps in each of the diffractive surfaces are linked with each other is defined as one pitch, the minimum pitch defined as the width of the smallest pitch in the same diffractive surface and
λ represents the wavelength of the diffracted light.

## Patentansprüche

1. Optisches Beugungselement (17) mit:
einer ersten Beugungsoberfläche (17a), die weder einen Lichtstrahl (21a) einer ersten Wellenlänge λ1 noch einen Lichtstrahl (21c) einer dritten Wellenlänge λ3 beugt, sondern einen Lichtstrahl (21b) einer zweiten Wellenlänge λ2 beugt, wobei die Wellenlängen λ1, λ2 und λ3 unterschiedlich zueinander sind; und
einer zweiten Beugungsoberfläche (17b), die weder den Lichtstrahl (21a) der ersten Wellenlänge λ1 noch den Lichtstrahl (21b) der zweiten Wellenlänge λ2 beugt, sondern den Lichtstrahl (21c) der dritten Wellenlänge λ3 beugt,
wobei das optische Beugungselement (17) ein Einzelelement ist, bei dem die erste Beugungsoberfläche (17a) auf der Lichtstrahl-Eintrittsseite oder der Lichtstrahl-Austrittsseite dieses Elements ausgebildet ist und die zweite Beugungsoberfläche (17b) auf der anderen Seite ausgebildet ist, und
bei dem die erste Beugungsoberfläche in einer Form von konzentrischen Kreisen ausgebildet ist, die einen stufenförmigen Abschnitt aufweist, und ein wiederholtes Muster von vier Stufen aufweist,
wobei mehrere wiederholte Muster von vier Stufen in dieselbe Richtung zu der optischen Achse des optischen Beugungselements zeigen,
bei dem die zweite Beugungsoberfläche in einer Form von konzentrischen Kreisen ausgebildet ist, die einen stufenförmigen Querschnitt aufweist, und ein wiederholtes Muster einer Einzelstufe aufweist, und
die eine Einzelstufe oberhalb einer Bodenoberfläche des optischen Beugungselements liegt und die nächste Einzelstufe unterhalb einer obersten Oberfläche des optischen Beugungselements liegt.

2. Optisches Beugungselement (17) nach Anspruch 1, bei dem die Lichtstrahlen (21a, 21b, 21c) der Wellenlängen λ1, λ2 und λ3 ansteigend längere Wellenlängen in der Reihenfolge von der Wellenlänge λ1 über die Wellenlänge λ2 zu der Wellenlänge λ3 aufweisen und ein Gangunterschied, der in der Höhe jeder Stufe in einem Gitterabschnitt (17c, 17d) erzeugt ist, der in der ersten (17a) und zweiten (17b) Beugungsoberfläche angeordnet ist und einen stufenförmigen Querschnitt aufweist, ein ganzzahliges Vielfaches von λ1 ist.

3. Optisches Beugungselement (17) nach Anspruch 1, bei dem der Lichtstrahl (21a) der Wellenlänge λ1, der Lichtstrahl (21b) der Wellenlänge λ2 und der Lichtstrahl (21c) der Wellenlänge λ3 in das optische Beugungselement (17) jeweils als ein Parallelstrahl eintreten.

4. Optisches Beugungselement (17) nach Anspruch 1, bei dem der Lichtstrahl (21b) der zweiten Wellenlänge λ2 an der ersten optischen Beugungsoberfläche (17a) gebeugt wird, sodass ein Parallelstrahl in einen divergenten Strahl konvertiert wird, und der Lichtstrahl (21c) der dritten Wellenlänge λ3 an der zweiten optischen Beugungsoberfläche (17b) gebeugt wird, sodass ein Parallelstrahl in einen divergenten Strahl konvertiert wird.

5. Optisches Beugungselement (17) nach Anspruch 1, das aus einem optischen Harz hergestellt ist.

6. Optisches Beugungselement (17) nach Anspruch 5, bei dem das optische Harz ein ultraviolett-härtbares Harz ist.

7. Optische Abnehmer-Vorrichtung mit:
dem optischen Beugungselement (17) nach Anspruch 1; und
einer Objektivlinse (18), die den Lichtstrahl (21a) der ersten Wellenlänge λ1, den Lichtstrahl (21b) der zweiten Wellenlänge λ2 und den Lichtstrahl (21c) der dritten Wellenlänge λ3 entsprechend auf ein erstes Aufzeichnungsmedium (19a), ein zweites Aufzeichnungsmedium (19b) und ein drittes Aufnahmemedium (19c) bündelt.

8. Optische Abnehmer-Vorrichtung nach Anspruch 7,
bei der die Lichtstrahlen (21a, 21b, 21c) der Wellenlängen λ1, λ2 und λ3 ansteigend längere Wellenlängen in der Reihenfolge von der Wellenlänge λ1 über die Wellenlänge λ2 zu der Wellenlänge λ3 aufweisen und ein Gangunterschied, der in der Höhe jeder Stufe in einem Gitterabschnitt (17c, 17d) erzeugt wird, der in der ersten (17a) und zweiten (17b) Beugungsoberfläche angeordnet ist und einen stufenförmigen Querschnitt aufweist, ein ganzzahliges Vielfaches von λ1 ist.

9. Optische Abnehmer-Vorrichtung nach Anspruch 7, bei der der Lichtstrahl (21a, 21b, 21c) der Wellenlänge λ1, der Lichtstrahl der Wellenlänge λ2 und der Lichtstrahl der Wellenlänge λ3 in das optische Beugungselement (17) jeweils als ein Parallelstrahl eintreten.

10. Optische Abnehmer-Vorrichtung nach Anspruch 7, bei welcher der Lichtstrahl (21b) der zweiten Wellenlänge λ2 an der ersten optischen Beugungsoberfläche (17a) gebeugt wird, sodass ein Parallelstrahl in einen divergenten Strahl konvertiert wird, und der Lichtstrahl (21c) der dritten Wellenlänge λ3 an der zweiten optischen Beugungsoberfläche (17b) gebeugt wird, sodass ein Parallelstrahl in einen divergenten Strahl konvertiert wird.

11. Optische Abnehmer-Vorrichtung nach Anspruch 7,
bei der das optische Beugungselement (17) und die Objektivlinse (18) derart gehalten sind, dass eine Beziehung einer relativen Position dazwischen fest bleibt.

12. Optische Abnehmer-Vorrichtung nach Anspruch 7, bei der das optische Beugungselement (17) aus einem optischen Harz hergestellt ist.

13. Optische Abnehmer-Vorrichtung nach Anspruch 12,
bei dem das optische Harz ein ultraviolett-härtbares Harz ist.

14. Optisches Beugungselement nach einem der Ansprüche 1 bis 6, bei dem die folgenden Gleichungen erfüllt sind: $λ ⁢ 1 < λ ⁢ 2 < λ ⁢ 3$ $H ⁢ 1 = 2 ⋅ λ ⁢ 1 / \left(n⁢1-1\right)$ $H ⁢ 2 = 5 ⋅ λ ⁢ 1 / \left(n⁢1-1\right) ,$
wobei H1 eine Höhe einer Stufe der ersten Beugungsoberfläche darstellt, H2 eine Höhe einer Stufe der zweiten Beugungsoberfläche darstellt, n1 einen Brechungsindex des optischen Beugungselements bei der Wellenlänge λ1 darstellt.

15. Optisches Beugungselement nach einem der Ansprüche 1 bis 6 und 14, bei dem der Lichtstrahl der ersten Wellenlänge λ1 für ein erstes Aufzeichnungsmedium verwendet wird, der Lichtstrahl der zweiten Wellenlänge λ2 für ein zweites Aufzeichnungsmedium verwendet wird und der Lichtstrahl für die dritte Wellenlänge für ein drittes Aufzeichnungsmedium verwendet wird,
bei dem die erste Beugungsoberfläche nur in einer numerischen Apertur für das zweite Aufzeichnungsmedium ausgebildet ist und
bei dem die folgende Gleichung erfüllt ist: $λ ⁢ 1 < λ ⁢ 2 < λ ⁢ 3.$

16. Optisches Beugungselement nach Anspruch 15, bei dem der Lichtstrahl der zweiten Wellenlänge λ2, der durch eine Fläche außerhalb der ersten Beugungsoberfläche hindurchtritt, kein Bild auf einer Informationsaufzeichnungsoberfläche des zweiten Aufzeichnungsmediums ausbildet und zu einer Reflex-Komponente wird.

17. Optisches Beugungselement nach einem der Ansprüche 1 bis 6 und 14 bis 16, bei dem der Lichtstrahl der ersten Wellenlänge λ1 für ein erstes Aufzeichnungsmedium verwendet wird, der Lichtstrahl der zweiten Wellenlänge λ2 für ein zweites Aufzeichnungsmedium verwendet wird und der Lichtstrahl der dritten Wellenlänge λ3 für ein drittes Aufzeichnungsmedium verwendet wird und
bei dem fast die gesamte Lichtmenge des Lichtstrahls der dritten Wellenlänge λ3, der in die zweite Beugungsoberfläche eintritt, in ein positives Primärbeugungslicht und ein negatives Primärbeugungslicht geteilt wird.

18. Optisches Beugungselement nach Anspruch 17, bei dem das negative Primärbeugungslicht nicht zum Aufzeichnen oder Wiedergeben einer Information auf das oder von dem dritten Aufzeichnungsmedium verwendet wird.

19. Optisches Beugungselement nach Anspruch 17 oder 18, bei dem ein Abstand zwischen einem Brennfleck des positiven Primärbeugungslichts und einem Brennfleck des negativen Primärbeugungslichts größer als ein Betriebsabstand für das dritte Aufzeichnungsmedium ist.

20. Optische Abnehmer-Vorrichtung nach einem der Ansprüche 7 bis 13, bei der die folgenden Gleichungen erfüllt sind: $λ ⁢ 1 < λ ⁢ 2 < λ ⁢ 3$ $H ⁢ 1 = 2 ⋅ λ ⁢ 1 / \left(n⁢1-1\right)$ $H ⁢ 2 = 5 ⋅ λ ⁢ 1 / \left(n⁢1-1\right) ,$
wobei H1 eine Höhe einer Stufe der ersten Beugungsoberfläche darstellt, H2 eine Höhe einer Stufe der zweiten Beugungsoberfläche darstellt, n1 einen Brechungsindex des optischen Beugungselements bei der Wellenlänge λ1 darstellt.

21. Optisches Beugungselement nach einem der Ansprüche 7 bis 13 und 20, bei dem die erste Beugungsoberfläche nur in einer numerischen Apertur für das zweite Aufzeichnungsmedium ausgebildet ist und
bei dem die folgende Gleichung erfüllt ist: $λ ⁢ 1 < λ ⁢ 2 < λ ⁢ 3.$

22. Optische Abnehmer-Vorrichtung nach Anspruch 21, bei der der Lichtstrahl der zweiten Wellenlänge λ2, der durch eine Fläche außerhalb der ersten Beugungsoberfläche hindurchtritt, kein Bild auf einer Informationsaufzeichnungsoberfläche des zweiten Aufzeichnungsmediums ausbildet und zu einer Reflex-Komponente wird.

23. Optische Abnehmer-Vorrichtung nach einem der Ansprüche 7 bis 13 und 20 bis 22, bei der fast die gesamte Lichtmenge des Lichtstrahls der dritten Wellenlänge λ3, der in die zweite Beugungsoberfläche eintritt, in ein positives Primärbeugungslicht und ein negatives Primärbeugungslicht geteilt wird.

24. Optische Abnehmer-Vorrichtung nach Anspruch 23, bei der das negative Primärbeugungslicht nicht zum Aufzeichnen oder Wiedergeben einer Information auf das oder von dem dritten Aufzeichnungsmedium verwendet wird.

25. Optische Abnehmer-Vorrichtung nach Anspruch 23 oder 24, bei der ein Abstand zwischen einem Brennfleck des positiven Primärbeugungslichts und einem Brennfleck des negativen Primärbeugungslichts größer als ein Betriebsabstand für das dritte Aufzeichnungsmedium ist.

26. Objektivlinseneinheit mit:
einem optischen Beugungselement; und
einer Objektivlinse, die einen Lichtstrahl einer ersten Wellenlänge λ1, einen Lichtstrahl einer zweiten Wellenlänge λ2 und einen Lichtstrahl einer dritten Wellenlänge λ3 entsprechend auf ein erstes Aufzeichnungsmedium, ein zweites Aufzeichnungsmedium und ein drittes Aufnahmemedium bündelt, wobei die Wellenlängen λ1, λ2 und λ3 unterschiedlich zueinander sind, wobei
das optische Beugungselement aufweist:
eine erste Beugungsoberfläche (17a), die weder den Lichtstrahl (21a) der ersten Wellenlänge λ1 noch den Lichtstrahl (21c) der dritten Wellenlänge λ3 beugt, sondern den Lichtstrahl (21b) der zweiten Wellenlänge λ2 beugt; und
eine zweite Beugungsoberfläche (17b), die weder den Lichtstrahl (21a) der ersten Wellenlänge λ1 noch den Lichtstrahl (21b) der zweiten Wellenlänge λ2 beugt, sondern den Lichtstrahl (21c) der dritten Wellenlänge λ3 beugt, und
wobei das optische Beugungselement (17) ein Einzelelement ist, bei dem die erste Beugungsoberfläche (17a) auf der Lichtstrahl-Eintrittsseite oder der Lichtstrahl-Austrittsseite dieses Elements ausgebildet ist und die zweite Beugungsoberfläche (17b) auf der anderen Seite ausgebildet ist, und
bei dem die erste Beugungsoberfläche in einer Form von konzentrischen Kreisen ausgebildet ist, die einen stufenförmigen Abschnitt aufweist, und ein wiederholtes Muster von vier Stufen aufweist,
wobei mehrere wiederholte Muster von vier Stufen in dieselbe Richtung zu der optischen Achse des optischen Beugungselements zeigen,
bei dem die zweite Beugungsoberfläche in einer Form von konzentrischen Kreisen ausgebildet ist, die einen stufenförmigen Querschnitt aufweist, und ein wiederholtes Muster einer Einzelstufe aufweist, und
die eine Einzelstufe oberhalb einer Bodenoberfläche des optischen Beugungselements liegt und die nächste Einzelstufe unterhalb einer obersten Oberfläche des optischen Beugungselements liegt.

27. Objektivlinseneinheit nach Anspruch 26, bei der die Lichtstrahlen der Wellenlängen λ1, λ2 und λ3 ansteigend längere Wellenlängen in der Reihenfolge von der Wellenlänge λ1 über die Wellenlänge λ2 zu der Wellenlänge λ3 aufweisen und ein Gangunterschied, der in der Höhe jeder Stufe in einem Gitterabschnitt erzeugt wird, der in der ersten und zweiten Beugungsoberfläche angeordnet ist und einen stufenförmigen Querschnitt aufweist, ein ganzzahliges Vielfaches von λ1 ist.

28. Objektivlinseneinheit nach Anspruch 26 oder 27, bei der
der Lichtstrahl der Wellenlänge λ1, der Lichtstrahl der Wellenlänge λ2 und der Lichtstrahl der Wellenlänge λ3 in das optische Beugungselement jeweils als ein Parallelstrahl eintreten.

29. Objektivlinseneinheit nach einem der Ansprüche 26 bis 28, bei der der Lichtstrahl der zweiten Wellenlänge λ2 an der ersten optischen Beugungsoberfläche gebeugt wird, sodass ein Parallelstrahl in einen divergenten Strahl konvertiert wird, und der Lichtstrahl der dritten Wellenlänge λ3 an der zweiten optischen Beugungsoberfläche gebeugt wird, sodass ein Parallelstrahl in einen divergenten Strahl konvertiert wird.

30. Objektivlinseneinheit nach einem der Ansprüche 26 bis 29, bei der das optische Beugungselement und die Objektivlinse derart gehalten sind, dass eine Beziehung einer relativen Position dazwischen fest bleibt.

31. Objektivlinseneinheit nach einem der Ansprüche 26 bis 30, bei der das optische Beugungselement aus Plastik hergestellt ist und die Objektivlinse aus Plastik hergestellt ist.

32. Objektivlinseneinheit nach einem der Ansprüche 26 bis 30, bei der das optische Beugungselement aus Plastik hergestellt ist und die Objektivlinse aus Glas hergestellt ist.

33. Objektivlinseneinheit nach einem der Ansprüche 26 bis 32, bei der die folgenden Gleichungen erfüllt sind: $λ ⁢ 1 < λ ⁢ 2 < λ ⁢ 3$ $H ⁢ 1 = 2 ⋅ λ ⁢ 1 / \left(n⁢1-1\right)$ $H ⁢ 2 = 5 ⋅ λ ⁢ 1 / \left(n⁢1-1\right) ,$
wobei H1 eine Höhe einer Stufe der ersten Beugungsoberfläche darstellt, H2 eine Höhe einer Stufe der zweiten Beugungsoberfläche darstellt, n1 einen Brechungsindex des optischen Beugungselements bei der Wellenlänge λ1 darstellt.

34. Objektivlinseneinheit nach einem der Ansprüche 26 bis 33, bei der die erste Beugungsoberfläche nur in einer numerischen Apertur für das zweite Aufzeichnungsmedium ausgebildet ist und
bei der die folgende Gleichung erfüllt ist: $λ ⁢ 1 < λ ⁢ 2 < λ ⁢ 3.$

35. Objektivlinseneinheit nach einem der Ansprüche 26 bis 34, bei der der Lichtstrahl der zweiten Wellenlänge λ2, der durch eine Fläche außerhalb der ersten Beugungsoberfläche hindurchtritt, kein Bild auf einer Informationsaufzeichnungsoberfläche des zweiten Aufzeichnungsmediums ausbildet und zu einer Reflex-Komponente wird.

36. Objektivlinseneinheit nach einem der Ansprüche 26 bis 35, bei der fast die gesamte Lichtmenge des Lichtstrahls der dritten Wellenlänge λ3, der in die zweite Beugungsoberfläche eintritt, in ein positives Primärbeugungslicht und ein negatives Primärbeugungslicht geteilt wird.

37. Objektivlinseneinheit nach Anspruch 36, bei der das negative Primärbeugungslicht nicht zum Aufzeichnen oder Wiedergeben einer Information auf das oder von dem dritten Aufzeichnungsmedium verwendet wird.

38. Objektivlinseneinheit nach Anspruch 36, bei der ein Abstand zwischen einem Brennfleck des positiven Primärbeugungslichts und einem Brennfleck des negativen Primärbeugungslichts größer als ein Betriebsabstand für das dritte Aufzeichnungsmedium ist.

39. Optisches Beugungselement (17) nach Anspruch 1 bis 6 und 14 bis 19, bei dem die erste (17a) und zweite (17b) Beugungsoberfläche die folgende Ungleichheitsbedingung erfüllen: $Λ / λ \geq 8 ,$
wobei
Λ die minimale Teilung der ersten und zweiten Beugungsoberfläche in dem Fall darstellt, dass die Weite, die einen Gangunterschied einer Wellenlänge erzeugt, wenn die Wellenfronten, die aus angrenzenden Stufen in jeder der Beugungsoberflächen resultieren, miteinander verbunden werden, als eine Teilung definiert ist, die minimale Teilung, die als die Weite der kleinsten Teilung in derselben Beugungsoberfläche definiert ist und
λ die Wellenlänge des gebeugten Lichts darstellt.

40. Optische Abnehmer-Vorrichtung nach Anspruch 7 bis 13 und 20 bis 25, bei der die erste und zweite Beugungsoberfläche die folgende Ungleichheitsbedingung erfüllen: $Λ / λ \geq 8 ,$
wobei
Λ die minimale Teilung der ersten und zweiten Beugungsoberfläche in dem Fall darstellt, dass die Weite, die einen Gangunterschied einer Wellenlänge erzeugt, wenn die Wellenfronten, die aus angrenzenden Stufen in jeder der Beugungsoberflächen resultieren, miteinander verbunden werden, als eine Teilung definiert ist, die minimale Teilung, die als die Weite der kleinsten Teilung in derselben Beugungsoberfläche definiert ist und
λ die Wellenlänge des gebeugten Lichts darstellt.

41. Objektivlinseneinheit nach einem der Ansprüche 26 bis 38, bei der die erste und zweite Beugungsoberfläche die folgende Ungleichheitsbedingung erfüllen: $Λ / λ \geq 8 ,$
wobei
Λ die minimale Teilung der ersten und zweiten Beugungsoberfläche in dem Fall darstellt, dass die Weite, die einen Gangunterschied einer Wellenlänge erzeugt, wenn die Wellenfronten, die aus angrenzenden Stufen in jeder der Beugungsoberflächen resultieren, miteinander verbunden werden, als eine Teilung definiert ist, die minimale Teilung, die als die Weite der kleinsten Teilung in derselben Beugungsoberfläche definiert ist und
λ die Wellenlänge des gebeugten Lichts darstellt.

## Revendications

1. Élément optique diffractif (17) comprenant :
une première surface diffractive (17a) qui ne diffracte ni un faisceau de lumière (21a) d'une première longueur d'onde λ1, ni un faisceau de lumière (21c) d'une troisième longueur d'onde λ3, mais diffracte un faisceau de lumière (21b) d'une deuxième longueur d'onde λ2, les longueurs d'onde λ1, λ2 et λ3 étant différentes les unes des autres ; et
une seconde surface diffractive (17b) qui ne diffracte ni le faisceau de lumière (21a) de la première longueur d'onde λ1, ni le faisceau de lumière (21b) de la deuxième longueur d'onde λ2, mais qui diffracte le faisceau de lumière (21c) de la troisième longueur d'onde λ3,
l'élément optique diffractif (17) étant un seule élément dans lequel la première surface diffractive (17a) est formée de l'un du côté d'entrée de faisceau de lumière ou du côté de sortie de faisceau de lumière de cet élément, et la seconde surface diffractive (17b) est formée de l'autre côté, et
dans lequel la première surface diffractive est en forme de cercles concentriques ayant une section en forme d'échelon et comprend un motif répété de quatre échelons,
dans lequel une pluralité de motifs répétés de quatre échelons font face dans la même direction à l'axe optique de l'élément optique diffractif,
dans lequel la seconde surface diffractive est en forme de cercles concentriques ayant une section transversale en forme d'échelon et comprend un motif répété d'un seul échelon, et
le seul échelon est dressé à partir d'une surface de fond de l'élément optique diffractif et le seul échelon suivant va vers le bas à partir d'une surface supérieure de l'élément optique diffractif.

2. Élément optique diffractif (17) selon la revendication 1, dans lequel les faisceaux de lumière (21a, 21b, 21c) des longueurs d'onde λ1, λ2 et λ3 ont des longueurs d'onde de plus en plus longues dans un ordre de la longueur d'onde λ1 par la longueur d'onde λ2 à la longueur d'onde λ3 et une différence de chemin optique générée dans la hauteur de chaque échelon dans une section de réseau (17c, 17d) qui est agencée dans chacune des première (17a) et seconde (17b) surfaces diffractives et a une section transversale en forme d'échelon, est un multiple entier de λ1.

3. Élément optique diffractif (17) selon la revendication 1, dans lequel chacun du faisceau de lumière (21a) de la longueur d'onde λ1, du faisceau de lumière (21b) de la longueur d'onde λ2 et du faisceau de lumière (21c) de la longueur d'onde λ3 entre dans l'élément optique diffractif (17) comme un faisceau parallèle.

4. Élément optique diffractif (17) selon la revendication 1, dans lequel le faisceau de lumière (21b) de la deuxième longueur d'onde λ2 est diffracté sur la première surface optique diffractive (17a) pour transformer un faisceau parallèle en un faisceau divergent, et le faisceau de lumière (21c) de la troisième longueur d'onde λ3 est diffracté sur la seconde surface optique diffractive (17b) pour transformer un faisceau parallèle en un faisceau divergent.

5. Élément optique diffractif (17) selon la revendication 1, qui est fait d'une résine optique.

6. Élément optique diffractif (17) selon la revendication 5, dans lequel la résine optique est une résine pouvant durcir aux ultraviolets.

7. Appareil de lecture optique comprenant :
l'élément optique diffractif (17) de la revendication 1 ; et
une lentille d'objectif (18) qui concentre le faisceau de lumière (21a) de la première longueur d'onde λ1, le faisceau de lumière (21b) de la deuxième longueur d'onde λ2 et le faisceau de lumière (21c) de la troisième longueur d'onde λ3 respectivement sur un premier support d'enregistrement (19a), un deuxième support d'enregistrement (19b) et un troisième support d'enregistrement (19c).

8. Appareil de lecture optique selon la revendication 7, dans lequel les faisceaux de lumière (21a, 21b, 21c) des longueurs d'onde λ1, λ2 et λ3 ont des longueurs d'onde de plus en plus longues dans l'ordre de la longueur d'onde λ1 par la longueur d'onde λ2 à la longueur d'onde λ3 et une différence de chemin optique générée dans la hauteur de chaque échelon dans une section de réseau (17c, 17d) qui est agencée dans chacune des première (17a) et seconde (17b) surfaces diffractives et a une section transversale en forme d'échelon, est un multiple entier de 1.

9. Appareil de lecture optique selon la revendication 7, dans lequel chacun du faisceau de lumière (21a, 21b, 21c) de la longueur d'onde λ1, du faisceau de lumière de la longueur d'onde λ2 et du faisceau de lumière de la longueur d'onde λ3 entre dans l'élément optique diffractif (17) comme un faisceau parallèle.

10. Appareil de lecture optique selon la revendication 7, dans lequel le faisceau de lumière (21b) de la deuxième longueur d'onde λ2 est diffracté sur la première surface optique diffractive (17a) pour transformer un faisceau parallèle en un faisceau divergent, et le faisceau de lumière (21c) de la troisième longueur d'onde λ3 est diffracté sur la seconde surface optique diffractive (17b) pour transformer un faisceau parallèle en un faisceau divergent.

11. Appareil de lecture optique selon la revendication 7, dans lequel l'élément optique diffractif (17) et la lentille d'objectif (18) sont maintenus d'une telle façon qu'une relation de position relative entre ceux-ci reste fixe.

12. Appareil de lecture optique selon la revendication 7, dans lequel l'élément optique diffractif (17) est fait d'une résine optique.

13. Appareil de lecture optique selon la revendication 12, dans lequel la résine optique est une résine pouvant durcir aux ultraviolets.

14. Élément optique diffractif selon l'une quelconque des revendications 1 à 6, dans lequel les formules suivantes sont satisfaites : $λ ⁢ 1 < λ ⁢ 2 < λ ⁢ 3$ $H ⁢ 1 = 2 ⋅ λ ⁢ 1 / \left(n⁢1-1\right)$ $H ⁢ 2 = 5 ⋅ λ ⁢ 1 / \left(n⁢1-1\right)$
où H1 représente une hauteur d'un échelon de la première surface diffractive, H2 représente une hauteur d'un échelon de la seconde surface diffractive, n1 représente un indice de réfraction de l'élément optique diffractif à la longueur d'onde λ1.

15. Élément optique diffractif selon l'une quelconque des revendications 1 à 6 et 14, dans lequel le faisceau de lumière de la première longueur d'onde λ1 est utilisé pour un premier support d'enregistrement, le faisceau de lumière de la deuxième longueur d'onde λ2 est utilisé pour un deuxième support d'enregistrement et le faisceau de lumière pour la troisième longueur d'onde est utilisé pour un troisième support d'enregistrement,
dans lequel la première surface diffractive est formée seulement dans une ouverture numérique pour le deuxième support d'enregistrement, et
dans lequel la formule suivante est satisfaite : $λ ⁢ 1 < λ ⁢ 2 < λ ⁢ 3.$

16. Élément optique diffractif selon la revendication 15, dans lequel le faisceau de lumière de la deuxième longueur d'onde λ2 qui passe par une région à l'extérieur de la première surface diffractive ne forme aucune image sur une surface d'enregistrement d'informations du deuxième support d'enregistrement et devient une composante rayonnante.

17. Élément optique diffractif selon l'une quelconque des revendications 1 à 6 et 14 à 16, dans lequel le faisceau de lumière de la première longueur d'onde λ1 est utilisé pour un premier support d'enregistrement, le faisceau de lumière de la deuxième longueur d'onde λ2 est utilisé pour un deuxième support d'enregistrement et le faisceau de lumière pour la troisième longueur d'onde λ3 est utilisé pour un troisième support d'enregistrement, et
dans lequel presque toute la quantité de lumière du faisceau de lumière de la troisième longueur d'onde λ3 qui entre dans la seconde surface diffractive est divisée en une lumière diffractive primaire positive et en une lumière diffractive primaire négative.

18. Élément optique diffractif selon la revendication 17, dans lequel la lumière diffractive primaire négative n'est pas utilisée enregistrer ou reproduire une quelconque information sur ou en provenance du troisième support d'enregistrement.

19. Élément optique diffractif selon la revendication 17 ou 18, une distance entre un foyer de la lumière diffractive primaire positive et un foyer de la lumière diffractive primaire négative est plus grande qu'une distance de mise en oeuvre pour le troisième support d'enregistrement.

20. Appareil de lecture optique selon l'une quelconque des revendications 7 à 13, dans lequel les formules suivantes sont satisfaites : $λ ⁢ 1 < λ ⁢ 2 < λ ⁢ 3$ $H ⁢ 1 = 2 ⋅ λ ⁢ 1 / \left(n⁢1-1\right)$ $H ⁢ 2 = 5 ⋅ λ ⁢ 1 / \left(n⁢1-1\right)$
où H1 représente une hauteur d'un échelon de la première surface diffractive, H2 représente une hauteur d'un échelon de la seconde surface diffractive, n1 représente un indice de réfraction de l'élément optique diffractif à la longueur d'onde λ1.

21. Appareil de lecture optique selon l'une quelconque des revendications 7 à 13 et 20, dans lequel la première surface diffractive est formée seulement dans une ouverture numérique pour le deuxième support d'enregistrement, et
dans lequel la formule suivante est satisfaite : $λ ⁢ 1 < λ ⁢ 2 < λ ⁢ 3.$

22. Appareil de lecture optique selon la revendication 21, dans lequel le faisceau de lumière de la deuxième longueur d'onde λ2 qui passe par une région à l'extérieur de la première surface diffractive ne forme aucune image sur une surface d'enregistrement d'informations du deuxième support d'enregistrement et devient une composante rayonnante.

23. Appareil de lecture optique selon l'une quelconque des revendications 7 à 13 et 20 à 22, dans lequel presque toute la quantité de lumière du faisceau de lumière de la troisième longueur d'onde λ3 qui entre dans la seconde surface diffractive est divisée en une lumière diffractive primaire positive et en une lumière diffractive primaire négative.

24. Appareil de lecture optique selon la revendication 23, dans lequel la lumière diffractive primaire négative n'est pas utilisée pour l'enregistrement ou la reproduction de quelconques informations sur ou en provenance du troisième support d'enregistrement.

25. Appareil de lecture optique selon la revendication 23 ou 24, une distance entre un foyer de la lumière diffractive primaire positive et un foyer de la lumière diffractive primaire négative est plus grande qu'une distance de mise en oeuvre pour le troisième support d'enregistrement.

26. Unité de lentille d'objectif comprenant :
un élément optique diffractif ; et
une lentille d'objectif qui concentre un faisceau de lumière d'une première longueur d'onde λ1, un faisceau de lumière d'une deuxième longueur d'onde λ2 et un faisceau de lumière d'une troisième longueur d'onde λ3 respectivement sur un premier support d'enregistrement, un deuxième support d'enregistrement et un troisième support d'enregistrement, les longueurs d'onde λ1, λ2 et λ3 étant différentes les unes des autres, dans laquelle
l'élément optique diffractif comprend :
une première surface diffractive (17a) qui ne diffracte ni le faisceau de lumière (21a) de la première longueur d'onde λ1, ni le faisceau de lumière (21c) de la troisième longueur d'onde λ3, mais diffracte le faisceau de lumière (21b) de la deuxième longueur d'onde λ2 ; et
une seconde surface diffractive (17b) qui ne diffracte ni le faisceau de lumière (21a) de la première longueur d'onde λ1, ni le faisceau de lumière (21b) de la deuxième longueur d'onde λ2, mais diffracte le faisceau de lumière (21c) de la troisième longueur d'onde λ3, et
l'élément optique diffractif (17) est un seul élément dans lequel la première surface diffractive (17a) est formée de l'un du côté d'entrée de faisceau de lumière ou du côté de sortie de faisceau de lumière de cet élément, et la seconde surface diffractive (17b) est formée de l'autre côté, et
dans laquelle la première surface diffractive est en forme de cercles concentriques ayant une section en forme d'échelon et comprend un motif répété de quatre échelons,
dans laquelle une pluralité de motifs répétés de quatre échelons font face dans la même direction à l'axe optique de l'élément optique diffractif,
dans laquelle la seconde surface diffractive est en forme de cercles concentriques ayant une section transversale en forme d'échelon et comprend un motif répété d'un seul échelon, et
le seul échelon est dressé à partir d'une surface de fond de l'élément optique diffractif et le seul échelon suivant va vers le bas à partir d'une surface supérieure de l'élément optique diffractif.

27. Unité de lentille d'objectif selon la revendication 26, dans laquelle les faisceaux de lumière de la longueur d'onde λ1, λ2 et λ3 ont une longueur d'onde de plus en plus longue dans l'ordre de la longueur d'onde λ1 par la longueur d'onde λ2 à la longueur d'onde λ3 et une différence de chemin optique générée dans la hauteur de chaque échelon dans une section de réseau qui est agencée dans chacune des première et seconde surfaces diffractives et a une section transversale en forme d'échelon est un multiple entier de λ1.

28. Unité de lentille d'objectif selon la revendication 26 ou 27, dans laquelle chacun du faisceau de lumière de la longueur d'onde λ1, du faisceau de lumière de la longueur d'onde λ2 et du faisceau de lumière de la longueur d'onde λ3 entre dans l'élément optique diffractif comme un faisceau parallèle.

29. Unité de lentille d'objectif selon l'une quelconque des revendications 26 à 28, dans laquelle le faisceau de lumière de la deuxième longueur d'onde λ2 est diffracté sur la première surface diffractive pour transformer un faisceau parallèle en un faisceau divergent, et le faisceau de lumière de la troisième longueur d'onde λ3 est diffracté sur la seconde surface diffractive pour transformer un faisceau parallèle en un faisceau divergent.

30. Unité de lentille d'objectif selon l'une quelconque des revendications 26 à 29, dans laquelle l'élément optique diffractif et la lentille d'objectif sont maintenus d'une telle façon que la relation de position relative entre ceux-ci reste fixe.

31. Unité de lentille d'objectif selon l'une quelconque des revendications 26 à 30, dans laquelle l'élément optique diffractif est fait de plastique, et la lentille d'objectif est faite de plastique.

32. Unité de lentille d'objectif selon l'une quelconque des revendications 26 à 30, dans laquelle l'élément optique diffractif est fait de plastique et la lentille d'objectif est faite de verre.

33. Unité de lentille d'objectif selon l'une quelconque des revendications 26 à 32, dans laquelle les formules suivantes sont satisfaites : $λ ⁢ 1 < λ ⁢ 2 < λ ⁢ 3$ $H ⁢ 1 = 2 ⋅ λ ⁢ 1 / \left(n⁢1-1\right)$ $H ⁢ 2 = 5 ⋅ λ ⁢ 1 / \left(n⁢1-1\right)$
où H1 représente une hauteur d'un échelon de la première surface diffractive, H2 représente une hauteur d'un échelon de la seconde surface diffractive, n1 représente un indice de réfraction de l'élément optique diffractif à la longueur d'onde λ1.

34. Unité de lentille d'objectif selon l'une quelconque des revendications 26 à 33, dans laquelle la première surface diffractive est formée seulement dans une ouverture numérique pour le deuxième support d'enregistrement, et
dans laquelle la formule suivante est satisfaite : $λ ⁢ 1 < λ ⁢ 2 < λ ⁢ 3.$

35. Unité de lentille d'objectif selon l'une quelconque des revendications 26 à 34, dans laquelle le faisceau de lumière de la deuxième longueur d'onde λ2 qui passe par une région à l'extérieur de la première surface diffractive ne forme aucune image sur une surface d'enregistrement d'informations du deuxième support d'enregistrement et devient une composante rayonnante.

36. Unité de lentille d'objectif selon l'une quelconque des revendications 26 à 35, dans laquelle presque toute la quantité de lumière du faisceau de lumière de la troisième longueur d'onde λ3 qui entre dans la seconde surface diffractive est divisée en une lumière diffractive primaire positive et en une lumière diffractive primaire négative.

37. Unité de lentille d'objectif selon la revendication 36, dans laquelle la lumière diffractive primaire négative n'est pas utilisée pour l'enregistrement ou la reproduction de quelconques informations sur ou en provenance du troisième support d'enregistrement.

38. Unité de lentille d'objectif selon la revendication 36, une distance entre un foyer de la lumière diffractive primaire positive et un foyer de la lumière diffractive primaire négative est plus grande qu'une distance de mise en oeuvre pour le troisième support d'enregistrement.

39. Élément optique diffractif (17) selon les revendications 1 à 6 et 14 à 19, dans lequel chacune des première (17a) et seconde (17b) des surfaces diffractives satisfait l'inégalité de condition suivante : $Λ / λ \geq 8$
dans laquelle
Λ représente l'intervalle minimal des première et seconde surfaces diffractives dans le cas où la largeur qui génère une différence de phase d'une longueur d'onde lorsque les fronts d'onde résultant d'échelons adjacents dans chacune des surfaces diffractives sont liés les uns aux autres est définie comme un intervalle, l'intervalle minimal étant défini comme la largeur de l'intervalle le plus petit dans la même surface diffractive, et
λ représente la longueur d'onde de la lumière diffractée.

40. Appareil de lecture optique selon la revendication 7 à 13 et 20 à 25, dans lequel chacune des première et seconde surfaces diffractives satisfait l'inégalité de condition suivante : $Λ / λ \geq 8$
dans laquelle
Λ représente l'intervalle minimal des première et seconde surfaces diffractives dans le cas où la largeur qui génère une différence de phase d'une longueur d'onde quand les fronts d'onde résultant d'échelons adjacents dans chacune des surfaces diffractives sont liés les uns aux autres est définie comme un intervalle, l'intervalle minimal défini comme la largeur de l'intervalle le plus petit dans la même surface diffractive, et
λ représente la longueur d'onde de la lumière diffractée.

41. Unité de lentille d'objectif selon l'une quelconque des revendications 26 à 38, dans laquelle chacune des première et seconde surfaces diffractives satisfait l'inégalité de condition suivante: $Λ / λ \geq 8$
dans laquelle
Λ représente l'intervalle minimal des première et seconde surfaces diffractives dans le cas où la largeur qui génère une différence de phase d'une longueur d'onde quand les fronts d'onde résultant d'échelons adjacents dans chacune des surfaces diffractives sont liés les uns aux autres est définie comme un intervalle, l'intervalle minimal étant défini comme la largeur de l'intervalle le plus petit dans la même surface diffractive, et
λ représente la longueur d'onde de la lumière diffractée.
